Europäisches Patentamt

European Patent Office

Office européen des brevets

(11) Veröffentlichungsnummer: **0 471 881 A1**

## (12) EUROPÄISCHE PATENTANMELDUNG

(21) Anmeldenummer: 90116200.8

(22) Anmeldetag: **24.08.90**

(51) Int. Cl.5: **G01C 19/72**

(43) Veröffentlichungstag der Anmeldung:
**26.02.92 Patentblatt 92/09**

(84) Benannte Vertragsstaaten:
**AT BE CH DE ES FR GB IT LI LU NL SE**

(71) Anmelder: SENSOPTIC Optische
Sensortechnik AG
Baarerstrasse 59
CH-6300 Zug(CH)

(72) Erfinder: Furrer, Frank J., Dr.
Ringstrasse 15

CH-8903 Birmensdorf ZH(CH)
Erfinder: van Heereveld, Alexander, Dr.
Dennenweg 4
NL-9674 Winschoten(NL)
Erfinder: Vogelzang, Egbert
Mercuriusstraat 13
NL-9742 CW Groningen(NL)

(74) Vertreter: Steudtner, Werner, Dipl.-Ing.
Lindenhof 5
CH-8604 Hegnau bei Zürich(CH)

(54) Einrichtung zum Messen einer physikalischen Grösse.

(57) Einrichtung zum Messen einer physikalischen Grösse, deren Aenderungen direkt oder über Messgrössenwandler indirekt Veränderungen der Lichtweglängen durch als Messorgane dienende Lichtleiter bewirken, mit einer Lichtquelle, Mitteln zur Aufteilung einer von derselben gelieferten Lichtwelle in zwei Lichtwellen, zur Führung von mindestens einer der beiden Lichtwellen durch einen als Messorgan dienenden Lichtleiter, zur Verschiebung der Phase von mindestens einer der beiden Lichtwellen und zur Wiedervereinigung der beiden Lichtwellen nach Durchlaufen der als Messorgane dienenden Lichtleiter und der Phasenverschiebungsmittel, einem Detektor zur Bestimmung der Intensität der aus der Wiedervereinigung hervorgehenden Gesamtlichtwelle, Auswerwertungsmitteln (11-17) zur Auswertung des Detektorausgangssignals und von denselben geregelten Steuermitteln (18,20-31) zur Steuerung der Phasenverschiebungsmittel sowie von Ausgabemitteln (19) zur Ausgabe des Messwertes der physikalischen Grösse, wobei die Auswertungsmittel (11-17) Mittel (12-15) zur Bildung von mindestens zwei in unterschiedlicher Weise von den Phasenverschiebungen abhängigen Regel-grössen und Mittel (16,17) zur rechnerischen Verarbeitung der Regelgrössen sowie zur Gewinnung eines Regelsignals zur Regelung der Steuermittel (18,20-31) aus dem Verarbeitungsergebnis umfassen.

Fig.2

EP 0 471 881 A1

Die Erfindung bezieht sich auf eine Einrichtung zum Messen einer physikalischen Grösse, deren Aenderungen direkt oder über Messgrössenwandler indirekt Veränderungen der Lichtweglängen durch als Messorgane dienende Lichtleiter bewirken, mit einer interferenzfähiges Licht abgebenden Lichtquelle, Mitteln zur Aufteilung einer von der Lichtquelle gelieferten primären strahlenförmigen Lichtwelle in mindestens zwei strahlenförmige Lichtwellen, zur Führung von mindestens einer der beiden Lichtwellen durch einen als Messorgan dienenden Lichtleiter, zur Verschiebung der Phase von mindestens einer der beiden Lichtwellen und zur Wiedervereinigung der beiden Lichtwellen nach Durchlaufen des bzw. der als Messorgane dienenden Lichtleiter und der Phasenverschiebungsmittel, einem Detektor zur Bestimmung der Intensität der aus der Wiedervereinigung der beiden Lichtwellen hervorgehenden, der Ueberlagerung der miteinander interferierenden beiden Lichtwellen entsprechenden Gesamtlichtwelle, Auswertungsmitteln zur Auswertung des Detektorausgangssignals und von den Auswertungsmitteln geregelten Steuermitteln zur Steuerung der Phasenverschiebungsmittel auf von der zu messenden physikalischen Grösse abhängige Phasenverschiebungen von mindestens der zur Phasenverschiebung vorgesehenen einen der beiden Lichtwellen sowie zur Steuerung von Ausgabemitteln zur Ausgabe des dem Ausgangssignal der Steuermittel bzw. den dadurch von den Phasenverschiebungsmitteln bewirkten Phasenverschiebungen entsprechenden Messwertes der zu messenden physikalischen Grösse.

Einrichtungen dieser Art sind schon seit anderthalb Jahrzehnten bekannt, z.B. aus Veröffentlichungen von V. Vali und R.W. Shorthill in der Fachzeitschrift Appl. Opt. 15, 1976, S. 1099, von R.F. Cahill und E. Udd in Appl. Opt. 19, 1980, S. 3054-3056, und ibid. 4, 1979, S. 93-95, aus dem Fachbuch "Fiber optic rotation sensors and related technologies" von S. Ezekiel und H.J. Architty, Springer-Verlag 1982, insb. S. 297-301, aus verschiedenen Vorträgen auf internationalen Fachkonferenzen wie der "International Conference of Fiberoptic Rotation Sensors" vom Nov. 1981 im M.I.T. (Proc. Springer-Verlag) und der "1st European conference on integrated optics" vom Sept. 1981 (IEE) sowie aus einer Reihe anderer, etwa gleichmässig auf das letzte Jahrzehnt verteilter Veröffentlichungen in Fachzeitschriften, Fachbüchern und Patentschriften, deren Inhalt im wesentlichen in den Veröffentlichungen "Fiber optic gyroscope technology" von A.D. Kersey, A. Dandrige und W.K. Burns und "Fiber inferometric sensors: Technology and applications" von F. Buchholtz und A.M. Yurek in der Fachzeitschrift Optic News vom Nov. 1989, S. 12-19 bzw. 20-27, sowie den US-Patentschriften 4,637,722 , 4,671,658 , 4,687,330 , 4,707,136 , 4,717,256 , 4,728,192 und 4,786,172 zusammengefasst ist.

Trotz dieser sehr umfangreichen theoretischen Literatur und der relativ grossen Zeitspanne von anderthalb Jahrzehnten seit dem ersten Erscheinen theoretischer Veröffentlichungen über Einrichtungen der eingangs genannten Art sowie trotz eines beträchtlichen Forschungsaufwandes in fast allen einschlägigen, auf dem Gebiet der Lichtleitertechnik arbeitenden Forschungsinstituten auf der ganzen Welt ist es jedoch bis heute noch nicht gelungen, über das Stadium von zu Testzwecken im Labor entwickelten Versuchsmustern von Einrichtungen der eingangs genannten Art hinauszukommen und eine fehlerfrei arbeitende und damit kommerziell verwertbare Einrichtung der eingangs genannten Art zu schaffen, was daran ersichtlich ist, dass Einrichtungen der eingangs genannten Art trotz wesentlicher messtechnischer Vorteile einer solchen fehlerfrei arbeitenden Einrichtung gegenüber dem gleichen Zweck dienenden, auf anderen physikalischen Grundprinzipien beruhenden bekannten Messeinrichtungen auf dem Markt nicht erhältlich sind.

Die eigentliche Ursache für diese offensichtlichen Schwierigkeiten bei der Schaffung einer fehlerfrei arbeitenden Einrichtung der eingangs genannten Art ist eine Materialeigenschaft aller festen Materialien, nämlich die Temperaturausdehnung: Will man nämlich Veränderungen von Lichtweglängen mit Hilfe der dadurch verursachten Phasenverschiebungen einer Lichtwelle messen, dann handelt es sich in der Regel jedenfalls an der unteren Messbereichsgrenze um Phasenverschiebungen, die nur einen ganz geringen, meist wesentlich unter 1% liegenden Bruchteil von 360° betragen, und dementsprechend meist um Lichtweglängen von wesentlich weniger als 1% der Wellenlänge des Lichtes der Lichtwelle. Da nun die heute zur Verfügung stehenden Lichtleiter im Infrarot-Bereich, also bei Wellenlängen des Lichtes in der Grössenordnung von 1 $\mu$m , zu betreiben sind, bedeutet das, dass die zu messenden Veränderungen der Lichtweglängen wesentlich unter 0,01 $\mu$m bzw. wesentlich unter $10^{-5}$ mm liegen, und wenn diese zu messenden Veränderungen der Lichtweglängen nun an der unteren Messbereichsgrenze noch mit einer Genauigkeit von 1% gemessen werden sollen, dann müssen Veränderungen der Lichtweglängen, die durch andere Einflüsse als die zu messende Grösse verursacht werden und daher zu Messfehlern führen würden, an der unteren Messbereichsgrenze wesentlich unter $10^{-7}$ mm liegen. Da nun bei Messeinrichtungen der eingangs genannten Art wie bei allen Interferometern im Prinzip die Differenz der Lichtweglängen gemessen wird, die die aus der Aufteilung der primären Lichtwelle hervorgehenden beiden Lichtwellen auf ihrem Wege vom Aufteilungsort zum Ort ihrer Wiedervereinigung durchlaufen,dürfen sich die beiden Lichtweglängen in der Nullstellung der Messeinrichtung, wenn entweder die zu messende Grösse selbst oder deren Abweichung von einem für die Nullstellung der Messeinrichtung geltenden festen Bezugswert derselben gleich Null ist, nur um so viel unterscheiden, dass das Produkt aus der in der Nullstellung der Messeinrichtung verbleibenden Differenz der beiden Lichtweglängen und den obengenannten anderen Einflussfaktoren als der zu messenden Grösse höchstens gleich 1% der sich an der unteren Messbereichsgrenze der zu messenden Grösse ergebenden Veränderungen der Differenz der beiden Lichtweglängen wird. Soll nun diese durch die zu messende Grösse verursachte Veränderung $\Delta l_M$ der Differenz der Lichtweglängen an der unteren Messbereichsgrenze wie oben erwähnt wesentlich unter $10^{-5}$ mm und der durch andere Einflüsse als die zu messende Grösse verursachte Fehler $\Delta F$ an der unteren Messbereichsgrenze unter 1% liegen, dann muss also das Produkt $\Delta l_o \cdot \alpha \cdot \Delta T$ aus der Differenz $\Delta l_o$ der beiden Lichtweglängen in der Nullstellung der Messeinrichtung und den beiden Haupteinflussfaktoren, nämlich dem in der Grössenordnung von $10^{-4}/°C$ liegenden Temperaturausdehnungskoeffizienten $\alpha$ des Materials von Lichtleitern und dem Temperaturbereich $\Delta T$ von z.B. 40°C zwischen der z.B. bei +5°C liegenden minimalen und der z.B. bei +45°C liegenden maximalen Betriebstemperatur der Messeinrichtung, kleiner als $\Delta l_M \cdot \Delta F$ bzw. wesentlich kleiner als die oben schon erwähnten $10^{-7}$ mm sein, womit sich für die Differenz $\Delta l_o$ der beiden Lichtweglängen in der Nullstellung der Messeinrichtung die Forderung $\Delta l_o \cdot \alpha \cdot \Delta T < \Delta l_M \cdot \Delta F$ bzw.

$$\Delta l_o < \frac{\Delta l_M \cdot \Delta F}{\alpha \cdot \Delta T}$$

und mit den oben beispielsweise angegebenen Werten $\Delta l_M \ll 10^{-5}$mm, $\Delta F < 1/100$, $\Delta T = 40°C$ und $\alpha = 10^{-4}/°C$ die Forderung $\Delta l_o \ll 0{,}025$ $\mu$m ergibt. Anders ausgedrückt müssen also bei dem für Messeinrichtungen der eingangs genannten Art mit veränderlichen Umgebungstemperaturen als repräsentativ anzusehenden obigen Beispiel die Lichtweglängen der aus der Aufteilung der primären Lichtwelle hervorgehenden beiden Lichtwellen vom Aufteilungs- zum Wiedervereinigungsort in der Nullstellung der Messeinrichtung bis auf wesentlich weniger als $2{,}5 \cdot 10^{-5}$mm genau übereinstimmen, und diese Forderung nach einer praktisch genauen Uebereinstimmung der Lichtweglängen der beiden Lichtwege vom Aufteilungs- zum Wiedervereinigungsort lässt sich nach einhelliger Auffassung der gesamten Fachwelt nur dadurch erfüllen, dass die beiden Lichtwege vom Aufteilungs- zum Wiedervereinigungsort in entgegengesetzter Wegrichtung durch ein und denselben Lichtleiter verlaufen und der Aufteilungsort der beiden Lichtwellen gleichzeitig auch deren Wiedervereinigungsort ist.

Solche Anordnungen mit von den beiden aus der Aufteilung der primären Lichtwelle hervorgehenden Lichtwellen in entgegengesetzter Richtung durchlaufenem gleichem Lichtweg und gleichem Aufteilungs- und Wiedervereinigungsort der beiden Lichtwellen werden in der Fachterminologie als "reziproke Anordnungen" bezeichnet, und die sich bei solchen Anordnungen in der Nullstellung der Messeinrichtung ergebende, als "Reziprozität" bezeichnete vollständige Uebereinstimmung der Lichtwege und Lichtweglängen der beiden Lichtwellen vom Aufteilungs- zum Wiedervereinigungsort wird in der Fachwelt, wie z.B. die oben schon erwähnte Veröffentlichung in der Fachzeitschrift "Optics News" vom Nov. 1989, S. 12-19, insb. S. 13, linke Spalte, 7. bis 2. Zeile von unten, ausweist, als unabdingbare Grundanforderung an Messeinrichtungen der eingangs genannten Art angesehen.

Nun ist zu der Forderung nach Reziprozität zunächst einmal grundsätzlich zu sagen, dass die bei den bekannten Messeinrichtungen der eingangs genannten Art zur Erfüllung dieser Forderung vorgenommene Führung der aus der Aufteilung der primären Lichtwelle hervorgehenden beiden Lichtwellen in entgegengesetzter Richtung durch ein und denselben Lichtleiter keineswegs gleichbedeutend mit einer Führung der beiden Lichtwellen in entgegengesetzter Wegrichtung auf ein und demselben Lichtweg ist, sondern die beiden Lichtwellen laufen vielmehr in aller Regel auf unterschiedlichen Lichtwegen durch den zur Führung der beiden Lichtwellen vorgesehenen Lichtleiter. Eine vollständige Uebereinstimmung der Lichtwege der beiden in entgegengesetzter Richtung durch den Lichtleiter laufenden Lichtwellen liesse sich nämlich nur dann erreichen, wenn die Lichtwellen in dem Lichtleiter in gleicher Weise wie Mikrowellen in den aus der Mikrowellentechnik bekannten Hohlleitern genau in Richtung der Leiterachse laufen und jeder Krümmung der Leiterachse folgen würden, ohne an der äusseren Begrenzung des Lichtleiters reflektiert zu werden, aber dazu müsste erstens der Durchmesser des Lichtleiters wie bei einem solchen Hohlleiter etwa im Bereich zwischen dem Zwei- und Dreifachen der Wellenlänge des Lichtes bzw. der im Leiter laufenden elektromagnetischen Welle liegen, während derzeit mit den sogenannten "Monomodefasern" nur Durchmesser von im Minimum etwa dem Achtfachen der Lichtwellenlänge erreicht werden, und ausserdem müsste insbesondere ebenso wie bei Hohlleitern auch eine relativ grosse Durchmesserkonstanz und eine vernachlässigbar geringe Oberflächenrauhigkeit an der äusseren Begrenzung des Lichtleiters gewährleistet sein, was bei den heute zur Verfügung stehenden, nur eine Durchmesserkonstanz von ca. ±10% aufweisenden Monomodefasern nicht oder zumindest nicht in genügendem Masse der Fall ist. Aus diesen Gründen

EP 0 471 881 A1

bilden sich besonders in Bereichen von nicht vernachlässigbaren Krümmungen des Lichtleiters und von wesentlichen Krümmungsveränderungen desselben von diesen Krümmungsbereichen ausgehende, weit über die eigentlichen Krümmungsbereiche hinausreichende Störzonen aus, in denen von einer genauen Uebereinstimmung der Ausbreitungsrichtung der in dem Lichtleiter laufenden Lichtwelle mit der Richtung der Leiterachse nicht mehr die Rede sein kann sondern eher von einer geradlinigen Ausbreitung der Lichtwelle in dem gekrümmten Lichtleiter und sich damit zwangsläufig ergebenden Reflexionen der Lichtwelle an der äusseren Begrenzung des Lichtleiters gesprochen werden muss, und dass bei solchen Reflexionen bzw. reflexionsartigen Richtungsänderungen der Lichtwege im Bereich der äusseren Begrenzung des Lichtleiters die Reflexionsstellen der beiden in entgegengesetzter Richtung durch den Lichtleiter laufenden Lichtwellen genau zusammenfallen, ist derart unwahrscheinlich, dass die beiden Lichtwellen mit an Sicherheit grenzender Wahrscheinlichkeit auf unterschiedlichen Lichtwegen durch den Lichtleiter laufen. Die in dieser Hinsicht von vielen Fachleuten vertretene Auffassung, dass Lichtwellen in Monomodefasern genau in Richtung der Leiterachse laufen würden und demgemäss auch keine Reflexionen auftreten könnten und die Lichtwege von in entgegengesetzter Richtung durch Monomodefasern laufenden Lichtwellen daher vollständig übereinstimmen würden, ist jedenfalls schon durch grundlegende Erläuterungen zu Aufbau und Wirkungsweise von Monomodefasern z.B. in "Der grosse Brockhaus", 18. Aufl., F.A. Brockhaus, Wiesbaden, 1979, S. 139, insb. recht. Sp., Abb. "Lichtleiter" a) , widerlegt. Nun bedeutet allerdings fehlende Uebereinstimmung der Lichtwege von zwei in entgegengesetzter Richtung durch einen Lichtleiter laufenden Lichtwellen noch keineswegs unbedingt, dass sich auch die Lichtweglängen der beiden Lichtwellen in nicht mehr vernachlässigbarem Masse unterscheiden müssten, aber "Reziprozität" im eigentlichen Sinne des Wortes, also im Sinne einer vollständigen Uebereinstimmung der Lichtwege von zwei in entgegengesetzter Richtung durch einen Lichtleiter laufenden Lichtwellen, ist jedenfalls bei den heute zur Verfügung stehenden Lichtleitern noch nicht gegeben, und bei Messeinrichtungen der eingangs genannten Art mit als Messorgane dienenden Lichtleitern von sehr grosser Länge wie z.B. den zur Drehratenmessung verwendeten Interferometern mit zu einer Spule gewickelten Lichtleitern und Leiterlängen in der Grössenordnung von Kilometern können sich durchaus Differenzen zwischen den Lichtweglängen der beiden in entgegengesetzter Richtung durch den Lichtleiter laufenden Lichtwellen ergeben, die z.B. bei Temperaturänderungen im Messbereich nahe der unteren Messbereichsgrenze zu nicht unbeträchtlichen Messfehlern führen können. So ergibt sich beispielsweise theoretisch bei geradliniger Ausbreitung der Lichtwellen in dem Lichtleiter und Reflexion an der äusseren Begrenzung desselben bei einer Einführung der einen der beiden Lichtwellen in die Lichtleiterspule in Achsrichtung des Lichtleiters und Einführung der anderen der beiden Lichtwellen in von der Achsrichtung des Lichtleiters um $\Delta\beta$ abweichender Richtung mit einer Länge L eine Differenz der Lichtweglängen von $\Delta l \approx L \cdot \Delta\beta^2/12$ , die mit $\Delta\beta = 0{,}2'$ und L = 1 km zu einer Lichtweglängendifferenz von $\Delta l = 0{,}282\ \mu m$ und damit bei einer Temperaturänderung von 10°C und einem Temperaturausdehnungskoeffizienten des Lichtleitermaterials von $10^{-4}/°C$ sowie einer Lichtwellenlänge von 1 $\mu m$ zu einem Messfehler von ca. 0,1° und dementsprechend bei einer geforderten Messgenauigkeit an der unteren Messbereichsgrenze von 1% zu einer Beschränkung der unteren Messbereichsgrenze auf 10° führen würde. Um Messfehler dieser Art zu vermeiden, reicht somit die erwähnte, zur "Erfüllung der Reziprozitätsforderung" vorgenommene Führung der aus der Aufteilung der primären Lichtwelle hervorgehenden beiden Lichtwellen in entgegengesetzter Richtung durch ein und denselben Lichtleiter in einigen wichtigen Anwendungsbereichen von Messeinrichtungen der eingangs genannten Art nicht aus, und in solchen Fällen müssen natürlich besondere, im folgenden noch näher erläuterte Massnahmen getroffen werden, um auch bei Temperaturschwankungen und anderen möglichen Fehlerquellen noch bis zu relativ tiefen unteren Messbereichsgrenzen weitgehend fehlerfreie Messergebnisse erzielen zu können.

Nun kann man sich natürlich fragen, ob die Reziprozitätsforderung überhaupt unabdingbar ist, wenn sie mit den heute zur Verfügung stehenden Mitteln genau genommen noch nicht einmal erfüllbar ist und in wichtigen Anwendungsgebieten zusätzliche besondere Massnahmen zur Vermeidung von nicht mehr vernachlässigbaren Messfehlern getroffen werden müssen, aber wenn man einmal davon ausgeht, dass zumindest bei Messeinrichtungen der eingangs genannten Art mit als Messorgane dienenden Lichtleitern von sehr grosser Länge die zur wenigstens annähernden Erfüllung der Reziprozitätsforderung vorzunehmende Führung der aus der Aufteilung der primären Lichtwelle hervorgehenden beiden Lichtwellen in entgegengesetzter Richtung durch ein und denselben Lichtleiter eine zwingende Notwendigkeit ist, dann ist es bei Messeinrichtungen der eingangs genannten Art, bei denen ja die Phasenverschiebungsmittel voraussetzungsgemäss zwischen den Aufteilungsmitteln und den Mitteln zur Wiedervereinigung der beiden Lichtwellen liegen, wegen des sich aus der Reziprozitätsforderung ergebenden, oben schon erwähnten Zusammenfallens von Aufteilungs- und Wiedervereinigungsort der beiden Lichtwellen sowie der Führung der beiden Lichtwellen durch ein und denselben Lichtleiter scheinbar unvermeidlich, die Phasenverschiebungsmittel in den Lichtwegkreis einzuschalten, der vom Ort der Aufteilung und Wiedervereinigung der

4

beiden Lichtwellen über den zur Führung der beiden Lichtwellen in entgegengesetzter Richtung vorgesehenen Lichtleiter wieder zum Aufteilungs- und Wiedervereinigungsort zurück führt, und in diesem Falle laufen die beiden Lichtwellen nicht nur durch den zur Führung der beiden Lichtwellen in entgegengesetzter Richtung vorgesehenen Lichtleiter sondern auch durch die Phasenverschiebungsmittel in entgegengesetzter Richtung hindurch und würden daher bei zeitunabhängiger Phasenverschiebung der Phasenverschiebungsmittel beide in gleichem Masse und in gleichem Sinne in ihrer Phase verschoben, so dass sich keine von den Phasenverschiebungsmitteln bewirkte Phasendifferenz zwischen den beiden Lichtwellen ergeben würde und damit auch die zur Regelung von Messeinrichtungen der eingangs genannten Art erforderliche Kompensation der von der zu messenden Grösse bewirkten Phasendifferenz zwischen den beiden Lichtwellen durch eine entsprechende, von den Phasenverschiebungsmitteln bewirkte Phasendifferenz zwischen den Lichtwellen nicht möglich wäre, woraus praktisch die Funktionsunfähigkeit der Messeinrichtung resultieren würde. Daher muss die Phasenverschiebung der Phasenverschiebungsmittel bei gleichem Aufteilungs- und Wiedervereinigungsort der beiden Lichtwellen und in dem genannten Lichtwegkreis in Reihe zu dem zur Führung der beiden Lichtwellen vorgesehenen Lichtleiter geschalteten Phasenverschiebungsmitteln derart zeitabhängig sein, dass die Phasenverschiebung der zuerst durch die Phasenverschiebungsmittel und dann durch den Lichtleiter laufenden Lichtwelle beim Hindurchlaufen durch die Phasenverschiebungsmittel verschieden von der Phasenverschiebung der zuerst durch den Lichtleiter und dann durch die Phasenverschiebungsmittel laufenden Lichtwelle bei ihrem um die Laufzeit durch den Lichtleiter zeitverzögerten Hindurchlaufen durch die Phasenverschiebungsmittel ist und die sich damit ergebende, von den Phasenverschiebungsmitteln bewirkte Phasendifferenz zwischen den beiden Lichtwellen zur Kompensation der von der zu messenden Grösse bewirkten Phasendifferenz zwischen den beiden Lichtwellen die gleiche Zeitabhängigkeit wie diese von der zu messenden Grösse bewirkte Phasendifferenz hat. Ist nun die zu messende Grösse und damit auch die von dieser bewirkte Phasendifferenz zwischen den beiden Lichtwellen eine zeitunabhängige Konstante, dann müsste auch die von den Phasenverschiebungsmitteln bewirkte Phasendifferenz zwischen den beiden Lichtwellen zur Kompensation der von der zu messenden Grösse bewirkten Phasendifferenz eine gleichgrosse zeitunabhängige Konstante sein, d.h. die Phasenverschiebungsmittel müssten durch eine geeignete zeitabhängige Steuerung derart gesteuert werden, dass sich die Phasenverschiebung der zuerst durch die Phasenverschiebungsmittel laufenden Lichtwelle zu jedem Zeitpunkt um die von der zu messenden Grösse bewirkte konstante Phasendifferenz zwischen den beiden Lichtwellen von der Phasenverschiebung der zuerst durch den Lichtleiter laufenden, die Phasenverschiebungsmittel erst nach einer der Laufzeit durch den Lichtleiter entsprechenden Zeitverzögerung passierenden Lichtwelle unterscheidet. Eine solche Form der Steuerung lässt sich nun höchstens theoretisch oder richtiger gesagt höchstens scheinbar theoretisch und das auch nur mit einem einzigen Steuerungsverfahren, nämlich dem z.B. in den Veröffentlichungen "The serrodyne frequency translator" von R.C. Cumming, Proc.IRE 1957, 45, S. 175-186, und "Serrodyne modulator in a fibreoptic gyroscope" von C.J. Kay, IEE Proc. Oct. 1985, Vol. 132, Pt.J., No.5, S. 259-264, beschriebenen sogenannten "Serrodyne-Verfahren" erreichen, bei dem die von dem Phasenverschiebungsmitteln bewirkte Phasenverschiebung $\phi$ in Abhängigkeit von der Zeit t nach einer jeweils über eine Zeitdauer T linear mit der Zeit von 0 bis $2\pi$ ansteigenden und bei Erreichen von $2\pi$ zeitlos auf 0 zurückspringenden Sägezahnfunktion

$$\frac{\phi}{2\pi} = \frac{t}{T} - \left| \frac{t}{T} \right|_{\text{Integer}}$$

verläuft und sich mit einer Laufzeit $T_L$ der Lichtwellen durch den zur Führung der beiden Lichtwellen in entgegengesetzter Richtung vorgesehenen Lichtleiter und n = 1,2,3.... bei
einer Zeit- bzw. Periodendauer T der Sägezahnfunktion von

$$T < \frac{T_L}{n}$$

eine scheinbar zeitunabhängige konstante positive Phasendifferenz $+\Delta\phi$ oder eine gleichphasige negative Phasendifferenz $+\Delta\phi - 2\pi$, bei

$$T > \frac{T_L}{n}$$

eine scheinbar zeitunabhängige negative Phasendifferenz -Δφ oder eine gleichphasige positive Phasendifferenz -Δφ + 2π und bei

$$T = \frac{T_L}{n}$$

die Phasendifferenz Δφ = 0 zwischen den beiden Lichtwellen ergibt. Eine solche Steuerung in Form einer Sägezahnfunktion der von den Phasenverschiebungsmitteln bewirkten Phasenverschiebung φ mit zeitlosem Rücksprung um jeweils 2π auf φ = 0 an jedem Periodenende lässt sich jedoch schon aus energetischen Gründen wegen der Unmöglichkeit eines zeitlosen Abflusses oder Abtransportes der in den Phasenverschiebungsmitteln gespeicherten Steuerenergie praktisch nicht realisieren, sondern in der Praxis ist in jedem Fall mit einer von Null verschiedenen endlichen Rücksprungzeit zu rechnen, aber in der Fachwelt herrscht - wie z.B. aus dem "Abstract" am Anfang der oben schon genannten Veröffentlichung in den IEE Proc. vom Oct. 1985, S. 259 ff, ersichtlich ist - allgemein die Auffassung, dass sich die theoretisch mit dem Serrodyne-Verfahren erreichbare, in ihrer Höhe und ihrem Vorzeichen durch entsprechende Einstellung der Periodendauer T der Sägezahnfunktion einstellbare, scheinbar zeitunabhängige Phasendifferenz zwischen den beiden die Phasenverschiebungsmittel in einem Zeitabstand $T_L$ in entgegengesetzter Richtung passierenden Lichtwellen bei im Verhältnis zur Periodendauer T der Sägezahnfunktion genügend kleiner Rücksprungzeit mit guter Näherung auch praktisch realisieren liesse und die Annäherung an eine vollständige Zeitunabhängigkeit der Phasendifferenz zwischen den beiden Lichtwellen umso besser wäre, je geringer das Verhältnis der Rucksprungzeit zur Periodendauer T der Sägezahnfunktion ist, und in dieser Hinsicht liegt in der Fachwelt ein grundlegender Irrtum vor, weil sich bei dem Serrodyne-Verfahren nämlich, wie eine genauere Ueberlegung zeigt, schon theoretisch bei einer Rücksprungzeit Null keineswegs die bisher angenommene zeitunabhängige Phasendifferenz zwischen den beiden Lichtwellen sondern vielmehr im Moment des Rücksprunges eine Phasendifferenz zwischen den beiden Lichtwellen mit umgekehrtem Vorzeichen wie dem der zeitunabhängigen Phasendifferenz und nach unendlich gehendem Verhältnis ihrer Höhe zur Hohe der zeitunabhängigen Phasendifferenz ergibt und die Höhe dieser Phasendifferenz bei von Null verschiedener Rücksprungzeit mit steigender Rücksprungzeit immer geringer wird und eine Verringerung der Rücksprungzeit daher genau das Gegenteil des damit verfolgten Zieles bewirkt. Der Grund für diese sprunghafte Veränderung der Phasendifferenz zwischen den beiden Lichtwellen während der Rücksprungzeit und die grosse Höhe des Sprunges liegt darin, dass beim Serrodyne-Verfahren im Prinzip die Differenz zwischen einer periodischen Zeitfunktion und der gleichen, um die Laufzeit $T_L$ zeitverschobenen periodischen Zeitfunktion gebildet wird und die Differenz zwischen zwei gegeneinander zeit- bzw. phasenverschobenen gleichen periodischen Zeitfunktionen eine resultierende periodische Zeitfunktion mit gleicher Periodendauer wie der der beiden gegeneinander phasenverschobenen Zeitfunktionen ist, deren zeitlicher Mittelwert Null sein muss, weil sich bei Bildung der Differenz zwischen zwei gleichen,gegeneinander phasenverschobenen periodischen Zeitfunktionen die untereinander gleichen zeitlichen Mittelwerte der beiden periodischen Zeitfunktionen gegenseitig aufheben, und da der zeitliche Mittelwert der aus der Differenzbildung resultierenden periodischen Zeitfunktion gleich Null ist, muss das Integral dieser Zeitfunktion über die Zeitdauer, in der die Zeitfunktion während der Periodendauer positive Werte hat, betragsmässig gleich dem Integral der Zeitfunktion über die Zeitdauer sein, in der die Zeitfunktion während der Periodendauer negative Werte hat, d.h. wenn die aus der Differenzbildung resultierende periodische Zeitfunktion jeweils während der gesamten Periodendauer mit Ausnahme einer der Rücksprungzeit entsprechenden sehr kurzen Zeitdauer einen konstanten positiven Wert hat, dann muss sie während der sehr kurzen Zeitdauer negative Werte von wesentlich grösserer Höhe als der des konstanten positiven Wertes und einen von ihrem Verlauf während der sehr kurzen Zeitdauer abhängigen Maximalwert haben, dessen Höhe mindestens gleich dem Produkt aus dem konstanten positiven Wert und dem Verhältnis der Periodendauer zu der sehr kurzen Zeitdauer sein muss und bei schnellem Abfall der Zeitfunktion während der sehr kurzen Zeitdauer noch wesentlich grösser als diese Mindesthöhe ist, z.B. bei einem Abfall nach einer e-Funktion und einem Verhältnis der sehr kurzen Zeitdauer zur Periodendauer von 1/100 etwa gleich dem 4,6-fachen dieser Mindesthöhe bzw. etwa gleich dem 460-fachen des konstanten positiven Wertes. Wenn also bei bekannten Messeinrichtungen der eingangs genannten Art die zu messende Grösse beispielsweise eine Phasendifferenz zwischen den beiden Lichtwellen von 0,1° bewirkt und diese von der zu messenden Grösse bewirkte Phasendifferenz durch eine entsprechende, von den Phasenverschiebungsmitteln nach dem oben erläuterten Serrodyne-Verfahren bewirkte Phasendifferenz zwischen den beiden Lichtwellen von -0,1° kompensiert werden soll, dann entsteht bei einer Rücksprungzeit von 1/100 der Periodendauer der genannten Sägezahnfunktion jeweils bei Beginn der Rücksprungzeit ein Phasendifferenzfehler von ca. + 46°,der dann während der Rücksprungzeit nach einer e-Funktion mit einer Zeitkonstante von ca. 21,74% der Rücksprungzeit wieder bis auf ca. 0° abnimmt, und solche grosse Phasendifferenzfehler von bis zum 1000-fachen und mehr oder drastischer ausgedrückt bis zu 100000% und mehr der zu kompensierenden Phasendifferenz können selbst dann, wenn sie jeweils nur über eine ausserordentlich kurze Zeit auftreten, die Kompensation der von der zu messenden Grösse bewirkten Phasendifferenz zwischen den beiden Lichtwellen durch die von den Phasenverschiebungsmitteln bewirkte (mit dem jeweils kurzzeitigen sehr grossen Phasendifferenzfehler behaftete) Phasendifferenz zwischen den beiden Lichtwellen insbesondere bei relativ kleinen zu kompensierenden Phasendifferenzen, d.h. also im Messbereich nahe der unteren Messbereichsgrenze der zu messenden Grösse, nahezu vollständig verunmöglichen, weil der zeitliche Mittelwert der von den Phasenverschiebungsmitteln bewirkten Phasendifferenz zwischen den beiden Lichtwellen ja aus den oben erläuterten Gründen gleich Null ist und die kurzzeitigen sehr grossen Phasendifferenzfehler daher im Sinne einer Verminderung der von den Phasenverschiebungsmitteln ausserhalb der Rücksprungzeiten bewirkten Phasendifferenz wirken und dementsprechend besonders im Messbereich nahe der unteren Messbereichsgrenze der zu messenden Grösse eine meist wesentliche Verfälschung der Kompensation und damit des Messergebnisses zur Folge haben. Aus diesen Gründen ist es bisher mit nach dem Serrodyne-Verfahren arbeitenden Messeinrichtungen der eingangs genannten Art nicht gelungen, bei von der zu messenden Grösse bewirkten Phasendifferenzen zwischen den beiden Lichtwellen von weniger als ca. 10° im wesentlichen fehlerfreie Messergebnisse mit Messfehlern unter 1% zu erreichen, so dass die untere Messbereichsgrenze von nach dem Serrodyne-Verfahren arbeitenden Messeinrichtungen der eingangs genannten Art praktisch auf Messwerte der zu messenden Grösse beschränkt war, bei denen die von der zu messenden Grösse bewirkte Phasendifferenz mindestens 10° beträgt, während die Anforderungen an die untere Messbereichsgrenze von Messeinrichtungen der eingangs genannten Art sich in der Grössenordnung von durch die zu messende Grösse bewirkten Phasendifferenzen von ca. 0,1° bis herunter zu ca. 0,01° bewegten.

Praktisch bedeutet das, dass es bis heute noch nicht gelungen ist und ohne Anwendung besonderer zusätzlicher Massnahmen offensichtlich auch nicht gelingen kann, den gestellten Anforderungen entsprechende fehlerfrei arbeitende Messeinrichtungen der eingangs genannten Art zu schaffen, die nach dem Serrodyne-Verfahren arbeiten, und da das Serrodyne-Verfahren wie oben erläutert zumindest nach bisheriger Auffassung der Fachwelt das einzige geeignete Steuerungsverfahren für Messeinrichtungen der eingangs genannten Art ist, die der sogenannten Reziprozitätsforderung genügen, und die Reziprozitätsforderung nach bisheriger Auffassung der Fachwelt bei Messeinrichtungen der eingangs genannten Art unabdingbar ist, folgt aus dem ausgebliebenen Erfolg bei nach dem Serrodyne-Verfahren arbeitenden Messeinrichtungen der eingangs genannten Art zwangsläufig, dass bis zum heutigen Zeitpunkt - wie eingangs schon erwähnt - überhaupt noch keine den gestellten Anforderungen entsprechende fehlerfrei arbeitende Messeinrichtung der eingangs genannten Art geschaffen werden konnte.

Nun ist aber wie oben erläutert weder die Reziprozitätsforderung unabdingbar, noch ist das Serrodyne-Verfahren in seiner jetzigen Form das einzige geeignete Steuerungsverfahren für der Reziprozitätsforderung genügende Messeinrichtungen der eingangs genannten Art, sondern wie oben schon angedeutet und im folgenden noch näher erläutert lassen sich durch besondere zusätzliche (über die zur Erzielung eines fehlerfreien Serrodyne-Verfahrens ungeeignete Massnahme einer alleinigen Verkürzung der Rücksprungzeit hinausgehende) Massnahmen und Mittel sowohl Modifikationen des Steuerungsverfahrens schaffen, die im Rahmen der gestellten Anforderungen fehlerfrei arbeiten und sich für der Reziprozitätsforderung genügende Messeinrichtungen der eingangs genannten Art ebenso eignen wie für dieser Forderung nicht oder nur teilweise genügende Messeinrichtungen der eingangs genannten Art, als auch Ausbildungen von Messeinrichtungen der eingangs genannten Art erstellen, die der Reziprozitätsforderung nicht oder nur teilweise genügen bzw. bei denen die Unabdingbarkeit der Reziprozitätsforderung auf als Messorgane dienende Lichtleiter von ausserordentlich grosser Länge beschränkt ist.

Im Zusammenhang mit der derzeit noch viel zu hoch liegenden unteren Messbereichsgrenze bei den bekannten Messeinrichtungen der eingangs genannten Art sei schliesslich noch erwähnt, dass mit zu den sogenannten "open-loop-circuits" gehörenden Messeinrichtungen von ähnlicher Art wie der eingangs genannten durchaus schon untere Messbereichsgrenzen erreicht werden konnten, die wesentlich niedriger als die mit Messeinrichtungen der eingangs genannten Art bisher erreichten unteren Messbereichsgrenzen liegen, aber bei diesen Messeinrichtungen treten dann andere bisher ungelöste Probleme besonders im Hinblick auf zeitliche Verschiebungen des Nullpunktsabgleichs und dadurch verursachte Messwertfehler und hinsichtlich der bei "open-loop-circuits" vorgegebenen Absolutwertmessung und dadurch infolge unzureichender Stabilität der Lichtquelle und anderer im Lichtweg von derselben bis zum Detektor liegender Organe verursachter Messfehler auf, und diese bei "open-loop-circuits" auftretenden Messfehler sind dann in den meisten Fällen erheblich grösser als die Messfehler bei Messeinrichtungen der eingangs genannten Art.

Der Erfindung lag nun die Aufgabe zugrunde, eine Messeinrichtung der eingangs genannten Art zu schaffen, bei der durch besondere zusätzliche Massnahmen eine im obengenanten Sinne geeignete Modifikation des Steuerungsverfahrens erreicht und auf die Erfüllung der Reziprozitätsforderung zumindest teilweise verzichtet werden kann und dadurch dann eine wesentliche Herabsetzung der unteren Messbereichsgrenze erzielt werden kann.

Erfindungsgemäss wird das bei einer Einrichtung der eingangs genannten Art dadurch erreicht, dass die Auswertungsmittel Mittel zur Bildung von mindestens zwei in unterschiedlicher Weise von den durch die Phasenverschiebungsmittel bewirkten Phasenverschiebungen abhängigen Regelgrössen und Mittel zur analogen oder digitalen rechnerischen Verarbeitung der Regelgrössen sowie zur Gewinnung eines Regelsignals zur Regelung der Steuermittel aus dem Verarbeitungsergebnis umfassen. Im mit dem geringsten Aufwand verbundenen Fall werden dabei vorteilhaft nur zwei Regelgrössen gebildet und die Mittel zur Verarbeitung der Regelgrössen umfassen Mittel zum Vergleich der beiden Regelgrössen.

Hauptvorteil der vorliegenden Einrichtung ist, dass im Vergleich zu der erwähnten, viel zu hoch liegenden unteren Messbereichsgrenze bei den bekannten Messeinrichtungen der eingangs genannten Art bei der vorliegenden Einrichtung wesentlich niedrigere untere Messbereichsgrenzen erreichbar sind, die im Rahmen der zu stellenden Anforderungen liegen und mit den bei den genannten "open-loop-circuits" erreichbaren unteren Messbereichsgrenzen vergleichbar sind, ohne dass dafür die zuvor genannten entscheidenden Nachteile von "open-loop-circuits" im Hinblick auf zeitliche Stabilität, also durch Nullpunktsverschiebungen und Stabilitätsprobleme infolge der Absolutwertmessung verursachte Messfehler, in Kauf genommen werden müssten. Weitere wesentliche Vorteile der vorliegenden Einrichtung sind die erreichbare grosse Temperaturstabilität über den gesamten Betriebstemperaturbereich und die durch Ueberwindung von Vorurteilen und falschen Auffassungen der Fachwelt wie denen der vollständigen Unabdingbarkeit der Reziprozitätsforderung und der praktischen Realisierbarkeit eines nahezu idealen Serrodyne-Verfahrens durch genügende Verkürzung der Rücksprungzeit erreichte universelle Anwendbarkeit der vorliegenden Einrichtung zur Messung einer grossen Reihe verschiedenster physikalischer Grössen mit bisher noch nicht erreichten Messgenauigkeiten.

Bei einer bevorzugten Ausbildungsform der vorliegenden Einrichtung umfassen die Phasenverschiebungsmittel einen Phasenmodulator für Lichtwellen, bei dem die Phasenverschiebung bzw. die Phasendifferenz zwischen der Phase einer Lichtwelle beim Erreichen des Phasenmodulators und der Phase dieser Lichtwelle beim Verlassen des Phasenmodulators durch eine an einen Steuereingang des Phasenmodulators angelegte elektrische Spannung steuerbar ist, und von den Steuermitteln zur Steuerung der Phasenverschiebungsmittel wird an den Steuereingang des Phasenmodulators eine sich aus einer Ueberlagerung mehrerer elektrischer Spannungen ergebende zeitabhängige Steuerspannung angelegt, die als Komponenten eine einen konstanten Grundwert der Phasenverschiebung bewirkende erste elektrische Spannung und eine von der zu messenden physikalischen Grösse abhängige, im wesentlichen die mittlere Phasenverschiebung gegenüber dem Phasenverschiebungsgrundwert bestimmende zweite elektrische Spannung und eine eine Modulation der Phasenverschiebung um die mittlere Phasenverschiebung bewirkende dritte elektrische Spannung umfasst, und von den Steuermitteln zur Steuerung der Ausgabemittel wird eine im wesentlichen von den Bestimmungsgrössen der genannten zweiten elektrischen Spannung abhängige Steuergrösse an die Ausgabemittel abgegeben. Diese Ausbildungsform hat gegenüber Ausbildungsformen mit anderen Phasenverschiebungsmitteln und andere Steuergrössen zur Steuerung derselben abgebenden Steuermitteln die Vorteile eines optimalen Zusammenwirkens von optischem und elektrischem Teil der Messeinrichtung und eines relativ geringen Aufwandes für die Schaffung der Voraussetzungen für die Bildung mehrerer Regelgrössen durch die Auswertungsmittel.

Vorteilhaft kann die bevorzugte Ausbildungsform so weitergebildet sein, dass die Auswertungsmittel Filtermittel zum Ausfiltern von mindestens zwei verschiedenen Signalkomponenten mit Frequenzen vom n- und m-fachen der Modulationsfrequenz der dritten elektrischen Spannung, vorzugsweise mit n = 1 und m = 2, aus dem Detektorsignal und Demodulationsmittel zur Gewinnung der Amplituden der ausgefilterten Signalkomponenten umfassen und die Amplituden der ausfilterten Signalkomponenten die Regelgrössen bilden. Diese Weiterbildung hat den Vorteil, dass durch eine genügend geringe Modulationsfrequenz und genügend steile Filter zum Ausfiltern der Signalkomponenten Einflüsse auf die Regelgrössen aus höheren Frequenzbereichen wie z.B. fehlerhafte Einflüsse aus dem optischen Teil der Messeinrichtung beim Rücksprung der erwähnten Sägezahnfunktion weitgehend vermieden werden können.

Man kann solche fehlerhaften Einflüsse auf die Regelgrössen aber auch dadurch vermeiden, dass man entweder die Ursachen solcher fehlerhafter Einflüsse beseitigt oder fehlerhafte Einflüsse aus dem optischen Teil der Messeinrichtung schon unmittelbar am Uebergang vom optischen zum elektrischen Teil der Messeinrichtung am Detektorausgang abfängt, und in diesem Falle wird die obengenannte bevorzugte Ausbildungsform der vorliegenden Einrichtung vorzugsweise so weitergebildet, dass die Auswertungsmittel Speichermittel für die Regelgrössen und von der dritten elektrischen Spannung gesteuerte Schaltmittel zu einer mit der Modulation durch die dritte elektrische Spannung abwechselnden Beaufschlagung der Speichermittel über Spitzengleichrichtungsmittel mit dem Detektorausgangssignal umfassen und gleichartige Extremwerte des Detektorausgangssignals während der Modulationsphasen mit einerseits über und andererseits unter der mittleren Phasenverschiebung liegenden Phasenverschiebungen die Regelgrössen bilden. Der Vorteil einer solchen Weiterbildung ist in erster Linie die sich in Verbindung mit anderen besonderen Massnahmen ergebende Möglichkeit einer noch weitergehenden Verbesserung der Messgenauigkeit der Messeinrichtung, und ausserdem ergeben sich noch wesentliche Vereinfachungen im Aufbau des elektrischen Teiles der Messeinrichtung und ein entsprechend geringerer technischer Aufwand für diesen Messeinrichtungsteil, dem allerdings unter Umständen ein erhöhter technischer Aufwand für besondere Massnahmen im optischen Teil der Messeinrichtung gegenüberstehen kann.

Zweckmässig ist bei beiden vorgenannten Weiterbildungen der bevorzugten Ausbildungsform der vorliegenden Messeinrichtung die erste elektrische Spannung eine zeitunabhängige konstante Gleichspannung, die vorzugsweise nur zu Justierzwecken verstellbar ist, und die dritte elektrische Spannung kann vorteilhaft eine Sinusspannung mit zeitunabhängiger konstanter Amplitude und zeitunabhängiger konstanter Frequenz sein. Der Vorteil der Amplituden- und Frequenzkonstanz liegt in Vereinfachungen der Auswertung des Detektorausgangssignals und einem entsprechend geringeren technischen Aufwand für die Auswertungsmittel.

Die zweite elektrische Spannung kann bei den vorgenannten Weiterbildungen der bevorzugten Ausbildungsform der vorliegenden Messeinrichtung vorteilhaft eine Gleichspannung mit veränderlicher von der zu messenden physikalischen Grösse abhängiger Höhe sein, und die Steuermittel zur Steuerung der Phasenverschiebungsmittel und der Ausgabemittel umfassen dann zweckmässig Mittel zur Bildung einer die zweite elektrische Spannung bildenden Gleichspannung mit von Höhe und Vorzeichen des Regelsignals abhängiger Höhe sowie zur Bildung einer von der Höhe der die zweite elektrische Spannung bildenden Gleichspannung abhängigen Steuergrösse zur Steuerung der Ausgabemittel. In diesem Fall ist der technische Aufwand für den elektrischen Teil der Messeinrichtung vorteilhafterweise sehr gering, aber bei einer solchen Gleichspannungssteuerung des Phasenmodulators anstelle einer Steuerung nach dem Serrodyne-Verfahren muss dann aus den eingangs schon erläuterten Gründen im optischen Teil der Messeinrichtung ein mindestens teilweiser Verzicht auf Reziprozität in Kauf genommen werden, und in diesem Fall sind zur Gewährleistung der Tempeturstabilität der Messeinrichtung im Betriebstemperaturbereich bzw. zur Gewährleistung gleicher Lichtweglängen auf den nichtreziproken Teilen der vom Aufteilungs- zum Wiedervereinigungsort führenden Lichtwege im gesamten Betriebstemperaturbereich im folgenden noch näher erläuterte besondere Massnahmen zu treffen, die zu einem erhöhten technischen Aufwand für den optischen Teil der Messeinrichtung führen, so dass der technische Aufwand für die gesamte Messeinrichtung infolge der Verringerung im elektrischen und der Erhöhung im optischen Teil der Messeinrichtung etwa gleich bleibt oder sich nur unwesentlich verringert. Der Vorteil einer solchen Gleichspannungssteuerung des Phasenmodulators anstelle einer Steuerung nach dem Serrodyne-Verfahren liegt daher in erster Linie in der sich aus der Nichtanwendung des Serrodyne-Verfahrens ergebenden Beseitigung der Ursachen fehlerhafter Einflüsse auf die Regelgrössen und der daraus resultierenden Möglichkeit einer noch weitergehenden Verbesserung der Messgenauigkeit der Messeinrichtung.

Will man aber auf Reziprozität auch nicht teilweise verzichten und insbesondere keine besonderen zusätzlichen Massnahmen für einen solchen Verzicht in Kauf nehmen, dann verbleibt nur eine Steuerung des Phasenmodulators nach dem Serrodyne-Verfahren oder genauer gesagt nach dem durch die Phasenmodulation mit der dritten elektrischen Spannung modifizierten Serrodyne-Verfahren, und in diesem Falle kann die genannte bevorzugte Ausbildungsform der vorliegenden Messeinrichtung vorteilhaft so weitergebildet werden, dass die zweite elektrische Spannung eine Sägezahnspannung mit zeitunabhängiger konstanter Amplitude und einer veränderlichen, von der zu messenden physikalischen Grösse abhängigen Schwingungsdauer bzw. Grundfrequenz ist und diese Grundfrequenz vorzugsweise bei jedem innerhalb des Messbereiches der Messeinrichtung liegenden Messwert der zu messenden physikalischen Grösse wesentlich grösser als die zur Bildung der Regelgrössen dienenden Frequenzen ist und dass die Steuermittel zur Steuerung der Phasenverschiebungsmittel und der Ausgabemittel Mittel zur Erzeugung einer die zweite elektrische Spannung bildenden Sägezahnspannung mit von Höhe und Vorzeichen des Regelsignals abhängiger Schwingungsdauer bzw. Grundfrequenz sowie zur Bildung einer von dieser Schwingungsdauer bzw. Grundfrequenz abhängigen Steuergrösse zur Steuerung der Ausgabemittel umfassen. Diese Weiterbildung hat hauptsächlich in Verbindung mit den oben erwähnten, Filtermittel umfassenden Auswertungsmitteln Vorteile, weil bei der bei dieser Weiterbildung vorgeschriebenen Mindesthöhe der Grundfrequenz der Sägezahnspannung durch die Filtermittel fehlerhafte Einflüsse auf die Regelgrössen, deren Ursache die Rücksprünge der Sägezahnspannung sind, infolge des weit über dem Durchlassbereich der Filter liegenden Frequenzspektrums dieser Rücksprünge weitgehend vermieden werden, sie kann aber auch in Verbindung mit den ebenfalls oben erwähnten, Speichermittel umfassenden Auswertungsmitteln vorteilhaft sein, und zwar insbesondere dann, wenn fehlerhafte Einflüsse aus dem optischen Teil der Messeinrichtung wie durch diese Rücksprünge verursachte fehlerhafte Einflüsse schon unmittelbar am Uebergang vom optischen zum elektrischen Teil der Messeinrichtung am Detektorausgang abgefangen werden.

Eine besonders vorteilhafte Möglichkeit zum Abfangen solcher fehlerhafter Einflüsse aus dem optischen Teil der Messeinrichtung besteht bei Einrichtungen der eingangs genannten Art, bei denen die Steuerung der Phasenverschiebungsmittel durch die Steuermittel eine Steuergrösse umfasst, die eine nach einer Sägezahnfunktion mit zeitunabhängiger konstanter Amplitude und veränderlicher von der zu messenden Grösse abhängiger Schwingungsdauer verlaufende Phasenverschiebung bewirkt, darin, dass zwischen dem Ausgang des Detektors und dem Eingang der Auswertungsmittel Speichermittel zur Speicherung des jeweils vor Beginn des Rücksprunges der Sägezahnfunktion vom Detektor abgegebenen Detektorausgangssignals über die Rücksprungzeit vorgesehen sind. Vorteilhaft können die Speichermittel dabei einen mit dem Eingangswiderstand der Auswertungsmittel und/oder einem gesonderten ohmschen Widerstand belasteten Kondensator umfassen, wobei die sich aus der Kapazität des Kondensators und der parallel zum Kondensator liegenden ohmschen Belastung ergebende, das Absinken der Kondensatorspannung über der Zeit bestimmende Zeitkonstante vorzugsweise unter 30% der Schwingungsdauer der Sägezahnfunktion und zweckmässig bei etwa 20% derselben liegt. Durch diese Speichermittel, im einfachsten Fall also nur einem Kondensator, der über den als Diode wirkenden Detektor aufgeladen und über den als parallele ohmsche Belastung wirkenden Eingangswiderstand der Auswertungsmittel entladen wird, werden sprunghafte Veränderungen der Eingangsspannung der Auswertungsmittel während der Rücksprungzeiten der Sägezahnfunktion weitgehend ausgeschlossen, weil die sich theoretisch aus den sprunghaften Phasenänderungen während der Rücksprungzeiten der Sägezahnfunktion ergebenden relativ grossen Aenderungen des Detektorausgangssignals während der kurzen Rücksprungzeit nur relativ geringfügige Aenderungen der Kondensatorspannung des am Detektorausgang liegenden Kondensators bewirken können und diese relativ geringfügigen Aenderungen der Kondensatorspannung dann bis zum nächsten Rücksprung der Sägezahnfunktion wieder zurückgehen. Die Speichermittel haben somit den entscheidenden Vorteil, dass sie die Auswirkungen der eingangs erläuterten Fehler des Serrodyne-Verfahrens schon am Eingang des elektrischen Teiles der Messeinrichtung abfangen können und damit wesentlich zu einer weitgehend fehlerfrei arbeitenden Messeinrichtung bzw. zur Erreichung der angestrebten Verbesserung der Messgenauigkeit beitragen können, und zwar nicht nur bei der vorliegenden Einrichtung sondern auch bei bekannten nach dem Serrodyne-Verfahren arbeitenden Messeinrichtungen der eingangs genannten Art. Bei Einbeziehung solcher Speichermittel in nach dem Serrodyne-Verfahren arbeitende Messeinrichtungen der eingangs genannten Art wirken sich ferner auch Verkürzungen der Rücksprungzeit nicht mehr nachteilig aus, weil der eingangs schon erläuterten Erhöhung des Phasendifferenzfehlers bei Verkürzung der Rücksprungzeit und der sich damit theoretisch ergebenden Erhöhung der Aenderung des Detektorausgangssignals bei Beginn der Rücksprungzeit die mit der kürzeren Rücksprungzeit geringere Möglichkeit von Aenderungen der Kondensatorspannung des am Detektorausgang liegenden Kondensators gegenübersteht, so dass sich mit einer nach Null gehenden Rücksprungzeit auch eine nach Null gehende Aenderung der Kondensatorspannung und damit ein nach Null gehender Messfehler und nicht mehr wie ohne solche Speichermittel mit einer nach Null gehenden Rücksprungzeit ein ständig anwachsender Messfehler ergibt, und diese Verbesserung ist ein weiterer wichtiger Vorteil solcher Speichermittel. Die Einbeziehung solcher Speichermittel in nach dem Serrodyne-Verfahren arbeitende Messeineinrichtungen der eingangs genannten Art führt daher im Sinne der Aufgabenstellung zu einer wesentlichen Verbesserung des Steuerungsverfahrens und stellt daher eine der besonderen zusätzlichen Massnahmen zur Schaffung einer im Sinne der Aufgabenstellung geeigneten Modifikation des Steuerungsverfahren dar.

Mit besonderem Vorteil kann die vorliegende Einrichtung weiter so ausgebildet sein, dass die Mittel zur Bildung der Regelgrössen sich in Abhängigkeit von der durch die Phasenverschiebungsmittel bewirkten Phasenverschiebung derart verändernde Regelgrössen bilden, dass die Regelgrössen bei einem vorbestimmten Amplitudenverhältnis von Amplitude zu Maximalamplitude der aus der Ueberlagerung der miteinander interferierenden beiden Lichtwellen hervorgehenden Gesamtlichtwelle in bestimmten Verhältnissen zueinander stehen, vorzugsweise in der Form, dass bei dem vorbestimmten Amplitudenverhältnis zwei Regelgrössen von gleicher Höhe gebildet werden, und dass die Mittel zur Verarbeitung der Regelgrössen Mittel zur Bildung einer bei Annäherung an das vorbestimmte Amplitudenverhältnis nach Null gehenden Regeleingangsgrösse, vorzugsweise zur Bildung einer der Differenz der bei dem vorbestimmten Amplitudenverhältnis die gleiche Höhe aufweisenden beiden Regelgrössen entsprechenden Regeleingangsgrösse, und die Mittel zur Gewinnung eines Regelsignals aus dem Verarbeitungsergebnis einen als Multiplikator wirkenden analogen oder digitalen Regelverstärker umfassen, dem eingangsseitig die Regeleingangsgrösse zugeführt wird und der ausgangsseitig das die Steuermittel zur Steuerung der Phasenverschiebungsmittel regelnde Regelsignal abgibt, das sich durch entsprechende Regelung der Phasenverschiebung selbsttätig so einstellt, dass die Amplitude der Gesamtlichtwelle auf ihr vorbestimmtes Amplitudenverhältnis und damit die die Eingangsgrösse des Regelverstärkers bildende Regeleingangsgrösse auf nahezu Null bzw. auf einen dem Kehrwert des Multiplikations- bzw. Verstärkungsfaktors des Regelverstärkers entsprechenden Bruchteil des die Ausgangsgrösse der Regelverstärkers bildenden Regelsignals eingeregelt wird. Diese Ausbildung hat den Vorteil, dass bei einem vom Wert 1 verschiedenen vorbestimmten Amplitudenverhältnis wesentlich grössere Regelsteilheiten als bei dem üblichen, dem Wert 1 entsprechenden Amplitudenverhältnis und entsprechend grössere Messgenauigkeiten erzielt werden können, weil bei einer dem Amplitudenverhältnis 1 entsprechenden Phasendifferenz Null zwischen den beiden die Gesamtlichtwelle bildenden interferierenden Lichtwellen in der Nullstellung der Messeinrichtung Abweichungen der Phasendifferenz um $\Delta\phi$ von Null nur mit dem $\cos\Delta\phi$ bzw. ungefähr mit $(1-\Delta\phi^2/2)$ auf die Amplitude der Gesamtlichtwelle eingehen, während z.B. bei einer dem Amplitudenverhältnis 0,707 entsprechenden Phasendifferenz von 45° zwischen den beiden die Gesamtlichtwelle bildenden interferierenden Lichtwellen in der Nullstellung der Messeinrichtung Abweichungen der Phasendifferenz um $\Delta\phi$ von 45° mit

bzw. ungefähr mit

und damit wesentlich stärker auf die Amplitude der Gesamtlichtwelle eingehen.

Ist die mit der vorliegenden Einrichtung zu messende physikalische Grösse eine Bestimmungsgrösse einer Drehbewegung bzw.-bewegungskomponente eines sich bewegenden Objektes,dann ist eine direkte Messung der Grösse ohne zwischengeschalteten Messgrössenwandler möglich. Der als Messorgan dienende Lichtleiter bildet in diesem Fall zweckmässig in bekannter Weise die Spulenwindungen einer mit dem Objekt in drehfester Verbindung stehenden Spule mit senkrecht auf der Richtung der Drehbewegung bzw. -bewegungskomponente stehender Spulenachse und wird von zwei von der primären Lichtwelle abgeleiteten Lichtwellen in entgegengesetzter Durchlaufrichtung durchlaufen. Das hat den Vorteil, dass bei dem als Messorgan dienenden Lichtleiter die Reziprozitätsforderung im wesentlichen erfüllt ist. Vorzugsweise hat dabei die Krümmung des die Spulenwindungen bildenden Lichtleiters an jeder Stelle der Spulenwicklung und insbesondere auch in Uebergangsbereichen von einer Spulenwicklungslage zur nächsten einen mindestens dem 0,25-fachen des Spulenwicklungsinnendurchmessersentsprechenden, vorzugsweise über dem 0,45-fachen desselben liegenden Krümmungsradius, und hierzu sind vorzugsweise für jede Wicklungslage der Spulenwicklung ein gesonderter im wesentlichen zylindermantelförmiger Lagenwicklungsgrundkörper sowie in Uebergangsbereichen von einer Spulenwicklungslage zur nächsten vorzugsweise rampenartige Auflagemittel für den Lichtleiter zur Anhebung desselben auf die Höhe der nächsten Wicklungslage vorgesehen. Eine solche Ausbildung der Lichtleiterspule hat den Vorteil, dass durch den vollständigen Ausschluss von Stellen starker Krümmung des Lichtleiters die eingangs erwähnten Störzonen mit im wesentlichen geradliniger Ausbreitung der Lichtwellen in dem gekrümmten Lichtleiter weitgehend vermieden werden können und daher auch keine Differenzen zwischen den Lichtweglängen der beiden in entgegengesetzter Richtung durch den Lichtleiter laufenden Lichtwellen auftreten, die über ein vernachlässigbares Mass hinausgehen würden. Die sich somit aus dem Verbot starker Krümmungen des Lichtleiters ergebende äusserst präzise Wicklung der Lichtleiterspule ist daher eine weitere besondere Massnahme im Sinne der obigen Aufgabenstellung. Als Mittel zur Aufteilung der primären Lichtwelle sowie zur Wiedervereinigung der genannten beiden Lichtwellen ist bei einer solchen Einrichtung zur Drehratenmessung zweckmässig ein Lichtwellen-Koppler vorgesehen, der vorzugsweise einen aktiven sowie einen als reflexionsfreies Ende ausgebildeten passiven Anschluss auf seiner die Zuführungsseite der primären Lichtwelle bildenden einen Seite und zwei aktive Anschlüsse auf seiner die Abführungsseite der aus der Aufteilung hervorgehenden beiden Lichtwellen und gleichzeitig die Zuführungsseite bei der Wiedervereinigung der beiden Lichtwellen bildenden anderen Seite aufweist, wobei die beiden aktiven Anschlüsse dieser anderen Seite des Kopplers über den als Messorgan dienenden Lichtleiter und die Phasenverschiebungsmittel miteinander verbunden sind. Zur Auskopplung der aus der Wiedervereinigung der beiden Lichtwellen hervorgehenden Gesamtlichtwelle kann dabei zweckmässig ein weiterer Lichtwellen-Koppler vorgesehen sein, der vorzugsweise einen aktiven sowie einen als reflexionsfreies Ende ausgebildeten passiven Anschluss auf seiner die Zuführungsseite der Gesamtlichtwelle bildenden einen Seite und zwei aktive Anschlüsse auf seiner die Abführungsseite der Gesamtlichtwelle bildenden anderen Seite aufweist, wobei der aktive Anschluss auf der die Zuführungsseite der Gesamtlichtwelle bildenden einen Seite des zur Auskopplung vorgesehenen Kopplers vorzugsweise über einen Polarisator mit dem aktiven Anschluss auf der die Zuführungsseite der primären Lichtwelle bildenden einen Seite des zur Aufteilung vorgesehenen Kopplers verbunden ist und von den beiden aktiven Anschlüssen auf der die Abführungsseite der Gesamtlichtwelle bildenden anderen Seite des zur Auskopplung vorgesehenen Kopplers der eine mit dem Eingang des Detektors und der andere mit dem Ausgang der interferenzfähiges Licht abgebenden Lichtquelle verbunden ist.

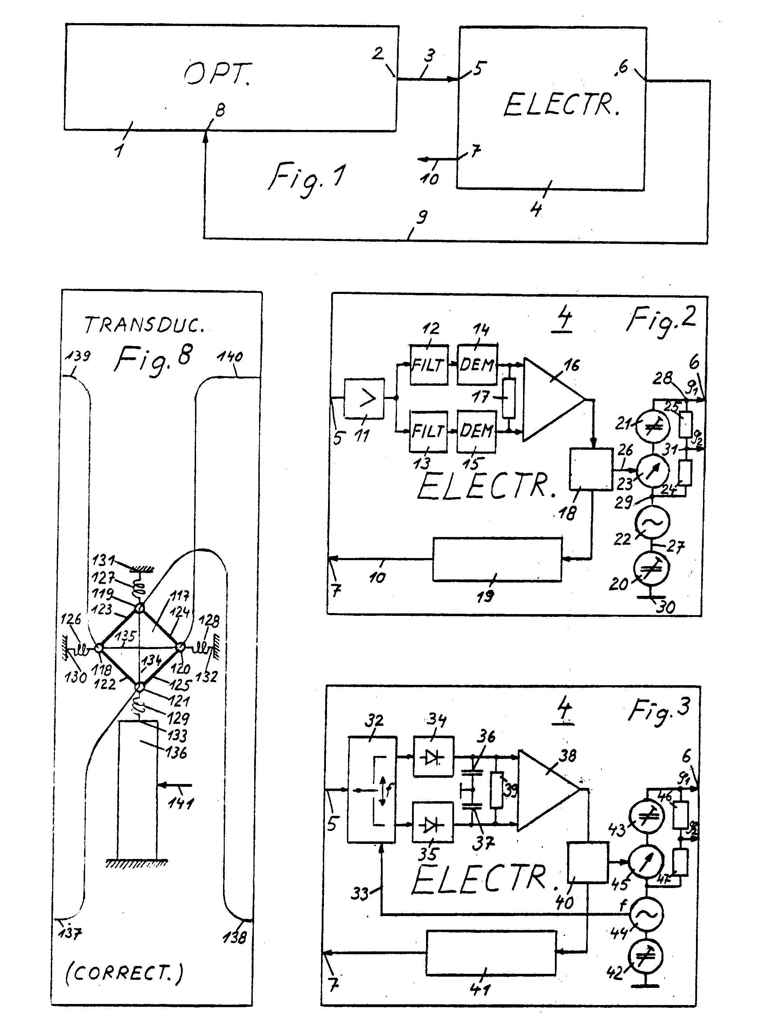

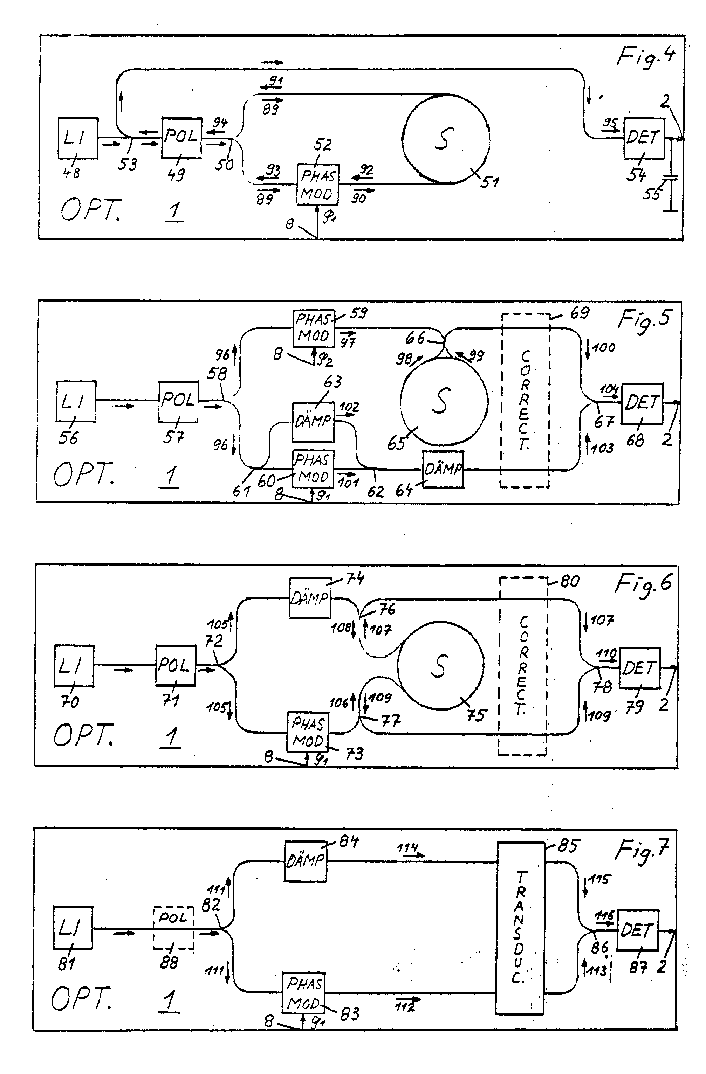

Ist die vorliegende Einrichtung zur Drehratenmessung vorgesehen und in der zuvor beschriebenen Weise mit einem gleichzeitig zur Aufteilung und Wiedervereinigung dienenden Lichtwellen-Koppler versehen, der auf einer Seite zwei aktive Anschlüsse hat, die über den die Lichtleiterspule bildenden, als Messorgan dienenden Lichtleiter und die Phasenverschiebungsmittel miteinander verbunden sind, dann sind Lichtleiterspule und Phasenverschiebungsmittel normalerweise in Reihe zueinander geschaltet, so dass die beiden in entgegengesetzter Richtung durch den als Messorgan dienenden, die Spule bildenden Lichtleiter laufenden Lichtwellen die Phasenverschiebungsmittel in einem der Laufzeit durch die Lichtleiterspule entsprechenden Zeitabstand passieren. Dieser Zeitabstand ist nun neben anderen Faktoren mit massgebend für die maximal zulässige Länge des als Messorgan dienenden Lichtleiters, und da sich mit einer Erhöhung der derzeit in der Grössenordnung von 1 km liegenden Länge des als Messorgan dienenden Lichtleiterseine zur Erhöhung der Messgenauigkeit nutzbare proportionale Erhöhung der von der zu messenden Grösse bewirkten Phasendifferenz ergeben würde und eine solche Erhöhung auch aus anderen Gründen wie z.B. aus Fig. 5 auf S. 15 der schon genannten "Optic News" vom Nov. 1989 ersichtlich vorteilhaft wäre, würde sowohl eine bei gleichbleibendem Zeitabstand mögliche Erhöhung der Lichtleiterlänge als auch eine Verringerung des Zeitabstandes bei gleichbleibender Lichtleiterlänge wesentliche Vorteile mit sich bringen. Die mit einer Erhöhung der Lichtleiterlänge bei gleichbleibendem Zeitabstand verbundenen Vorteile können nun bei der vorliegenden Messeinrichtung dadurch erreicht werden, dass die Gesamtlänge des als Messorgan dienenden Lichtleiters in zwei verschiedene Teillängen aufgeteilt ist und die beiden Teillängen zur Erhöhung der Empfindlichkeit der Messeinrichtung auf das p-fache einer Messeinrichtung mit ungeteilter Gesamtlänge des als Messorgan dienenden Lichtleiters bei gleicher Zeitdifferenz zwischen dem Durchlauf der einen und dem Durchlauf der anderen der gleichzeitig vom Lichtwellen-Koppler ausgehenden beiden Lichtwellen durch die Phasenverschiebungsmittel wie bei der Messeinrichtung mit ungeteilter Gesamtlänge des als Messorgan dienenden Lichtleiters über die Phasenverschiebungsmittel miteinander verbunden sind und die eine Teillänge das (p-1)/2-fache und die andere Teillänge das (p+1)/2-fache der besagten ungeteilten Gesamtlänge beträgt. Entsprechend können die mit einer Verringerung des Zeitabstandes bei gleichbleibender Lichtleiterlänge verbundenen Vorteile bei der vorliegenden Messeinrichtung dadurch erreicht werden, dass die Gesamtlänge des als Messorgan dienenden Lichtleiters in zwei verschiedene Teillängen aufgeteilt ist und die beiden Teillängen zur Verringerung der Zeitdifferenz zwischen dem Durchlauf der einen und dem Durchlauf der anderen der gleichzeitig vom Lichtwellen-Koppler ausgehenden beiden Lichtwellen durch die Phasenverschiebungsmittel auf das $\frac{1}{p}$ - fache der entsprechenden, bei einer Messeinrichtung mit gleichgrosser ungeteilter Gesamtlänge des als Messorgan dienenden Lichtleiters auftretenden Zeitdifferenz über die Phasenverschiebungsmittel miteinander verbunden sind und die eine Teillänge das $(1 - \frac{1}{p})$/2-fache und die andere Teillänge das $(1 + \frac{1}{p})$/2-fache der besagten ungeteilten Gesamtlänge beträgt.

Die vorliegende Einrichtung kann aber auch zur Drehratenmessung vorgesehen und hierzu in der oben beschriebenen Weise mit einer Lichtleiterspule versehen sein, ohne mit einem gleichzeitig zur Aufteilung und Wiedervereinigung dienenden Lichtwellen-Koppler mit zwei über die Lichtleiterspule und die Phasenverschiebungsmittel miteinander verbundenen aktiven Anschlüssen auf seiner einen Seite versehen zu sein, jedoch kann in diesem Fall die Reziprozitätsforderung nur für den die Lichtleiterspule bildenden und damit eine sehr grosse Länge aufweisenden, als Messorgan dienenden Lichtleiter im wesentlichen erfüllt werden, während für die übrigen Teile der zwischen Aufteilungs- und Wiedervereinigungsort liegenden Lichtwege der aus der Aufteilung der primären Lichtwelle hervorgehenden beiden Lichtwellen, also für die relativ kurzen Verbindungsmittel zwischen Aufteilungsort, Lichtleiterspule, Phasenverschiebungsmitteln und Wiedervereinigungsort, die Reziprozitätsforderung nicht erfüllt ist. Diese Nichterfüllung der Reziprozitätsforderung bei diesen kurzen Verbindungsmitteln erfordert nun zwar in den meisten Fällen besondere zusätzliche Massnahmen, um trotzdem über den gesamten Betriebstemperaturbereich eine zumindest nahezu vollständige Uebereinstimmung der Lichtweglängen der Lichtwege der aus der Aufteilung der primären Lichtwelle hervorgehenden beiden Lichtwellen vom Aufteilungs- zum Wiedervereinigungsort gewährleisten zu können, aber sie bringt auch ganz entscheidende Vorteile insofern mit sich, als mit dem Wegfall des gleichzeitig zur Aufteilung und Wiedervereinigung dienenden Lichtwellen-Kopplers mit zwei über die Lichtleiterspule und die Phasenverschiebungsmittel miteinander verbundenen aktiven Anschlüssen auf seiner einen Seite auch die Notwendigkeit zur Anwendung des aus den oben erläuterten Gründen mit beträchtlichen Phasendifferenzfehlern beim Rücksprung der Sägezahnfunktion behafteten Serrodyne-Verfahrens entfällt und damit dann die oben schon erläuterte Gleichspannungssteuerung der der Phasenverschiebungsmittel angewendet werden kann, mit der sich die oben schon erwähnte Möglichkeit einer wesentlichen Verbesserung der Messgenauigkeit der Messeinrichtung bzw. einer wesentlichen Herabsetzung der unteren Messbebereichsgrenze ergibt. Diese Vorteile lassen sich bei der vorliegenden Einrichtung im Prinzip dadurch erreichen, dass Aufteilungs- und Wiedervereinigungsort der aus der Aufteilung der primären Lichtwelle hervorgehenden beiden Lichtwellen getrennt werden und damit gemäss der obigen Definition "reziproker Anordnungen" auf die Erfüllung der Reziprozitätsforderung zumindest teilweise verzichtet wird, und zum Zwecke einer solchen Trennung von Aufteilungs- und Wiedervereinigungsort kann die vorliegende Einrichtung vorteilhaft so ausgebildet werden, dass als Mittel zur Aufteilung der primären Lichtwelle und zur Wiedervereinigung der aus der Aufteilung hervorgegangenen beiden Lichtwellen je ein Lichtwellen-Koppler vorgesehen ist, wobei der zur Aufteilung vorgesehene Koppler vorzugsweise einen aktiven sowie einen als reflexionsfreies Ende ausgebildeten passiven Anschluss auf seiner die Zuführungsseite der primären Lichtwelle bildenden einen Seite und zwei aktive Anschlüsse und zwei aktive Anschlüsse auf seiner die Abführungsseite der aus der Aufteilung hervorgehenden beiden Lichtwellen bildenden anderen Seite und der zur Wiedervereinigung vorgesehene Koppler vorzugsweise zwei aktive Anschlüsse auf seiner die Zuführungsseite bei der Wiedervereinigung der beiden Lichtwellen bildenden einen Seite und einen aktiven Anschluss sowie einen als reflexionsfreies Ende ausgebildeten passiven Anschluss auf seiner die Abführungsseite der aus der Wiedervereinigung der beiden Lichtwellen hervorgehenden Gesamtlichtwelle bildenden anderen Seite aufweist und wobei die Abführungsseite des zur Wiedervereinigung vorgesehenen Kopplers vorzugsweise mit dem Eingang des Detektors verbunden ist. Vorteilhaft kann die Einrichtung dabei so weitergebildet sein, dass noch ein zusätzlicher Lichtwellen-Koppler mit je zwei aktiven Anschlüssen auf seinen beiden Seiten vorgesehen ist, dessen beide aktiven Anschlüsse auf seiner einen Seite über den als Messorgan dienenden Lichtleiter miteinander verbunden sind und von dessen beiden aktiven Anschlüssen auf seiner anderen Seite der eine direkt oder über zwischengeschaltete Phasenverschiebungs- und/oder Dämpfungsmittel mit einem aktiven Anschluss der Abführungsseite des zur Aufteilung vorgesehenen Kopplers und der andere vorzugsweise direkt mit einem aktiven Anschluss der Zuführungsseite des zur Wiedervereinigung vorgesehenen Kopplers verbunden ist und dass der andere aktive Anschluss der Abführungsseite des zur Aufteilung vorgesehenen Kopplers über zwischengeschaltete Phasenverschiebungs- und/oder Dämpfungsmittel oder direkt mit dem anderen aktiven Anschluss der Zuführungsseite des zur Wiedervereinigung vorgesehenen Kopplers verbunden ist. Bei einer anderen vorteilhaften Weiterbildung der vorliegenden Einrichtung mit getrenntem Aufteilungs- und Wiedervereinigungsort sind zwei zusätzliche Lichtwellen-Koppler vorgesehen, von denen jeder vorzugsweise einen aktiven sowie einen als reflexionsfreies Ende ausgebildeten passiven Anschluss auf seiner einen Seite und zwei aktive Anschlüsse auf seiner anderen Seite aufweist, und die beiden zusätzlichen Koppler sind jeweils mit ihrem aktiven Anschluss auf der genannten einen Seite über den als Messorgan dienenden Lichtleiter miteinander verbunden, und von den beiden aktiven Anschlüssen auf der genannten anderen Seite von einem der beiden zusätzlichen Koppler ist der eine über die Phasenverschiebungsmittel mit einem der beiden aktiven Anschlüsse der Abführungsseite des zur Aufteilung vorgesehenen Kopplers und der andere mit einem der beiden aktiven Anschlüsse der Zuführungsseite des zur Wiedervereinigung vorgesehenen Kopplers verbunden, und von den beiden aktiven Anschlüssen auf der genannten anderen Seite von dem anderen der beiden zusätzlichen Koppler ist der eine, vorzugsweise über Dämpfungsmittel mit zumindest annähernd gleicher Dämpfung wie der der Phasenverschiebungsmittel, mit dem anderen der beiden aktiven Anschlüsse der Abführungsseite des zur Aufteilung vorgesehenen Kopplers und der andere mit dem anderen der beiden aktiven Anschlüsse der Zuführungsseite des zur Wiedervereinigung vorgesehenen Kopplers verbunden. Allgemein ergeben sich vorteilhafte Weiterbildungen der vorliegenden Einrichtung mit getrenntem Aufteilungs- und Wiedervereinigungsort der genannten Lichtwellen dadurch, dass die beiden aktiven Anschlüsse auf der Abführungsseite des zur Aufteilung vorgesehenen Kopplers über die Phasenverschiebungsmittel und über den bzw. die als Messorgane dienenden Lichtleiter sowie vorzugsweise über Dämpfungsmittel zum Dämpfungsausgleich auf den Lichtwegen von dem zur Aufteilung vorgesehenen Koppler zu dem zur Wiedervereinigung vorgesehenen Koppler mit den beiden aktiven Anschlüssen auf der Zuführungsseite des zur Wiedervereinigung vorgesehenen Kopplers verbunden sind.

Die schon mehrfach erwähnten besonderen zusätzlichen Massnahmen, um bei getrenntem Aufteilungs- und Wiedervereinigungsort der aus der Aufteilung der primären Lichtwelle hervorgehenden Lichtwellen und daraus resultierender fehlender Reziprozität zumindest auf Teilen der Lichtwege zwischen Aufteilungs- und Wiedervereinigungsort dennoch über den gesamten Betriebstemperaturbereich der Messeinrichtung eine zumindest nahezu vollständige Uebereinstimmung der Lichtweglängen der Lichtwege vom Aufteilungs- zum Wiedervereinigungsort gewährleisten zu können und damit die oben erläuterte Gleichspannungssteuerung der Phasenverschiebungsmittel ermöglichen zu können, mit der sich wesentliche Verbesserungen der Messgenauigkeit und damit eine wesentliche Herabsetzung der unteren Messbereichsgrenze der Messeinrichtung erreichen lässt, beruhen nun im Prinzip darauf, dass ein einerseits genügend und andererseits aber auch nicht zu stark mechanisch vorgespannter Lichtleiter seine Länge zwischen den beiden die Vorspannung übertragenden Aufhängungspunkten bei unabhängig von der Temperatur gleichbleibendem Abstand der Aufhängungspunkte über einen relativ weiten Temperaturbereich nicht ändert, weil die Temperaturausdehnung des Lichtleiters bei Erhöhung der Temperatur durch einen entsprechenden Rückgang der elastischen Dehnung des vorgespannten Lichtleiters vollständig und genau kompensiert wird und andererseits die negative Temperaturausdehnung bzw. die Zusammenziehung des Lichtleiters bei Verringerung der Temperatur unterhalb der Elastizitätsgrenze der elastischen Dehnung durch eine entsprechende Erhöhung der elastischen Dehnung des vorgespannten Lichtleiters ebenfalls vollständig und genau kompensiert wird, so dass es im Prinzip also möglich ist, die Temperaturausdehnung der die Lichtwellen führenden Lichtleiter zwischen Aufteilungs- und Wiedervereinigungsort über den gesamten Betriebstemperaturbereich vollständig zu eliminieren und damit der von der Fachwelt als unabdingbar angesehenen Grundbedingung einer vollständigen Erfüllung der Reziprozitätsforderung die Basis zu entziehen.

Mit besonderem Vorteil können daher Einrichtungen der eingangs genannten Art in Anwendung der zuvor erläuterten besonderen zusätzlichen Massnahme so ausgebildet sein, dass mindestens ein Teil der die aus der Aufteilung der primären Lichtwelle hervorgehenden Lichtwellen zwischen Aufteilungsort und Wiedervereinigungsort dieser Lichtwellen führenden Lichtleiter wenigstens auf einem Teil ihrer Gesamtlänge durch Vorspannung so weit elastisch gedehnt sind, dass ihre elastische Dehnung bei einer mittleren Betriebstemperatur der Messeinrichtung grösser als ihre Temperaturausdehnung im Bereich von der mittleren zur maximalen Betriebstemperatur und mindestens um ihre Temperaturausdehnung von der minimalen zur mittleren Betriebstemperatur kleiner als die Dehnung an der elastischen Dehnungsgrenze ist, so dass Längenveränderungen der Lichtleiter bei Temperaturerhöhungen durch entsprechenden Rückgang der elastischen Dehnung und bei Temperaturrückgang durch entsprechende Erhöhung der elastischen Dehnung kompensiert werden. Nun führt die Anwendung dieser Massnahme allein aber in den meisten Fällen noch nicht zu der angestrebten vollständigen Uebereinstimmung der Lichtweglängen der Lichtwege von Aufteilungs- zum Wiedervereinigungsort, weil die Lichtleiterlängen der vom Aufteilungs- zum Wiedervereinigungsort führenden Lichtleiter zwar ohne grössere Schwierigkeiten bis auf Bruchteile eines Millimeters und unter Anwendung von Präzisionsmechanik gegebenenfalls bis auf einige Mikrometer genau gleich gemacht werden könnten, die eingangs erörterte erforderliche Genauigkeit der Uebereinstimmung jedoch durch genaue Bemessung der Lichtleiterlängen kaum realisierbar sein dürfte. Hier sind also in der Regel noch weitere besondere zusätzliche Massnahmen erforderlich, um beim Nullabgleich der Messeinrichtung die Uebereinstimmung der Lichtweglängen der Lichtwege vom Aufteilungs- zum Wiedervereinigungsort mit der erforderlichen Genauigkeit einstellen zu können, und zu diesem Zweck kann die vorliegende Messeinrichtung vorteilhaft so weitergebildet sein, dass sie ein kinematisches Getriebe mit vier über Gelenke zu einem gleichseitigen Viereck miteinander verbundenen Gliedern umfasst und Mittel zur Ausübung von Zugkräften auf jedes der vier Gelenke mit je einer nach aussen in die Umgebung des Vierecks weisenden, wenigstens annähernd die Richtung der bei dem betreffenden Gelenk endenden Diagonalen des Vierecks aufweisenden Kraftresultanten vorgesehen sind, vorzugsweise in Form von vier Zugfedern zwischen den vier Gelenken und vier in der Umgebung des Getriebes angeordneten Aufhängungspunkten, und dass ein Lichtleiter zwischen zwei diagonal gegenüberliegende Gelenke des Getriebes und ein anderer Lichtleiter zwischen die anderen beiden diagonal gegenüberliegenden Gelenke des Getriebes mit der oben genannten Vorspannung gespannt ist und eine der beiden aus der Aufteilung der primären Lichtwelle hervorgehenden Lichtwellen durch einen dieser beiden Lichtleiter und die andere der beiden aus der Aufteilung hervorgehenden Lichtwellen durch den anderen der beiden Lichtleiter geführt wird und Mittel zur Veränderung der Zugkräfte vorgesehen sind, vorzugsweise in Form von Mitteln zur Veränderung der Lage von mindestens einem der Aufhängungspunkte relativ zu den übrigen Aufhängungspunkten bzw. in Form eines in den Kraftübertragungsweg der auf eines der Gelenke wirkenden Zugkraft eingeschalteten Verbindungsgliedes mit veränderbarer Länge. Der wesentliche Vorteil dieser Weiterbildung ist, dass das kinematische Getriebe im Prinzip wie eine mechanische Diagonalbrücke wirkt, d.h. bei Verringerung des Abstandes von zwei gegenüberliegenden Gelenken und entsprechender Verringerung der Länge des zwischen diese Gelenke mit Vorspannung gespannten Lichtleiters erhöht sich im Abgleichsbereich bei im wesentlichen quadratischer Anordnung der Glieder in gleichem Masse der Abstand zwischen den anderen beiden gegenüberliegenden Gelenken und damit die Länge des zwischen diese Gelenke mit Vorspannung gespannten Lichtleiters, und aus der sich damit ergebenden gegensinnigen Aenderung der Längen der beiden Lichtleiter ergibt sich eine veränderbare Differenz zwischen den Lichtweglängen auf den beiden vom Aufteilungsort über je einen der beiden Lichtleiter zum Wiedervereinigungsort führenden Lichtwegen, die ausserordentlich fein einstellbar ist und wegen der Vorspannung der Lichtleiter temperaturunabhängig ist, so dass mit Hilfe dieser Weiterbildung die Uebereinstimmung der Lichtweglängen auf den beiden vom Aufteilungs- zum Wiedervereinigungsort führenden Lichtwegen bis auf geringfügige Bruchteile eines Mikrometers genau eingestellt werden kann und diese beim Nullabgleich der Messeinrichtung vorgenommene Einstellung im gesamten Betriebstemperaturbereich unverändert erhalten bleibt. An dieser genauen Einstellung ändert auch die Temperaturausdehnung eines z.B. als Träger der genannten vier Aufhängungspunkte vorgesehenen, das kinematische Getriebe umgebenden Rahmens nichts, weil eine Temperaturausdehnung dieses Rahmens lediglich eine bei allen vier Zugfedern gleichgrosse Erhöhung der Zugkraft bewirkt, durch die die Lage der vier Glieder des kinematischen Getriebes relativ zueinander und damit auch die Länge der beiden Lichtleiter nicht verändert würde. Ueber die Funktion als Einstellorgan zur Einstellung übereinstimmender Lichtweglängen beim Nullabgleich der Messeinrichtung hinaus kann die vorliegende Weiterbildung aber vorteilhafterweise noch weitergehende Funktionen erfüllen und sogar als selbständiges Messorgan mit Messwandler dienen, wenn durch die zu messende Grösse direkt oder indirekt über einen Messgrössenwandler eine Steuerung der Zugkräfte auf die Gelenke bewirkt werden kann. So kann beispielsweise in den Kraftübertragungsweg der auf eines der Gelenke wirkenden Zugkraft ein Verbindungsglied eingeschaltet sein, dessen Temperaturausdehnungskoeffizient sich derart von dem des kinematischen Getriebes einschliesslich eines dasselbe umgebenden, mit den Aufhängungspunkten für die Zugfedern versehenen Rahmens unterscheidet, dass durch Temperaturänderungen verursachte Aenderungen der besagten Differenz zwischen den Lichtweglängen der vom Aufteilungszum Wiedervereinigungsort führenden beiden Lichtwege durch unterschiedliche Temperaturausdehnungen des Verbindungsgliedes und der übrigen Teile des kinematischen Getriebes und dadurch verursachte Differenzen zwischen den Lichtweglängen durch die zwischen den Getriebegelenken gespannten Lichtleiter selbsttätig kompensiert werden, und in entsprechender Weise kann auch durch eine Steuerung der Länge des Verbindungsgliedes durch die zu messende Grösse eine der zu messenden Grösse entsprechende Differenz der Lichtweglängen durch die Lichtleiter zwischen den Getriebegelenken bewirkt werden.

Demgemäss kann eine mit einem solchen kinematischen Getriebe versehene Messeinrichtung mit besonderem Vorteil eine von den Arbeitsbedingungen und insbesondere der Temperatur der Messeinrichtung abhängige derartige Steuerung der Mittel zur Veränderung der Zugkräfte aufweisen, dass durch Aenderungen von Arbeitsbedingungen der Messeinrichtung und insbesondere durch Aenderungen der Temperatur der Messeinrichtung verursachte Aenderungen der Differenz zwischen den Weglängen der von den beiden aus der Aufteilung der primären Lichtwelle hervorgehenden Lichtwellen bis zu ihrer Wiedervereinigung durchlaufenen Lichtwege durch entsprechende gegensinnige Aenderungen der Differenz zwischen den Lichtweglängen durch die beiden zwischen den Gelenken des Getriebes gespannten Lichtleiter zumindest grösstenteils kompensiert werden.

Besonders geeignet ist eine mit einem solchen kinematischen Getriebe versehene Messeinrichtung darüberhinaus dann, wenn die zu messende physikalische Grösse eine Grösse aus der Gruppe der mindestens eine der Dimensionen eines dreidimensionalen festen Objektes direkt beeinflussenden Grössen und und der in solche direkt beeinflussende Grössen umsetzbaren Grössen ist, vorzugsweise eine der zu dieser Gruppe gehörenden Grössen Temperatur, Druck, Zug, Kraft und Beschleunigung, wobei in diesem Fall die beiden zwischen den Gelenken des Getriebes gespannten Lichtleiter die als Messorgane dienenden Lichtleiter bilden und die Lichtweglängen durch diese beiden Lichtleiter durch eine von der zu messenden physikalischen Grösse abhängige Steuerung der genannten Zugkräfte, vorzugsweise in Form einer Steuerung der Länge eines in den Kraftübertragungsweg der auf eines der Gelenke wirkenden Zugkraft eingeschalteten Verbindungsgliedes, veränderbar sind. Die Vorteile einer solchen Messeinrichtung sind in erster Linie die mit anderen Messeinrichtungen bei der Messung solcher Grössen bisher nicht oder nur mit einem unvergleichbar grösserem Aufwand erreichbare ausserordentlich grosse Messgenauigkeit und die universelle Anwendbarkeit für die verschiedensten physikalischen Grössen aus der genannten Gruppe.

Vorteilhaft kann bei der vorliegenden Einrichtung ferner in den Lichtweg zwischen der Lichtquelle und den Mitteln zur Aufteilung der von der Lichtquelle gelieferten primären Lichtwelle ein Polarisator eingeschaltet sein. Das hat den Vorteil einer Verbesserung der Interferenzfähigkeit bzw. der Kohärenzlänge des den Aufteilungsmitteln zugeführten Lichtes und ist inbesondere bei als Messorgane dienenden Lichtleitern von sehr grosser Länge, wie sie z.B. in Form einer Lichtleiterspule bei der Drehratenmessung angewendet werden, besonders vorteilhaft.

Im Zusammenhang mit der eingangs vorgenommenen Erörterung der Reziprozitätsforderung und der dort aufgezeigten Möglichkeit einer Differenz zwischen den Lichtweglängen von zwei in entgegengesetzter Richtung durch ein und denselben Lichtleiter laufenden Lichtwellen bei von der Achsrichtung des Lichtleiters abweichender Richtung der Ausbreitung der Lichtwellen in dem Lichtleiter ist schliesslich noch darauf hinzuweisen,dass Einrichtungen der eingangs genannten Art zur Vermeidung von aus solchen Abweichungen resultierenden Messfehlern vorteilhaft so ausgebildet sein können, dass jede Stelle der Lichtwege der aus der Aufteilung der primären Lichtwelle hervorgehenden beiden Lichtwellen von der Aufteilungsstelle bis zur Stelle der Wiedervereinigung der beiden Lichtwellen relativ zu jeder anderen Stelle dieser Lichtwege unbeweglich ist und hierzu sowohl die Lichtleiter zwischen den Mitteln zur Aufteilung und zur Wiedervereinigung der beiden Lichtwellen und den in die Lichtwege der beiden Lichtwellen eingeschalteten, den bzw. die als Messorgane dienenden Lichtleiter und die Phasenverschiebungsmittel umfassenden Mitteln relativ zueinander und relativ zu den Aufteilungs- und Wiedervereinigungsmitteln und den in die Lichtwege eingeschalteten Mitteln als auch die Aufteilungs- und Wiedervereinigungsmittel und die in die Lichtwege eingeschalteten Mittel relativ zueinander unbeweglich sind. Eine solche Unbeweglichkeit der Lichtwege zwischen Aufteilungs- und Wiedervereinigungsmitteln relativ zueinander hat den Vorteil, dass Erschütterungen der Messeinrichtung und andere bei beweglichen Lichtleitern zu Relativbewegungen derselben führende Ursachen keinen Einfluss auf die Ausbreitungsrichtung der Lichtwellen in dem Lichtleiter ausüben können und sich eventuelle Differenzen zwischen den Lichtweglängen der vom Aufteilungs- zum Wiedervereinigungsort laufenden beiden Lichtwellen daher - jedenfalls soweit es sich um bewegungsbedingte Aenderungen handelt - nicht verändern können und dementsprechend auch keine bewegungsbedingten Messfehler entstehen können. Zur Realisierung dieser Ausbildung können die Aufteilungs- und Wiedervereinigungsmittel sowie die in die Lichtwege eingeschalteten Mittel und die Lichtleiter zwischen diesen Mitteln dabei vorteilhaft mit einer die Zwischenräume zwischen diesen Mitteln und zwischen den Lichtleitern sowie zwischen den Lichtleitern und diesen Mitteln ausfüllenden, vorzugsweise kalthärtenden Vergussmasse zu einem Block vergossen sein, was den Vorteil eines relativ geringen Aufwandes für diese Realisierung hat.

Anhand der nachstehenden Figuren ist die Erfindung im folgenden an einigen Ausführungsbeispielen näher erläutert. Es zeigen

Fig. 1     ein Blockschema einer Messeinrichtung nach der Erfindung mit einem optischen und einem elektrischen Teil der Einrichtung

Fig. 2 und 3     je ein Ausführungsbeispiel für den inneren Aufbau des elektrischen Teiles in Fig. 1

Fig. 4 bis 7     je ein Ausführungsbeispiel für den inneren Aufbau des optischen Teiles in Fig. 1

Fig. 8     ein Ausführungsbeispiel für den inneren Aufbau des in Fig. 7 enthaltenen und auch in Fig. 5 und 6 einfügbaren kinematischen Getriebes zur Veränderung der Differenz zwischen den Lichtweglängen der beiden vom Aufteilungs- zum Wiedervereinigungsort führenden Lichtwege

Das in Fig. 1 gezeigte Blockschema einer Messeinrichtung nach der Erfindung zeigt den prinzipiellen Aufbau von Messeinrichtungen der vorliegenden Art: Eine solche Messeinrichbesteht aus einem optischen Teil 1, dem als Eingangsgrösse die zu messende Grösse z.B. in Form einer Drehung der gesamten Messeinrichtung und damit auch des optischen Teiles 1 derselben zugeführt wird und der als Ausgangsgrösse an seinem Ausgang 2 das z.B. mittels eines Photodetektors in ein elektrisches Signal umgesetzte optische Ausgangssignal abgibt, einem eingangsseitig über die Verbindungsleitung 3 an den Ausgang 2 des optischen Teiles 1 angeschlossenen elektrischen Teil 4, dem als Eingangsgrösse an seinem Eingang 5 das vom Ausgang 2 des optischen Teiles 1 abgegebene elektrische Signal zugeführt wird und der als Ausgangsgrössen an seinem Regelausgang 6 eine zur Regelung des optischen Teiles 1 dienende elektrische Grösse und an seinem den Ausgang der gesamten Messeinrichtung bildenden Messwertausgang 7 den Messwert der zu messenden physikalischen Grösse abgibt, und ferner der den Regelausgang 6 des elektrischen Teiles 4 mit dem Regeleingang 8 des optischen Teiles 1 verbindenden Regelleitung 9 und der den Messwert der zu messenden physikalischen Grösse abführenden Ausgangsleitung 10. Ausführungsbeispiele für den inneren Aufbau des elektrischen Teiles 4 und des optischen Teiles 1 sind in den Figuren 2 bis 7 gezeigt.

Bei dem in Fig. 2 gezeigten Ausführungsbeispiel des elektrischen Teiles 4 der in Fig. 1 gezeigten Messeinrichtung umfassen die Auswertungsmittel zur Auswertung des dem Eingang 5 des elektrischen Teiles 4 über die Verbindungsleitung 3 vom Ausgang 2 des optischen Teiles 1 der in Fig. 1 gezeigten Messeinrichtung zugeführten elektrischen Signals den Signalverstärker 11 zur Verstärkung des Eingangssignals, die beiden eingangsseitig an den Ausgang des Signalverstärkers 11 angeschlossenen Filter 12 und 13 sowie die beiden eingangsseitig an den Ausgang von je einem der beiden Filter 12 und 13 angeschlossenen Demodulatoren 14 und 15 als Mittel zur Bildung von zwei Regelgrössen, die in unterschiedlicher Weise von den Phasenverschiebungen abhängen, die von den im optischen Teil 1 vorgesehenen Phasenverschiebungsmitteln bewirkt werden, und den Regelverstärker 16 mit dem parallel zu seinem Eingang geschalteten ohmschen Widerstand 17 als Mittel zur analogen oder digitalen rechnerischen Verarbeitung der Regelgrössen (im vorliegenden Ausführungsbeispiel zum analogen Vergleich der Regelgrössen bzw. rechnerisch ausgedrückt zur analogen Bildung der Differenz derselben) sowie zur Gewinnung eines Regelsignals zur Regelung der Steuermittel 18 aus dem Verarbeitungsergebnis (im vorliegenden Ausführungsbeispiel des das Regelsignal bildenden Ausgangssignals des Regelverstärkers 16). Die von den Auswertungsmitteln geregelten Steuermittel zur Steuerung der im optischen Teil 1 der in Fig. 1 gezeigten Messeinrichtung vorgesehenen Phasenverschiebungsmittel auf von der zu messenden physikalischen Grösse abhängige Phasenverschiebungen von mindestens der zur Phasenverschiebung vorgesehenen einen der beiden Lichtwellen sowie zur Steuerung der Ausgabemittel 19 zur Ausgabe des dem Ausgangssignal der Steuermittel 18 bzw. den dadurch von den Phasenverschiebungsmitteln bewirkten Phasenverschiebungen entsprechenden Messwertes der zu messenden physikalischen Grösse umfassen bei dem in Fig. 2 gezeigten Ausführungsbeispiel des elektrischen Teiles 4 der in Fig. 1 gezeigten Messeinrichtung neben den Steuermitteln 18 noch die beiden auf feste Spannungswerte eingestellten Gleichspannungsquellen 20 und 21, die eine feste Amplitude und eine feste Frequenz aufweisende Wechselspannungsquelle 22 und die von den Steuermitteln 18 gesteuerte, veränderliche Spannungen abgebende Spannungsquelle 23 (die bei einer Ausbildung des optischen Teiles 1 der Messeinrichtung wie in Fig. 4 von einem Sägezahngenerator mit fester Amplitude und veränderlicher Grundfrequenz und bei einer Ausbildung des optischen Teiles 1 der Messeinrichtung wie in einer der Figuren 5 bis 7 von einer Gleichspannungsquelle mit in Höhe und Vorzeichen veränderlicher Spannung gebildet wird) sowie den von den beiden gleichgrossen ohmschen Widerständen 24 und 25 gebildeten Spannungsteiler zur Halbierung der Spannungssumme der von den beiden Spannungsquellen 21 und 23 abgegebenen Spannungen.

Zu dem zuvor beschriebenen inneren Aufbau des in Fig. 2 gezeigten Ausführungsbeispiels des elektrischen Teiles 4 der in Fig. 1 gezeigten Messeinrichtung ist zu bemerken, dass der von den Widerständen 24 und 25 gebildete Spannungsteiler nur bei Ausbildung des optischen Teiles 1 der Messeinrichtung wie in Fig. 5 gebraucht wird und daher bei Ausbildung des optischen Teiles 1 der Messeinrichtung wie in einer der Figuren 4, 6 und 7 weggelassen werden kann. Das gleiche gilt auch für Modifikationen der Fig. 5 mit nur einem Phasenmodulator. Des weiteren können auch mehrere der Spannungsquellen 20, 21 und 23 zu einer Spannungsquelle zusammengefasst werden, und zwar bei einer Ausbildung des optischen Teiles 1 wie in Fig. 4 unter Weglassung des von den Widerständen 24 und 25 gebildeten Spannungsteilers die beiden Gleichspannungsquellen 20 und 21 zu einer die Spannungssumme derselben abgebenden, auf diesen festen Spannungswert eingestellten Gleichspannungsquelle, bei einer Ausbildung des optischen Teiles 1 wie in Fig. 5 die eine feste Spannung abgebende Gleichspannungsquelle 21 mit der eine in Höhe und Vorzeichen veränderliche Spannung abgebenden Spannungsquelle 23 zu einer die Spannungssumme derselben und damit eine nur noch in der Höhe, jedoch nicht mehr im Vorzeichen, veränderliche Spannung abgebenden Spannungsquelle und bei einer Ausbildung des optischen Teiles 1 wie in Fig. 6 oder 7 unter Weglassung des von Widerständen 24 und 25 gebildeten Spannungsteilers entweder die beiden Gleichspannungsquellen 20 und 21 zu einer die Spannungssumme derselben abgebenden, auf diesen festen Spannungswert eingestellten Gleichspannungsquelle oder die drei Spannungsquellen 20, 21 und 23 zu einer die Spannungssumme derselben und damit eine nur noch in der Höhe, jedoch nicht mehr im Vorzeichen, veränderliche Spannung abgebenden Spannungsquelle. Zu dem Regelverstärker 16 in Fig. 2 ist zu bemerken, dass dieser bei analoger rechnerischer Verarbeitung der an den Ausgängen der beiden Demodulatoren 14 und 15 stehenden beiden Regelgrössen in Form der Gegeneinanderschaltung der beiden Regelgrössen zur Bildung der Differenz zwischen den beiden Regelgrössen zweckmässig ein Differentialverstärker sein sollte, aber anstelle eines solchen analogen Differentialverstärkers kann auch ein digitales System mit einem entweder die beiden Regelgrössen an den Ausgängen der Demodulatoren 14 und 15 abwechselnd oder ständig die über dem Widerstand 17 liegende analoge Differenz zwischen den beiden Regelgrössen abtastenden Analog-Digital-Wandler, gegebenenfalls mit nachgeschalteter digitaler Addierstufe zur digitalen Bildung der Differenz zwischen den beiden Regelgrössen, einem an den Ausgang des Analog-Digital-Wandlers bzw. der nachgeschalteten Addierstufe angeschlossenen digitalen Multiplikator und einem an dessen Ausgang angeschlossenen Digital-Analog-Wandler verwendet werden, bei dem kei-Stabilitätsprobleme wie bei Gleichspannungsverstärkern und insbesondere Differentialverstärkern auftreten können. Auf jeden Fall muss aber der Regelverstärker 16 an seinem Ausgang positive und negative Ausgangssignale abgeben können, da das am Widerstand 17 liegende, der Differenz zwischen den beiden Regelgrössen entsprechende Eingangssignal des Regelverstärkers 16 ebenfalls positive und negative Werte annehmen kann, je nachdem, welche der beiden an den Ausgängen der Demodulatoren 14 und 15 stehenden Regelgrössen die grössere und welche die kleinere ist. Das Ausgangssignal des Regelverstärkers 16 ist proportional zu der von der zu zu messenden Grösse bewirkten Phasendifferenz zwischen den oben schon erwähnten, aus der Aufteilung der primären Lichtwelle hervorgehenden beiden Lichtwellen und damit bei linearem Verhältnis der zu messenden Grösse zu der von ihr bewirkten Phasendifferenz auch proportional zu der zu messenden Grösse, weil bei Messeinrichtungen wie in Fig. 1 mit einem geschlossenen Regelkreis die zu messende Grösse bzw. die von derselben bewirkte, innerhalb des Regelkreises wirksame Grösse durch eine von dem Regelverstärker der Messeinrichtung erzeugte bzw. ursächlich bewirkte Kompensationsgrösse bis auf eine ausserordentlich kleine Differenz kompensiert wird und somit das diese Kompensationsgrösse ererzeugende bzw. bewirkende Ausgangssignal des Regelverstärkers proportional zu der zu messenden Grösse bzw. zu der von derselben bewirkten, innerhalb des Regelkreises wirksamen Grösse sein muss, und da das Eingangssignal des Regelverstärkers um den Verstärkungsfaktor des Regelverstärkers kleiner als das Ausgangssignal des Regelverstärkers ist, muss demgemäss auch das Eingangssignal des Regelverstärkers proportional zu der zu messenden Grösse bzw. zu der von derselben bewirkten, innerhalb des Regelkreises wirksamen Grösse sein. Das Eingangssignal eines Regelverstärkers in einem geschlossenen Regelkreis wird nun im Prinzip von der über ein Rückführungsnetzwerk zum Eingang des Regelverstärkers zurückgeführten ausserordentlich kleinen Differenz zwischen der zu messenden Grösse bzw. der von derselben bewirkten, innerhalb des Regelkreises wirksamen Grösse und der Kompensationsgrösse erzeugt, und daher regelt sich diese Differenz selbsttätig so ein, dass das Eingangssignal des Regelverstärkers gerade um den Verstärkungsfaktor des Regelverstärkers kleiner als das Ausgangssignal des Regelverstärkers wird. An dem Ausgangssignal des Regelverstärkers bzw. der von diesem bewirkten Kompensationsgrösse ändert sich bei diesem Einregelungsvorgang praktisch nichts, weil die Kompensationsgrösse auch bei relativ grossen Aenderungen dieser ausserordentlich kleinen Differenz praktisch gleich der zu messenden Grösse bleibt bzw. sich nur um die z.B. wesentlich unter einem Promille der Kompensationsgrösse liegende Aenderung der Differenz ändert (z.B. um das 0,0004-fache, wenn die Differenz ursprünglich das 0,0001-fache der Kompensationsgrösse beträgt und sich auf das Fünffache ihrer ursprünglichen Höhe, also auf das 0,0005-fache der Kompensationsgrösse erhöht). Da sich die ausserordentlich kleine Differenz also relativ stark ändern kann, ohne dass sich das von dem Ausgangssignal des Regelverstärkers abgeleitete Messergebnis ändert, haben auch Aenderungen im Rückführungsnetzwerk, die nur die absolute Höhe der Differenz beeinflussen (wie z.B. Schwankungen der Lichtintensität der im optischen Teil 1 der Messeinrichtung in Fig. 1 vorgesehenen Lichtquelle), keinen Einfluss auf das Messergebnis, solange weder Verfälschungen der Kompensationsgrösse (z.B. infolge von Aenderungen des Proportionalitätsfaktors zwischen Kompensationsgrösse und Ausgangssignal des Regelverstärkers aufgrund von Toleranzen der im optischen Teil 1 der Messeinrichtung in Fig. 1 vorgesehenen Phasenverschiebungsmittel) noch Verfälschungen der zu messenden Grösse (z.B. bei einer Messeinrichtung wie in Fig. 1 infolge von temperaturbedingten Aenderungen der Differenz zwischen den Lichtweglängen der beiden aus der Aufteilung der primären Lichtwelle hervorgehenden Lichtwellen) auftreten, und aus diesem Grunde sind auch Messeinrichtungen wie in Fig. 1 mit einem in sich geschlossenen Regelkreis den eingangs erwähnten sogenannten "open-loop-circuits" weit überlegen, wenn Verfälschungen der Kompensationsgrösse und insbesondere auch der zu messenden Grösse bzw. der von dieser bewirkten, innerhalb des Regelkreises wirksamen Grösse wie z.B. mit der vorliegenden Erfindung erfolgreich verhindert werden können. Allerdings ist zu beachten, dass bei allen geschlossenen Regelkreisen naturgemäss die Gefahr von Regelschwingungen besteht, und diese Gefahr ist daher natürlich auch bei Messeinrichtungen wie in Fig. 1 insbesondere dann nicht auszuschliessen, wenn die an den Ausgängen der Demodulatoren 14 und 15 stehenden analogen Regelgrössen analog weiterverarbeitet werden bzw. wenn der Regelverstärker 16 und die an seinen Ausgang angeschlossenen Steuermittel 18 analoge Verstärkungs- und Schaltmittel sind und damit der gesamte in sich geschlossene Regelkreis ein analoger Regelkreis ist, weil bei einem analogen in sich geschlossenen Regelkreis die zu Regelschwingungen führende Ringkopplung nicht unterbrochen werden kann, aber natürlich gibt es auch für analoge in sich geschlossene Regelkreise aus der Regeltechnik bekannte Massnahmen zur Verhinderung von Regelschwingungen, so dass hier davon ausgegangen werden kann, dass das in Fig. 2 gezeigte Ausführungsbeispiel des elektrischen Teiles 4 der Messeinrichtung in Fig. 1 mit analogem Regelverstärker 16 und analogen Steuermitteln 18 ebenso gut funktioniert wie mit dem bei der ersten Ausführung verwendeten digitalen Regelverstärker 16 und den zugeordneten digitalen Steuermitteln 18, die als digitale Schaltkreise in einem ansonsten analogen in sich geschlossenen Regelkreis eine Unterbrechung der besagten Ringkopplung darstellen und daher bei geeigneter Betriebsweise Regelschwingungen von vornherein ausschliessen. Bezüglich des Ausgangssignals des Regelverstärkers 16, das ja wie oben erläutert proportional zu der zu messenden Grösse bzw. der von dieser bewirkten, innerhalb des Regelkreises wirksamen Grösse sein muss, ist schliesslich noch zu bemerken, dass diesem der zu messenden Grösse proportionalen Ausgangssignal natürlich additiv noch ein konstanter Signalgrundwert hinzugefügt werden kann, der allerdings dann für die Bestimmung des Messwertes der zu messenden Grösse entweder in den Steuermitteln 18 oder in den Ausgabemitteln 19 entsprechend wieder abgezogen werden muss. So kann beispielsweise im Falle, dass das Ausgangssignal des Regelverstärkers 16 ein Ausgangsstrom ist und der optische Teil 1 der Messeinrichtung in Fig. 1 wie in Fig. 6 oder 7 ausgebildet ist und somit gemäss den obigen Ausführungen die Spannungsquelle 23 eine Gleichspannungsquelle mit in Höhe und Vorzeichen veränderlicher Spannung ist und der von den Widerständen 24 und 25 gebildete Spannungsteiler wegfällt, der sich in der Nullstellung der Messeinrichtung einstellende Grundwert des Ausgangsstromes des Regelverstärkers 16 so bemessen werden, dass er an einem die Spannungsquellen 20, 21 und 23 ersetzenden ohmschen Wistand genau die Summe der beiden festen Spannungswerte der Spannungsquellen 20 und 21 erzeugt, wobei an die Stelle der Spannungsquelle 20 dieser ohmsche Widerstand und an die Stelle der Spannungsquellen 21 und 23 Kurzschlüsse treten und die Steuermittel 18 lediglich eine Verbindung ihres Einganges mit ihren beiden Ausgängen enthalten und die Ausgangsleitung 26 der Steuermittel 18 an die Verbindungsleitung 27 angeschlossen ist. Das eigentliche Ausgangssignal des Regelverstärkers 16 ist in diesem Falle eine gegenüber dem Grundwert des Ausgangsstromes positive oder negative Veränderung des Ausgangsstromes in dem Masse, dass diese Ausgangsstromänderung an dem ohmschen Widerstand eine Spannungsänderung von gleicher Höhe und gleichem Vorzeichen wie denen der Spannung der ersetzten Spannungsquelle 23 erzeugt, und da nur dieses eigentliche Ausgangssignal des Regelverstärkers 16 proportional zu der zu messenden Grösse bzw. der von dieser bewirkten, innerhalb des Regelkreises wirksamen Grösse, also proportional zu der von der zu messenden Grösse bewirkten Phasenverschiebung zwischen den aus der Aufteilung der primären Lichtwelle hervorgehenden beiden Lichtwellen ist und bei dem zuvor beschriebenen Aufbau der Steuermittel 18 (Verbindung des Einganges mit den beiden Ausgängen) am Eingang der Ausgabemittel 19 die Spannung steht, die der Ausgangsstrom des Regelverstärkers 16 an dem an die Stelle der Spannungsquelle 20 tretenden ohmschen Widerstand erzeugt, muss also innerhalb der Ausgabemittel 19 von der am Eingang derselben stehenden Spannung die von dem Grundwert des Ausgangsstromes des Regelverstärkers 16 an dem an die Stelle der Spannungsquelle 20 tretenden ohmschen Widerstand erzeugte Spannung abgezogen werden, damit die verbleibende Spannungsdifferenz proportional zu der zu messenden Grösse bzw. der von dieser bewirkten Phasendifferenz ist. Diese in den Ausgabemitteln 19 gebildete Spannungsdifferenz ist dann noch, im einfachsten Fall mit Hilfe eines Spannungsteilers, mit dem Proportionalitätsfaktor zwischen der zu messenden Grösse und dieser der zu messenden Grösse proportionalen Spannungsdifferenz zu multiplizieren und das Produkt an den Ausgang der Ausgabemittel 19 weiterzuleiten, damit auf der an den Ausgang der Ausgabemittel 19 angeschlossenen Ausgangsleitung 10 der Messeinrichtung der gemessene Wert der zu messenden Grösse liegt. Der Proportionalitätsfaktor ist dabei z.B. bei einer Ausbildung des optischen Teiles 1 der Messeinrichtung in Fig. 1 wie in Fig. 6 gleich dem Produkt aus der Wellenlänge der genannten primären Lichtwelle, der Lichtgeschwindigkeit der Lichtwellen in dem als Messorgan dienenden Lichtleiter und den Kehrwerten der Länge des als Messorgan dienenden Lichtleiters und des Wicklungsdurchmessers der von dem als Messorgan dienenden Lichtleiter gebildeten Spule sowie der für eine Phasenverschiebung der Phasenverschiebungsmittel von $2\pi$ erforderlichen Spannung der Spannungsquellen 20 bis 23, und die Spannungen der Gleichspannungsquellen 20 und 21 (bzw. der entsprechende Spannungsabfall an dem besagten ohmschen Widerstand bei dem durch den Widerstand fliessenden Grundwert des Ausgangsstromes des Regelverstärkers 16) sowie die Spannungsamplitude der Wechselspannungsquelle 22 sind bei einer Ausbildung des optischen Teiles 1 der Messeinrichtung in Fig. 1 wie in Fig. 6 oder 7 so zu bemessen, dass die Spannungsquellen 20 und 21 zusammen eine Phasenverschiebung durch die Phasenverschiebungsmittel von $1{,}75\pi$ (Quelle 20 $0{,}75\pi$ und Quelle 21 $1\pi$) und die Wechselspannungsquelle 22 bei ihrem Spannungsmaximum eine Phasenverschiebung durch die Phasenverschiebungsmittel von $0{,}8371136\pi$ bewirken.

Bei einer Ausbildung des optischen Teiles 1 der Messeinrichtung in Fig.1 wie in Fig. 5 kann im Falle, dass das Ausgangssignal des Regelverstärkers ein Ausgangsstrom ist, der sich additiv aus einem konstanten Grundwert des Ausgangsstromes und einem der zu messenden Grösse proportionalen Stromanteil zusammensetzt, die Ausbildung der Steuermittel 18 ähnlich einfach wie die sich bei Ausbildung des optischen Teiles 1 der Messeinrichtung wie in Fig. 6 oder 7 ergebende, zuvor erörterte Ausbildung der Steuermittel 18 (Verbindung des Einganges mit den beiden Ausgängen) sein. Der sich in der Nullstellung der Messeinrichtung einstellende Grundwert des Ausgangsstromes des Regelverstärkers 16 ist in diesem Fall so zu bemessen, dass er an den beiden Widerständen 24 und 25 zusammen genau den festen Spannungswert der Spannungsquelle 21 erzeugt, und die Spannungsquellen 21 und 23 sind in diesem Fall wegzulassen. Die Steuermittel 18 enthalten dann lediglich Verbindungen ihres Eingangs mit ihrem zu den Ausgabemitteln 19 führenden Ausgang sowie mit einer Ader der in diesem Fall zweiadrigen Ausgangsleitung 26 der Steuermittel 18 und ferner einen Anschluss der zweiten Ader der Ausgangsleitung 26 an die Stromversorgung des Regelverstärkers 16. Von den beiden Adern der Ausgangsleitung 26 ist die mit dem Eingang der Steuermittel 18 verbundene Ader an den Punkt 28 und die von den Steuermitteln 18 mit der Stromversorgung des Regelverstärkers verbundene Ader an den Punkt 29 angeschlossen. Zu beachten ist in diesem Fall, dass das Nullpotential nicht mehr am Punkt 30 sondern am Punkt 29 liegt und die Regelleitung 9 daher drei Adern aufweisen muss, nämlich je eine Ader zur Verbindung der Punkte 28 und 31 mit den Steuereingängen der in Fig. 5 vorgesehenen beiden Phasenmodulatoren und eine weitere Ader zur Verbindung des Punktes 30 mit den Nulleingängen derselben. Das eigentliche Ausgangssignal des Regelverstärkers 16 ist auch in diesem Fall eine gegenüber dem Grundwert des Ausgangsstromes des Regelverstärkers 16 positive oder negative Veränderung des Ausgangsstromes in dem Masse, dass die Ausgangsstromänderung an den beiden Widerständen 24 und 25 zusammen eine Spannungsänderung von gleicher Höhe und gleichem Vorzeichen wie denen der Spannung der hier weggelassenen Spannungsquelle 23 erzeugt, und daher ist auch in diesem Fall ebenso wie oben schon erläutert innerhalb der Ausgabemittel

EP 0 471 881 A1

19 eine Spannung in der Höhe der von dem Grundwert des Ausgangsstromes des Regelverstärkers 16 an den beiden Widerständen 24 und 25 erzeugten Spannung von der am Eingang der Ausgabemittel 19 liegenden, von dem Ausgangsstrom des Regelverstärkers 16 an den beiden Widerständen 24 und 25 erzeugten Spannung abzuziehen, damit die verbleibende Spannungsdifferenz proportional zu der zu messenden Grösse bzw. der von dieser bewirkten Phasendifferenz ist. Diese Spannungsdifferenz ist dann noch in gleicher Weise wie ebenfalls oben schon erläutert innerhalb der Ausgabemittel 19 mit dem oben schon angegebenen Proportionalitätsfaktor zu multiplizieren, so dass also die Ausgabemittel 19 insgesamt bei einer Ausbildung des optischen Teiles 1 der Messeinrichtung wie in Fig. 5 genauso aufgebaut sind wie bei einer Ausbildung des optischen Teiles 1 der Messeinrichtung wie in Fig. 6 oder 7. Unterschiedlich ist hingegen die Bemessung der Spannungen der Spannungsquellen 20 bis 22, denn bei einer Ausbildung des optischen Teiles 1 der Messeinrichtung wie in Fig. 5 ist die Spannung der Gleichspannungsquelle 21 (bzw. der entsprechende Spannungsabfall an den Widerständen 24 und 25 bei dem durch diese Widerstände fliessenden Grundwert des Ausgangsstromes des Regelverstärkers 16) und die Spannung der Gleichspannungsquelle 20 sowie die Spannungsamplitude der Wechselspannungsquelle 22 so zu bemessen, dass die Spannungsquelle 21 eine Phasenverschiebung durch die Phasenverschiebungsmittel von $2\pi$, die Spannungsquelle 20 eine Phasenverschiebung durch die Phasenverschiebungsmittel von $0{,}75\pi$ und die Wechselspannungsquelle 22 bei ihrem Spannungsmaximum eine Phasenverschiebung durch die Phasenverschiebungsmittel von $0{,}8371136\pi$ bewirkt.

Auch bei einer Ausbildung des optischen Teiles 1 der Messeinrichtung in Fig. 1 wie in Fig. 4 ergibt sich unter der Voraussetzung, dass erstens das Ausgangssignal des Regelverstärkers 16 wiederum ein Ausgangsstrom ist, der sich additiv aus einem konstanten Grundwert des Ausgangsstromes und einem der zu messenden Grösse proportionalen Stromanteil zusammensetzt, und zweitens die Spannungsquelle 23 wie oben schon erwähnt von einem Sägezahngenerator mit fester Amplitude und veränderlicher Grundfrequenz gebildet wird, dessen Grundfrequenz proportional zu der an seinem Steuereingang liegenden Steuerspannung ist, eine relativ einfache Ausbildung der Steuermittel 18. Der sich in der Nullstellung der Messeinrichtung einstellende Grundwert des Ausgangsstromes des Regelverstärkers 16 ist in diesem Fall so zu bemessen, dass er an einem innerhalb der Steuermittel 18 vorgesehenen, auf der einen Seite an den Eingang der Steuermittel 18 und auf der anderen Seite an die Stromversorgung des Regelstärkers 16 angeschlossenen ohmschen Widerstand eine Spannung erzeugt, die gleich dem Produkt aus dem Kehrwert des Proportionalitätsfaktors zwischen der Grundfrequenz des Sägezahngenerators und der diese Grundfrequenz steuernden, am Steuereingang des Sägezahngenerators liegenden Steuerspannung und dem Kehrwert der Laufzeit der aus der Aufteilung der primären Lichtwelle hervorgehenden beiden Lichtwellen durch den spulenförmig gewickelten als Messorgan dienenden Lichtleiter und einem das Verhältnis dieser Laufzeit zu der Schwingungsdauer der Sägezahnfunktion in der Nullstellung der Messeinrichtung festlegenden Zahlenwert $(n + 1/8)$ mit $n$ = ganze Zahl = $1,2,3\ldots$ ist, und die Spannungsquelle 21 ist in diesem Fall durch einen Kurzschluss zu ersetzen. Die Steuermittel 18 enthalten dann lediglich eine Verbindung ihres Eingangs mit ihrem zu den Ausgabemitteln 19 führenden Ausgang sowie den zuvor schon genannten, zwischen den Eingang der Steuermittel 18 und den innerhalb derselben vorgesehenen Anschluss für die Stromversorgung des Regelverstärkers 16 geschalteten ohmschen Widerstand und eine Weiterführung der beiden Adern der in diesem Fall zweiadrigen Ausgangsleitung 26 der Steuermittel 18 zu den beiden Enden dieses Widerstandes. Von den beiden Adern der Ausgangsleitung 26 ist in diesem Fall die mit dem Eingang der Steuermittel 18 verbundene Ader an den Steuereingang des Sägezahngenerators 23 und die mit dem Stromversorgungsanschluss verbundene Ader an den Punkt 29 angeschlossen, und die beiden Widerstände 24 und 25 werden bei einer Ausbildung des optischen Teiles 1 der Messeinrichtung wie in Fig. 4 wie oben schon erwähnt weggelassen. Zu beachten ist auch in diesem Fall, dass das Nullpotential nicht mehr am Punkt 30 sondern am Punkt 29 liegt und die Regelleitung 9 daher zwei Adern aufweisen muss, nämlich eine Ader zur Verbindung des Punktes 28 mit dem Steuereingang des in Fig. 4 vorgesehenen Phasenmodulators und eine weitere Ader zur Verbindung des Punktes 30 mit dem Nulleingang desselben. Das eigentliche Ausgangssignal des Regelverstärkers 16 ist auch hier wieder eine gegenüber dem Grundwert des Ausgangsstromes des Regelverstärkers 16 positive oder negative Veränderung des Ausgangsstromes in einem solchen Masse, dass die Ausgangsstromänderung an dem innerhalb der Steuermittel vorgesehenen ohmschen Widerstand eine der zu messenden Grösse bzw. der von dieser bewirkten Phasendifferenz proportionale Spannungsänderung erzeugt und der Proportionalitätsfaktor dabei das Produkt aus den Kehrwerten des Proportionalitätsfaktors zwischen Grundfrequenz und Steuerspannung des Sägezahngenerators und der Laufzeit der Lichtwellen durch den als Messorgan dienenden Lichtleiter sowie des Phasenverschiebungsbezugswertes $2\pi$ ist. Da am Eingang der Ausgabemittel 19 in diesem Fall die an dem ohmschen Widerstand in den Steuermitteln 18 abfallende Spannung liegt, ist auch hier wieder innerhalb der Ausgabemittel 19 eine Spannung in der Höhe der von dem Grundwert des Ausgangsstromes des Regelverstärkers 16 an dem

20

ohmschen Wistand in den Steuermitteln 18 erzeugten Spannung von der am Eingang der Ausgabemittel 19 liegenden Spannung abzuziehen, damit die verbleibende Spannungsdifferenz proportional zu der zu messenden Grösse bzw. der von dieser bewirkten Phasendifferenz ist. Die Weiterbehandlung dieser Spannungsdifferenz innerhalb der Ausgabemittel 19 erfolgt in gleicher Weise wie oben im Zusammenhang mit Ausbildungen des optischen Teiles 1 der Messeinrichtung wie in den Figuren 5, 6 und 7 beschrieben, und auch der innere Aufbau der Ausgabemittel 19 kann bei allen vier in den Figuren 4 bis 7 gezeigten Ausbildungen des optischen Teiles 1 der Messeinrichtung der gleiche sein. Von den Spannungsquellen 20 bis 23 des in Fig. 2 gezeigten Ausführungsbeispiels des elektrischen Teiles 4 der Messeinrichtung in Fig. 1 ist bei einer Ausbildung des optischen Teiles 1 derselben wie in Fig. 4 die Spannungsquelle 21 wie schon erwähnt durch einen Kurzschluss ersetzt, und die Spannungsquelle 23 wird wie ebenfalls schon erwähnt von einem Sägezahngenerator gebildet, dem an seinem Steuereingang über die Ausgangsleitung 26 der Steuermittel 18 die über dem ohmschen Widerstand in den Steuermitteln 18 abfallende Spannung zur Steuerung der Schwingungsdauer T bzw. der veränderlichen Grundfrequenz 1/T der Sägezahnfunktion zugeführt wird und dessen konstante Amplitude gleich der für eine Phasenverschiebung der Phasenver-schiebungsmittel von $2\pi$ erforderlichen Spannung ist und der (unter der theoretischen Voraussetzung einer Rücksprungzeit Null) eine zeitabhängige Phasenverschiebung durch die Phasenverschiebungsmittel nach der oben schon erwähnten Sägezahnfunktion

$$\frac{\varphi}{2\pi} = \frac{t}{T} - \left|\frac{t}{T}\right|_{Integer}$$

bewirkt. Die Spannungsamplitude der Wechselspannungsquelle 22 und die Spannung der Gleichspannungsquelle 20 sind im vorliegenden Fall so bemessen, dass die Wechselspannungsquelle 22 bei ihrem Spannungsmaximum eine Phasenverschiebung durch die Phasenverschiebungsmittel von $0,8371136\pi$ und die Gleichspannungsquelle 20 eine demgegenüber grössere Phasenverschiebung durch die Phasenver-schiebungsmittel von zweckmässig beispielsweise $1\pi$ bewirkt.

Bei dem in Fig. 3 gezeigten Ausführungsbeispiel des elektrischen Teiles 4 der in Fig. 1 gezeigten Messeinrichtung umfassen die Auswertungsmittel zur Auswertung des dem Eingang 5 des elektrischen Teiles 4 über die Verbindungsleitung 3 vom Ausgang 2 des optischen Teiles 1 der in Fig. 1 gezeigten Messeinrichtung zugeführten elektrischen Signals den frequenzgesteuerten Wechselschalter 32 mit zugeordneter Steuerleitung 33 zur Zuführung der Steuerwechselspannung, die beiden eingangsseitig an je einen der beiden Ausgänge des Wechselschalters 32 angeschlossenen Spitzengleichrichter 34 und 35 sowie die beiden eingangsseitig an den Ausgang von je einem der beiden Spitzengleichrichter 34 und 35 angeschlossenen Kondensatoren 36 und 37 als Mittel zur Bildung von zwei Regelgrössen, die in unterschiedlicher Weise von den Phasenverschiebungen abhängen, die von den im optischen Teil 1 vorgesehenen Phasenverschiebungsmitteln bewirkt werden, und den Regelverstärker 38 mit dem parallel zu seinem Eingang geschalteten ohmschen Widerstand 39 als Mittel zur analogen oder digitalen rechnerischen Verarbeitung der Regelgrössen (im vorliegenden Ausführungsbeispiel zum analogen Vergleich der Regelgrössen bzw. rechnerisch ausgedrückt zur analogen Bildung der Differenz derselben) sowie zur Gewinnung eines Regelsignals zur Regelung der Steuermittel 40 aus dem Verarbeitungsergebnis (im vorliegenden Ausführungsbeispiel des das Regelsignal bildenden Ausgangssignals des Regelverstärkers 38). Die von den Auswertungsmitteln geregelten Steuermittel zur Steuerung der im optischen Teil 1 der Messeinrichtung vorgesehenen Phasenverschiebungsmittel sowie zur Steuerung der Ausgabemittel 41 zur Ausgabe des Messwertes der zu messenden physikalischen Grösse umfassen bei dem in Fig. 3 gezeigten Ausführungsbeispiel des elektrischen Teiles 4 der in Fig. 1 gezeigten Messeinrichtung in vollständig äquivalenter Weise wie bei dem Ausführungsbeispiel in Fig. 2 neben den Steuermitteln 40 noch die beiden auf feste Spannungswerte eingestellten Gleichspannungsquellen 42 und 43, die eine feste Amplitude und eine feste Frequenz aufweisende Wechselspannungsquelle 44 und die von den Steuermitteln 40 gesteuerte, veränderliche Spannungen abgebende Spannungsquelle 45 (die bei einer Ausbildung des optischen Teiles 1 der Messeinrichtung wie in einer der Figuren 5 bis 7 von einer Gleichspannungsquelle mit in Höhe und Vorzeichen veränderlicher Spannung gebildet wird) sowie den von den beiden gleichgrossen ohmschen Widerständen 46 und 47 gebildeten Spannungsteiler zur Halbierung der Spannungssumme der von den beiden Spannungsquellen 43 und 45 abgegebenen Spannungen.

Wie schon ein Vergleich der Figuren 2 und 3 zeigt, unterscheidet sich das in Fig. 3 gezeigte Ausführungsbeispiel des elektrischen Teiles 4 der Messeinrichtung in Fig. 1 in seinem inneren Aufbau von dem Ausführungsbeispiel in Fig. 2 nur in den Auswertungsmitteln, also der unterschiedlichen Ausbildung der Auswertungsmittel 11 bis 15 in Fig. 2 und der Auswertungsmittel 32 bis 37 in Fig. 3, während die Figuren 2 und 3 in ihrem gesamten übrigen inneren Aufbau gleich sind,und entsprechend ist auch die prinzipielle Funktionsweise der Ausführungsbeispiele in den Figuren 2 und 3 abgesehen von den unterschiedlichen Auswertungsmitteln und dadurch bedingten unterschiedlichen Arbeitspunkten vollständig gleich, so dass alle oben gegebenen Erläuterungen zu Aufbau und Wirkungsweise der Teile 16 bis 31 in Fig. 2 in gleicher Weise auch für die Teile 38 bis 47 der Fig. 3 gelten und daher eine lediglich auf die Fig. 3 anstatt auf die Fig. 2 bezogene Wiederholung dieser Erläuterungen nicht notwendig ist. Unterschiedlich sind bei den Figuren 2 und 3 aufgrund der genannten unterschiedlichen Arbeitspunkte lediglich die Spannungen (und Steuerspannungen) der Spannungsquellen 42 bis 45 in Fig. 3 gegenüber den Spannungen (und Steuerspannungen) der Spannungsquellen 20 bis 23 in Fig. 2, denn während bei dem Ausführungsbeispiel in Fig. 2 die Spannungen der Spannungsquellen 20 bis 23 so bemessen sind, dass die von ihnen bewirkten Phasenverschiebungen bei einem optischen Teil 1 wie in Fig. 4 in der gleichen Reihenfolge $1\pi$ ; $0\pi$; $0,8371136\pi \cdot \cos\omega_m t$; $0,25\pi$-$\phi_s$; bei einem optischen Teil 1 wie in Fig. 5 in der gleichen Reihenfolge $0,75\pi$; $2\pi$; $-0,8371136\pi \cdot \cos\omega_m t$; $\phi_s$ ; bei einem optischen Teil 1 wie in Fig. 6 in der gleichen Reihenfolge $0,75\pi$; $1\pi$; $-0,8371136\pi \cdot \cos\omega_m t$; $\phi_s$ ; und bei einem optischen Teil 1 wie in Fig. 7 in der gleichen Reihenfolge $0,75\pi$; $1\pi$; $-0,8371136\pi \cdot \cos\omega_m t$; $\phi_s$; mit $\omega_m$ = Kreisfrequenz der Wechselspannungsquelle 22 und $\phi_s$ = von der zu messenden Grösse bewirkte Phasendifferenz sind und bei einem optischen Teil 1 wie in Fig. 4 der die Steuerspannung auf der Leitung 26 bestimmende Zahlenwert (n + ⅛) ist, sind bei dem Ausführungsbeispiel in Fig. 3 die Spannungen der Spannungsquellen 42 bis 45 so bemessen, dass die von ihnen bewirkten Phasenverschiebungen bei einem optischen Teil 1 wie in Fig. 4 in der gleichen Reihenfolge $1\pi$; $0\pi$; $0,5\pi \cdot \sin\omega_m t$; $\pi$-$\phi_s$; bei einem optischen Teil 1 wie in Fig. 5 in der gleichen Reihenfolge $0\pi$; $2\pi$; $-0,5\pi \cdot \sin\omega_m t$;$\phi_s$; bei einem optischen Teil 1 wie in Fig. 6 in der gleichen Reihenfolge $0\pi$; $1\pi$;$-0,5\pi \cdot \sin\omega_m t$;$\phi_s$; und bei einem optischen Teil 1 wie in Fig. 7 in der gleichen Reihenfolge $0\pi$; $1\pi$;$-0,5\pi \cdot \sin\omega_m t$;$\phi_s$; sind und bei einem optischen Teil 1 wie in Fig. 4 der die Steuerspannung auf der Leitung 26 bestimmende Zahlenwert (n + ½) ist. Die bisher noch nicht näher erläuterte Wirkungsweise der Auswertungsmittel 11 bis 15 bzw. 32 bis 37 in den Ausführungsbeispielen in Fig. 2 und 3 und die durch die unterschiedlichen Arbeitspunkte bedingte unterschiedliche Ausbildung derselben ergibt sich aus den folgenden Erläuterungen zur Wirkungsweise der in den Figuren 4 bis 7 gezeigten Ausführungsbeispiele für den inneren Aufbau des optischen Teiles 1 der in Fig. 1 gezeigten Messeinrichtung.

Bei den in den Figuren 4 bis 7 gezeigten Ausführungsbeispielen des inneren Aufbaus des optischen Teiles 1 der in Fig. 1 gezeigten Messeinrichtung umfasst das Ausführungsbeispiel in Fig. 4 die interferenzfähiges Licht abgebende Lichtquelle 48, den Polarisator 49, den als Mittel zur Aufteilung der von Lichtquelle 48 gelieferten primären Lichtwelle in zwei Lichtwellen und gleichzeitig als Mittel zur Wiedervereinigung dieser beiden Lichtwellen dienenden Lichtwellenkoppler 50, die von dem als Messorgan dienenden Lichtleiter gebildete,zur Drehratenmessung dienende Lichtleiterspule 51,den von dem elektrischen Teil 4 der Messeinrichtung gesteuerten Phasenmodulator 52, den zur Auskopplung der aus der Wiedervereinigung der beiden Lichtwellen hervorgehenden Gesamtlichtwelle dienenden Lichtwellenkoppler 53, den zur Bestimmung der Intensität der Gesamtlichtwelle dienenden Detektor 54 und den als Speichermittel zur Speicherung des jeweils vor Beginn des Rücksprunges einer den Phasenmodulator 52 steuernden Sägezahnfunktion vom Detektor 54 abgegebenen Detektorausgangssignals über die Rücksprungzeit dienenden Kondensator 55. Das Ausführungsbeispiel des optischen Teiles 1 in Fig. 5 umfasst die Lichtquelle 56, den Polarisator 57, den als Mittel zur Aufteilung der von der Lichtquelle 56 gelieferten primären Lichtwelle in zwei Lichtwellen dienenden Lichtwellenkoppler 58, den zur Phasenverschiebung der einen dieser beiden Lichtwellen dienenden Phasenmodulator 59, die zur Phasenverschiebung der anderen dieser beiden Lichtwellen dienende Kombination aus dem Phasenmodulator 60 und den mittels der beiden Lichtwellenkoppler 61 und 62 zum Phasenmodulator 60 parallelgeschalteten Dämpfungsmitteln 63, die zum Dämpfungsausgleich auf den beiden Lichtwegen der beiden Lichtwellen dienenden Dämpfungsmittel 64, die von dem als Messorgan dienenden Lichtleiter gebildete, zur Drehratenmessung dienende Lichtleiterspule 65 mit durch Wicklungskörper mit temperaturunabhängigem Durchmesser und unter Vorspannung gewickeltem Lichtleiter erzielter temperaturunabhängiger Lichtleiterlänge, den zur Einkopplung der Lichtleiterspule 65 in den Lichtweg der einen Lichtwelle dienenden Lichtwellenkoppler 66, den als Mittel zur Wiedervereinigung der beiden Lichtwellen dienenden Lichtwellenkoppler 67, den zur Bestimmung der Intensität der aus der Wiedervereinigung der beiden Lichtwellen hervorgehenden Gesamtlichtwelle dienenden Detektor 68 sowie vorzugsweise als Mittel zur Erzielung und temperaturunabhängigen Aufrechterhaltung gleicher wirksamer Lichtweglängen auf den beiden Lichtwegen der beiden Lichtwellen das in Fig. 5 gestrichelt eingefügte Korrekturglied 69, für das vorteilhaft der in Fig. 8 gezeigte Messgrössenwandler verwendet werden kann. Das Ausführungsbeispiel des optischen Teiles 1 in Fig. 6 umfasst die Lichtquelle 70, den Polarisator 71, den als Mittel zur Aufteilung der von der Lichtquelle 70 gelieferten primären Lichtwelle in zwei Lichtwellen dienenden Lichtwellenkoppler 72, den zur Phasenverschiebung der einen dieser beiden Lichtwellen dienenden Phasenmodulator 73, die zum Dämpfungsausgleich auf den beiden Lichtwegen der beiden Lichtwellen dienenden Dämpfungsmittel 74, die von dem als Messorgan dienenden Lichtleiter gebildete, zur Drehratenmessung dienende Lichtleiterspule 75, die zur Einkopplung der beiden Lichtleiterenden der Lichtleiterspule 75 in die beiden Lichtwege der beiden Lichtwellen dienenden Lichtwellenkoppler 76 und 77, den als Mittel zur Wiedervereinigung der beiden Lichtwellen dienenden Lichtwellenkoppler 78, den zur Bestimmung der Intensität der aus der Wiedervereinigung der beiden Lichtwellen hervorgehenden Gesamtlichtwelle dienenden Detektor 79 sowie vorzugsweise als Mittel zur Erzielung und temperaturunabhängigen Aufrechterhaltung gleicher Lichtweglängen auf den beiden Lichtwegen der beiden Lichtwellen das in Fig. 6 gestrichelt eingefügte Korrekturglied 80, für das vorteilhaft der in Fig. 8 gezeigte Messgrössenwandler verwendet werden kann. Das Ausführungsbeispiel des optischen Teiles 1 in Fig. 7 schliesslich umfasst die Lichtquelle 81, den als Mittel zur Aufteilung der von der Lichtquelle 81 gelieferten primären Lichtwelle in zwei Lichtwellen dienenden Lichtwellenkoppler 82, den zur Phasenverschiebung der einen dieser beiden Lichtwellen dienenden Phasenmodulator 83, die zum Dämpfungsausgleich auf den beiden Lichtwegen der beiden Lichtwellen dienenden Dämpfungsmittel 84, den je einen als Messorgan dienenden Lichtleiter in jedem der beiden Lichtwege der beiden Lichtwellen und Mittel zur gegensinnigen Veränderung der Längen dieser beiden Lichtleiter enthaltenden,in Fig.8 gezeigten Messgrössenwandler 85,den als Mittel zur Wiedervereinigung der beiden Lichtwellen dienenden Lichtwellenkoppler 86,den zur Bestimmung der Intensität der aus der Wiedervereinigung der beiden Lichtwellen hervorgehenden Gesamtlichtwelle dienenden Detektor 87 sowie gegebenenfalls den in den Lichtweg der primären Lichtwelle einzuschaltenden, in Fig. 7 gestrichelt dargestellten Polarisator 88.

Die Wirkungsweise der in den Figuren 4 bis 7 gezeigten Ausführungsbeispiele des optischen Teiles 1 der in Fig. 1 gezeigten Messeinrichtung und der angeschlossenen Auswertungsmittel im elektrischen Teil 4 der Messeinrichtung ist im folgenden unter der Voraussetzung erläutert, dass die Dämpfungen der aus der Aufteilung der primären Lichtwelle hervorgehenden beiden Lichtwellen auf ihren beiden Lichtwegen gleichgross sind und hierzu die Dämpfungen der Dämpfungsmittel 64, 74 und 84 entsprechend eingestellt sind und dass die wirksamen Lichtweglängen auf den beiden Lichtwegen (unter Ausschluss der den Phasenverschiebungen in den Phasenmodulatoren 52, 59, 60, 73 und 83 entsprechenden Lichtweglängen sowie der voraussetzungsgemäss temperaturunabhängigen Lichtweglänge durch die Lichtleiterspule 65) gleichgross sind bzw. durch entsprechende Einjustierung des Korrekturgliedes 69 oder 80 oder des Messgrössenwandlers 85 gleichgross gemacht worden sind. Unter dieser Voraussetzung ergibt sich für die Erläuterung der Wirkungsweise die Vereinfachung, dass die Amplituden der beiden Lichtwellen auf den beiden Lichtwegen bei der Erläuterung nicht berücksichtigt werden brauchen sondern nur die Phasen der beiden Lichtwellen längs der beiden Lichtwege zu berücksichtigen sind.

Bei dem Ausführungsbeispiel in Fig. 4 liefert die Lichtquel-48 eine primäre Lichtwelle mit $\sin(\omega t-\phi_0)$, die sich in Richtung der in Fig. 4 angegebenen Pfeile fortpflanzt. An den Stellen 89 haben die aus der Aufteilung dieser primären Lichtwelle hervorgehenden beiden Lichtwellen noch die gleiche Phase $\sin(\omega t-\phi_0)$. An der Stelle 90 hat die eine der beiden Lichtwellen nach Passieren des eine Phasenverschiebung $\phi_1(t)$ bewirkenden Phasenmodulators 52 die Phase und an der Stelle 91 hat die gleiche Lichtwelle nach dem eine Laufzeit $T_L$ in Anspruch nehmenden Passieren der Lichtleiterspule 51 und der dabei von der zu messenden Grösse bewirkten Phasenverschiebung $\phi_s/2$ die Phase $\sin(\omega(t-T_L)-\phi_0-\phi_1(t)-\phi_s/2)$.

Die andere der beiden Lichtwellen hat nach dem eine Laufzeit $T_L$ in Anspruch nehmenden Passieren der Lichtleiterspule 51 und der dabei von der zu messenden Grösse bewirkten Phasenverschiebung $-\phi_s/2$ an der Stelle 92 die Phase $\sin(\omega(t-T_L)-\phi_0 + \phi_s/2)$ und nach Passieren des eine Phasenverschiebung $\phi_1(t-T_L)$ bewirkenden Phasenmodulators 52 an der Stelle 93 dann die Phase $\sin(\omega(t-T_L)-\phi_0 + \phi_s/2-\phi_1(t-T_L))$.

Da $\phi_0$ frei wählbar ist, kann man nun willkürlich festsetzen $\phi_0 = -\omega T_L-\phi_1(t)-\phi_s/2$ und erhält damit an der Stelle 91 die eine Lichtwelle mit $\sin\omega t$ und an der Stelle 93 die andere Lichtwelle mit $\sin(\omega t + \phi_s + \phi_1(t)-\phi_1(t-T_L))$ und somit nach Wiedervereinigung der beiden Lichtwellen an der Stelle 94 die Gesamtlichtwelle mit $\sin\omega t + \sin(\omega t + \phi_s + \phi_1(t)-\phi_1(t-T_L))$ bzw. mit der Definition $\Phi = \phi_s + \phi_1(t)-\phi_1(t-T_L)$ an der Stelle 95 die Gesamtlichtwelle $\sin\omega t + \sin(\omega t + \phi)$, die sich mit $\sin(\omega t + \phi) = \sin\omega t \cdot \cos\phi + \cos\omega t \cdot \sin\phi$ auch in der Form $(1 + \cos\phi)\sin\omega t + \sin\phi\cos\omega t$ darstellen lässt und daher die Amplitude $\sqrt{(1 + \cos\phi)^2 + \sin^2\phi}$ hat. Zur Bestimmung ihrer Intensität wird diese Gesamtlichtwelle im Detektor 54 quadriert, wobei $\sin^2\omega t$ und $\cos^2\omega t$ zu dem mit dem Amplitudenquadrat zu multiplizierenden Faktor $\frac{1}{2}$ führen, so dass sich am Ausgang des Detektors 54 die Intensität $\frac{1}{2}((1 + \cos\phi)^2 + \sin^2\phi) = \frac{1}{2}(1 + 2\cos\phi + \cos^2\phi + \sin^2\phi) = \frac{1}{2}(2 + 2\cos\phi) = 1 + \cos\phi$ ergibt. Diese Intensität wird dann jeweils über die Rücksprungzeiten des den Phasenmodulator 52 steuernden Sägezahngenerators noch durch den Kondensator 55 geglättet und in dieser geglätteten Form über die Verbindungleitung 3 an den Eingang 5 des elektrischen Teiles 4 der Messeinrichtung in Fig. 1 weitergegeben. In diesem Zusammenhang ist hier noch zu bemerken, dass diese Glättung nur dann optimal funktioniert, wenn Lade- und Entladezeitkonstante des Kondensators 55 wesentlich grösser als die Rücksprungzeit und wesentlich kleiner als die Perioden- bzw. Schwingungsdauer des Sägezahngenerators sind, und dass bei dem in Fig. 4 gezeigten Ausführungsbeispiel des optischen Teiles 1 der Messeinrichtung diese Bedingungen durch den ausgangsseitigen Innenwiderstand des Detektors 54 und den zu dem Kondensator 55 parallelgeschalteten ohmschen Eingangswiderstand des elektrischen Teiles 4 der Messeinrichtung erfüllt sein sollen, dass aber im Falle von fehlender oder nur mangelhafter Erfüllung dieser Bedingungen durch den Innenwiderstand des Detektors 54 und/oder den Eingangswiderstand des elektrischen Teiles 4 diese Widerstände zur besseren Erfüllung dieser Bedingungen noch durch einen oder mehrere zusätzliche, parallel zu dem Kondensator 55 und/oder zwischen den Kondensator 55 und den Ausgang des Detektors 54 geschaltete Widerstände zu ergänzen sind.

Bei dem in Fig. 5 gezeigten Ausführungsbeispiel des optischen Teiles 1 der Messeinrichtung liefert die Lichtquelle 56 eine primäre Lichtwelle mit $\sin(\omega t - \phi_0)$,

die sich in Richtung der in Fig. 5 angegebenen Pfeile fortpflanzt. An den Stellen 96 haben die aus der Aufteilung dieser primären Lichtwelle hervorgehenden Lichtwellen noch die gleiche Phase $\sin(\omega t - \phi_0)$.

An der Stelle 97 hat die dort laufende Lichtwelle nach Passieren des eine Phasenverschiebung $\phi_2$ bewirkenden Phasenmodulators 59 die Phase $\sin(\omega t - \phi_0 - \phi_2)$

und wird anschliessend durch den Lichtwellenkoppler 66 nochmals in zwei Lichtwellen aufgeteilt, die in entgegengesetzter Richtung durch die Lichtleiterspule 65 laufen und von denen die eine nach dem eine Laufzeit $T_L$ in Anspruch nehmenden Passieren der Lichtleiterspule 65 und der dabei von der zu messenden Grösse bewirkten Phasenverschiebung $\phi_s/2$ an der Stelle 98 die Phase $\sin(\omega(t - T_L) - \phi_0 - \phi_2 - \phi_s/2)$

und die andere nach dem eine Laufzeit $T_L$ in Anspruch nehmenden Passieren der Lichtleiterspule 65 und der dabei von der zu messenden Grösse bewirkten Phasenverschiebung $-\phi_s/2$ an der Stelle 99 die Phase $\sin(\omega(t - T_L) - \phi_0 - \phi_2 + \phi_s/2)$

hat und die sich dann über den Lichtwellenkoppler 66 in Richtung auf den Lichtwellenkoppler 67 zu zur Stelle 100 fortpflanzen. Die andere der beiden aus der Aufteilung dar primären Lichtwelle hervorgehenden Lichtwellen wird durch den Lichtwellenkoppler 61 ebenfalls nochmals in zwei Lichtwellen aufgeteilt, von denen die eine nach Passieren des eine Phasenverschiebung $\phi_1$ bewirkenden Phasenmodulators 60 an der Stelle 101 die Phase $\sin(\omega t - \phi_0 - \phi_1)$

und die andere nach Passieren des die gleiche Dämpfung wie der Phasenmodulator 60 aufweisenden Dämpfungsgliedes 63 an der Stelle 102 die Phase $\sin(\omega t - \phi_0)$

hat und die sich dann über den Lichtwellenkoppler 62 und das eine der Dämpfung der Lichtleiterspule 65 zuzüglich der Differenz der Dämpfungen der Phasenmodulatoren 59 und 60 entsprechende Dämpfung aufweisende Dämpfungsglied 64 in Richtung auf den Lichtwellenkoppler 67 zu zur Stelle 103 fortpflanzen. Die vier Lichtwellen an den Stellen 100 und 103 mit den Phasen $\sin(\omega t - \phi_0 - \phi_1)$ $\sin(\omega t - \phi_0)$, $\sin(\omega(t - TL) - \phi_0 - \phi_2 + \phi_s/2)$

und $\sin(\omega(t - TL) - \phi_0 - \phi_2 - \phi_s/2)$

haben die gleiche Amplitude, so dass sich unter der Voraussetzung $\omega T_L = 2k\pi$ und $\phi_2 = \phi_1 - \phi_s/2 - \pi$ bei der Vereinigung der vier Lichtwellen in dem Lichtwellenkoppler 67 zwei der vier Lichtwellen gegenseitig aufheben und sich an der Stelle 104 daher unter der weiteren Voraussetzung $\phi_0 = 0$ eine Gesamtlichtwelle mit $\sin\omega t + \sin(\omega t - \phi_2 + \phi_s/2)$

ergibt, die mit der Definiton $\phi = -\phi_2 + \phi_s/2 = \phi_s + \pi - \phi_1$

die gleiche Form $\sin\omega t + \sin(\omega t + \phi)$ wie die Gesamtlichtwelle bei dem in Fig. 4 gezeigten Ausführungsbeispiel des optischen Teiles 1 der Messeinrichtung hat und daher am Ausgang des Detektors 68 auch zu der gleichen Intensität $1 + \cos\phi$ führt. Zu bemerken ist zu dem Ausführungsbeispiel in Fig. 5 noch, dass ein optimalen Funktionieren dieses Ausführungsbeispiels die schon erwähnte temperaturunabhängige Lichtleiterlänge der Lichtleiterspule 65 und Identität der beiden Phasenmodulatoren 59 und 60 zur Voraussetzung hat.

Bei dem in Fig. 6 gezeigten Ausführungsbeispiel des optischen Teiles 1 der Messeinrichtung liefert die Lichtquelle 70 eine primäre Lichtwelle mit $\sin(\omega t - \phi_0)$,

die sich in Richtung der in Fig. 6 angegebenen Pfeile fortpflanzt. An den Stellen 105 haben die aus der Aufteilung dieser primären Lichtwelle hervorgehenden beiden Lichtwellen noch die gleiche Phase $\sin(\omega t - \phi_0)$.

An der Stelle 106 hat die eine der beiden Lichtwellen nach Passieren des eine Phasenverschiebung $\phi_1$ bewirkenden Phasenmodulators 73 die Phase $\sin(\omega t - \phi_0 - \phi_1)$

und an den Stellen 107 hat die gleiche Lichtwelle nach dem eine Laufzeit $T_L$ in Anspruch nehmenden Passieren der Lichtleiterspule 75 und der dabei von der zu messenden Grösse bewirkten

Phasenverschiebung$-\phi_s/2$ die Phase $\sin(\omega(t-T_L)-\phi_o-\phi_1 + \phi_s/2)$.

Die andere der beiden Lichtwellen hat nach Passieren des die gleiche Dämpfung wie der Phasenmodulator 73 aufweisenden Dämpfungsgliedes 74 an der Stelle 108 die Phase $\sin(\omega t-\phi_o)$

und nach dem eine Laufzeit $T_L$ in Anspruch nehmenden Passieren der Lichtleiterspule 75 und der dabei von der zu messenden Grösse bewirkten Phasenverschiebung $+\phi_s/2$ an den Stellen 109 die Phase $\sin(\omega(t-T_L)-\phi_o-\phi_s/2)$.

Da $\phi_o$ wie schon erwähnt frei wählbar ist, kann man nun willkürlich festsetzen $\phi_o = -\omega T_L-\phi_s/2$

und erhält damit an den Stellen 107 die eine Lichtwelle mit $\sin(\omega t + \phi_s-\phi_1)$

und an den Stellen 109 die andere Lichtwelle mit $\sin\omega t$ und somit nach der Wiedervereinigung der beiden Lichtwellen an der Stelle 110 die Gesamtlichtwelle mit $\sin\omega t + \sin(\omega t + \phi_s-\phi_1)$,

die mit der Definition $\phi = \phi_s-\phi_1$ wiederum die gleiche Form $\sin\omega t + \sin(\omega t + \phi)$ wie die Gesamtlichtwelle bei dem in Fig. 4 gezeigten Ausführungsbeispiel des optischen Teiles 1 der Messeinrichtung hat und daher am Ausgang des Detektors 79 ebenfalls zu der gleichen Intensität $1 + \cos\phi$ führt.

Bei dem in Fig. 7 gezeigten Ausführungsbeispiel des optischen Teiles 1 der Messeinrichtung liefert die Lichtquelle 81 eine primäre Lichtwelle mit $\sin(\omega t-\phi_o)$,

die sich in Richtung der in Fig. 7 angegebenen Pfeile fortpflanzt. An den Stellen 111 haben die aus der Aufteilung dieser primären Lichtwelle hervorgehenden beiden Lichtwellen noch die gleiche Phase $\sin(\omega t-\phi 0)$.

An der Stelle 112 hat die eine der beiden Lichtwellen nach Passieren des eine Phasenverschiebung $\phi_1$ bewirkenden Phasenmodulators 83 die Phase $\sin(\omega t-\phi 0-\phi 1)$

und an der Stelle 113 hat die gleiche Lichtwelle nach Passieren der einen Lichtleitermessstrecke in dem in Fig. 8 gezeigten Messgrössenwandler und der dabei von der zu messenden Grösse bewirkten Phasenverschiebung $-\phi_s/2$ die Phase $\sin(\omega t-\phi_o-\phi_1 + \phi_s/2)$.

Die andere der beiden Lichtwellen hat nach Passieren des die gleiche Dämpfung wie der Phasenmodulator 83 aufweisenden Dämpfungsgliedes 84 an der Stelle 114 die Phase $\sin(\omega t-\phi_o)$

und nach Passieren der anderen Lichtleitermessstrecke in dem in Fig. 8 gezeigten Messgrössenwandler und der dabei von der zu messenden Grösse bewirkten Phasenverschiebung $+\phi_s/2$ an der Stelle 115 die Phase $\sin(\omega t-\phi_o-\phi_s/2)$.

Mit Festsetzung des frei wählbaren $\phi_o$ zu $\phi_o = -\phi_s/2$

erhält man damit an der Stelle 113 die eine Lichtwelle mit $\sin(\omega t + \phi_s-\phi_1)$

und an der Stelle 115 die andere Lichtwelle mit $\sin\omega t$ und somit nach der Wiedervereinigung der beiden Lichtwellen an der Stelle 116 die Gesamtlichtwelle mit $\sin\omega t + \sin(\omega t + \phi s-\phi 1)$,

die mit der Definition $\Phi = \phi_s-\phi_1$

auch wiederum die gleiche Form $\sin\omega t + \sin(\omega t + \Phi)$ wie die Gesamtlichtwelle bei dem in Fig. 4 gezeigten Ausführungsbeispiel des optischen Teiles 1 der Messeinrichtung hat und daher am Ausgang des Detektors 87 ebenfalls zu der gleichen Intensität $1 + \cos\Phi$ führt.

Wie die obigen Ausführungen zeigen, ist das Detektorausgangssignal $1 + \cos\Phi$ und damit das Ausgangssignal des optischen Teiles 1 der Messeinrichtung bei allen vier in den Figuren 4 bis 7 gezeigten Ausführungsbeispielen des optischen Teiles 1 gleich, und wie die für die einzelnen Ausführungsbeispiele geltenden obigen Definitionen von $\Phi$ (Bsp.4: $\Phi = \phi_s + \phi_1(t)-\phi 1(t-T_L)$; Bsp.5: $\Phi = \phi_s + \pi-\phi_1$; Bsp.6 + 7: $\Phi = \phi_s-\phi_1$)

in Verbindung mit den oben angegebenen Phasenverschiebungen $\phi_1$ bzw. Phasenverschiebungsdifferenzen $\phi_1(t)-\phi_1(t-T_L)$,

die von den Spannungsquellen 20 bis 23 in Fig.2 (Bsp.4: $\phi_1(t)-\phi_1(t-T_L) = 0{,}8371136\pi \cdot \cos\omega_m t + 0{,}25\pi-\phi_s$; Bsp.5: $\phi_1 = 0{,}75\pi + 2\pi-0{,}8371136\pi \cdot \cos\omega_m t + \phi_s$; Bsp.6 + 7: $\phi_1 = 0{,}75\pi + 1\pi -0{,}8371136\pi \cdot \cos\omega_m t + \phi_s$)

bzw. von den Spannungsquellen 42 bis 45 in Fig.3 (Bsp.4: $\phi_1(t-T_L) = 0{,}5\pi \cdot \sin\omega_m t + \pi-\phi_s$; Bsp.5: $\phi 1 = 2\pi-0{,}5\pi \cdot \sin\omega_m t + \phi_s$; Bsp.6 + 7: $\phi_1 = 1\pi-0{,}5\pi \cdot \sin\omega_m t + \phi_s$)

bewirkt werden,

weiter zeigen, ist bei gleicher Ausbildung des elektri schen Teiles des Messeinrichtung auch die Phase $\Phi$ in dem Detektorausgangssignal $1 + \cos\Phi$ bei allen vier in den Figuren 4 bis 7 gezeigten Ausführungsbeispielen des optischen Teiles 1 gleich, nämlich bei einer Ausbildung des elektrischen Teiles 4 der Messeinrichtung wie in Fig. 2 gleich $\Phi = 0{,}8371136\pi \cdot \cos\omega_m t + 0{,}25\pi$ und bei einer Ausbildung des elektrischen Teiles 4 der Messeinrichtung wie in Fig. 3 gleich $\phi = 0{,}5\pi \cdot \sin\omega_m t + \pi$ , so dass sich also als Detektorausgangssignal $1 + \cos\Phi$ und damit als Ausgangssignal des optischen Teiles 1 und gleichzeitig als Eingangssignal des elektrischen Teiles 4 der Messeinrichtung bei einer Ausbildung des elektrischen Teiles 4 wie in Fig. 2 ein $1 + \cos\Phi = 1 + \cos(0{,}8371136\pi \cdot \cos\omega_m t + 0{,}25\pi)$ proportionales Signal und bei einer Ausbildung des elektrischen Teiles 4 wie in Fig. 3 ein $1 + \cos\Phi = 1 + \cos(0{,}5\pi \cdot \sin\omega_m t + \pi)$ proportionales Signal ergibt. Eine Besselfunktionsentwicklung dieser Eingangssignale zeigt nun, dass das Eingangssignal bei einem elektrischen Teil 4 wie in Fig. 2 zwei Signalkomponenten von gleicher Amplitude enthält, nämlich die Komponenten mit $\omega_m$ und $2\omega_m$ bzw. mit der Grundfrequenz und der ersten Oberwelle der Wechselspannungsquelle 2, und bei einem elektrischen Teil 4 wie in Fig. 3 als Gesamtsignal jeweils in Zeitabständen von einer halben Schwingungsdauer der Wechselspannungsquelle 44 die gleiche Maximalamplitude hat, und daher werden bei einem elektrischen Teil 4 wie in Fig. 2 die beiden Signalkomponenten mit $\omega_m$ und $2\omega_m$ mit den Filtern 12 und 13 ausgesiebt und mit den Demodulatoren 14 und 15 die Amplituden der beiden Signalkomponenten und mittels des die Ausgänge derselben verbindenden Widerstandes 17 dann die Differenz der beiden Amplituden bestimmt, und bei einem elektrischen Teil 4 wie in Fig. 3 wird das Eingangssignal mittels des von der Wechselspannungsquelle 44 jeweils beim Nulldurchgang der Wechselspannung umgeschalteten Wechselschalters 32 wechselweise jeweils einer der beiden von den Spitzengleichrichtern 34 und 35 und den Kondensatoren 36 und 37 gebildeten, die Maximalamplitude des Eingangssignals während der jeweils eine halbe Schwingungsdauer der Wechselspannungsquelle 44 dauernden Durchschaltdauer des Wechselschalters 32 bestimmenden Spitzengleichrichterschaltungen zugeführt und mittels des die Kondensatoren 36 und 37 verbindenden Widerstandes 39 dann die Differenz der an den beiden Kondensatoren liegenden Maximalamplituden des Eingangssignals bestimmt. Die an dem Widerstand 17 bzw. 39 liegende Amplitudendifferenz bildet nun das Eingangssignal des Regelverstärkers 16 bzw. 38, und da diese Amplitudendifferenz wegen der gleichen Amplituden der beiden Signalkomponenten mit $\omega_m$ und $2\omega_m$ bzw. wegen der gleichen Maximalamplituden des Eingangssignals in Zeitabständen von einer halben Schwingungsdauer der Wechselspannungsquelle 44 gleich Null ist, ist somit das Eingangssignal des Regelverstärkers 16 bzw. 38 praktisch Null, womit die Regelbedingung für den in sich geschlossenen Regelkreis erfüllt ist. Verändert sich nun die zu messende Grösse bzw. die von dieser bewirkte Phasenverschiebung $\phi_s$ um $\Delta\phi_s$, dann verändert sich die Phase $\Phi$ des Eingangssignals im ersten Moment ebenfalls um $\Delta\phi_s$, da $\Phi$ ja gemäss den oben angegebenen Definitionen gleich $\Phi = \phi_s + f(\phi_1)$ ist und die ursächlich vom Ausgangssignal des Regelverstärkers bewirkte Phasenverschiebung $\phi_1$ im ersten Moment unverändert bleibt, und mit dieser Veränderung von $\Phi$ um $\Delta\phi_s$ ergibt sich als Eingangssignal bei einem elektrischen Teil 4 wie in Fig. 2 ein $1 + \cos(0{,}8371136\pi \cdot \cos\omega_m t + 0{,}25\pi + \Delta\phi_s)$ proportionales Signal und bei einem elektrischen Teil 4 wie in Fig. 3 ein $1 + \cos(0{,}5\pi \cdot \sin\omega_m t + \eta + \Delta\phi_s)$ proportionales Signal und somit eine momentane Verschiebung des Arbeitspunktes von $0{,}25\pi$ auf $0{,}25\pi + \Delta\phi s$ bzw. von $\pi$ auf $\pi + \Delta\phi_s$, und wie die oben schon erwähnte Besselfunktionsentwicklung zeigt, ergibt sich in diesem Fall eine gegensinnige Aenderung der Amplituden der beiden Signalkomponenten mit $\omega_m$ und $2\omega_m$ bzw. der im Abstand von einer Schwingungsdauer der Wechselspannungsquelle 44 auftretenden Maximalamplituden des Eingangssignals und damit eine von Null verschiedene Amplitudendifferenz an dem Widerstand 17 bzw. 39, so dass das Eingangssignal der Regelverstärkers 16 bzw. 38 momentan verschieden von Null wird und der Regelverstärker infolgedessen eine Nachregelung von $\phi_1$ in einem solchen Masse bewirkt, dass das Eingangssignal des Regelverstärkers wieder praktisch Null wird und die Regelbedingung für den in sich geschlossenen Regelkreis damit wieder erfüllt ist. Zu bemerken ist in diesem Zusammenhang, dass die in den Figuren 2 und 3 dargestellten Ausführungsbeispiele des elektrischen Teiles 4 der in Fig. 1 gezeigten Messeinrichtung, bei denen ja nur zwei Komponenten des Eingangssignals zur Erfüllung der Regelbedingung eines praktisch Null betragenden Eingangssignals des Regelverstärkers verarbeitet werden, im Prinzip die einfachsten Ausbildungsformen des elektrischen Teiles 4 darstellen und dass man auch mehr als zwei Komponenten des Eingangssignals des elektrischen Teiles 4 zur Erfüllung der Regelbedingung eines praktisch Null betragenden Eingangssignals des Regelverstärkers verwenden kann und mit Hilfe der zusätzlich verwendeten Komponenten dann auch Erkenntnisse über eventuelle Fehlerquellen innerhalb der Messeinrichtung (wie z.B. über die oben schon erwähnten möglichen Aenderungen des Proportionalitätsfaktors zwischen Kompensationsgrösse und Ausgangssignal des Regelverstärkers aufgrund von Toleranzen der Phasenverschiebungsmittel) gewinnen und damit die von diesen Fehlerquellen verursachten Fehler bei der Bildung des Eingangssignals des Regelverstärkers kompensieren kann.

Abschliessend ist zu den in den Figuren 2 und 3 gezeigten Ausführungsbeispielen des elektrischen Teiles 4 der in Fig. 1 gezeigten Messeinrichtung noch zu erläutern, wie die Spannungen der Spannungsquellen 20 bis 23 in Fig. 2 und 42 bis 45 in Fig. 3 zu bemessen sind, damit dieselben die oben für die einzelnen Ausführungsbeispiele in den Figuren 4 bis 7 angegebenen Phasenverschiebungen bewirken. Die Bestimmung der Spannungen für die Ausführungsbeispiele in den Figuren 5 bis 7 ist dabei sehr einfach, weil dort nur die von der betreffenden Spannung bewirkte Phasenverschiebung durch 2 zu dividieren und mit der für eine Phasenverschiebung der Phasenverschiebungsmittel von $2\pi$ erforderlichen Spannung zu multiplizieren ist, um die Höhe der betreffenden Spannung zu erhalten. Etwas komplizierter ist die Bestimmung hingegen für das Ausführungsbeispiel in Fig. 4, weil die bewirkte Phasenverschiebung in diesem Fall gleich $\phi1(t) - \phi1(t - T_L)$

ist und man daher erst nach Bildung dieser Phasenverschiebungsdifferenz eine Aussage über die Höhe der betreffenden Spannung machen kann. Zur Bildung dieser Phasenverschiebungsdifferenz geht man zweckmässig von der oben schon erwähnten (unter der theoretischen Voraussetzung einer Rücksprungzeit Null geletenden) Sägezahnfunktion

$$\frac{\varphi}{2\pi} = \frac{t}{T} - \left|\frac{t}{T}\right|_{Integer}$$

aus und kann damit für die von den Phasenverschiebungsmitteln bewirkte zeitabhängige Phasenverschiebung $\phi_1(t)$ unter Berücksichtigung der von der Wechselspannungsquelle 22 bzw. 44 bewirkten Phasenverschiebung ansetzen:

$$\varphi_1(t) = 2\pi(\frac{t}{T} - \left|\frac{t}{T}\right|_{Int}) + A\cdot\sin(\omega_m t - \varphi_m) + \varphi_{10} \quad . \quad \text{Für}$$

$\varphi_1(t-T_L)$ ergibt sich mit diesem Ansatz der Phasenverschiebung:

$$\varphi_1(t-T_L) = 2\pi(\frac{t-T_L}{T} - \left|\frac{t-T_L}{T}\right|_{Int}) + A\cdot\sin(\omega_m(t-T_L)-\varphi_m) + \varphi_{10} \quad ,$$

und für die Phasenverschiebungsdifferenz $\phi_1(t)-\phi_1(t-T_L)$
ergibt sich dann mit den Definitionen

$$\frac{T_L}{T} = p + \xi \quad ; \quad \frac{t}{T} = q + \eta$$

mit p,q = ganze Zahlen und $0 \leq \xi < 1$ ; $0 \leq \eta < 1$
sowie der Beziehung

$$\sin(\omega_m t-\varphi_m)-\sin(\omega_m(t-T_L)-\varphi_m)=2\cdot\sin\frac{\omega_m T_L}{2}\cdot\cos(\omega_m t-(\varphi_m+\frac{\omega_m T_L}{2})) \quad \text{daraus}$$

$$\varphi_1(t)-\varphi_1(t-T_L) = 2\pi(\xi \begin{smallmatrix} +0 \\ -1 \end{smallmatrix}) + 2A\cdot\sin\frac{\omega_m T_L}{2}\cdot\cos(\omega_m t-(\varphi_m+\frac{\omega_m T_L}{2})) \quad .$$

Zur Erzielung einer optimalen Modulation wird nun in jedem Fall zweckmässig

$$\sin\frac{\omega_m T_L}{2} = 1 \quad \text{bzw.} \quad \frac{\omega_m T_L}{2} = \frac{\pi}{2} \quad \text{bzw.} \quad f_m = 1/2T_L$$

gewählt, und für $\xi$ , $A, \phi_m$ und $\phi_{10}$ gilt bei den obigen Ausführungsbeispielen für einen optischen Teil 1 wie in Fig. 4 und einen elektrischen Teil 4 wie in Fig.2

$$\xi = \frac{1}{8} - \frac{\varphi_s}{2\pi} \quad ;$$

$\phi_m = -\frac{\pi}{2}$ ; $\phi_{10} = \pi$ und
A = $0,4185568\pi$ und für einen optischen Teil 1 wie in Fig. 4 und einen elektrischen Teil 4 wie in Fig.3

$$\xi = \frac{1}{2} - \frac{\varphi_s}{2\pi} \quad ;$$

$\phi_m = 0$ ; $\phi_{10} = \pi$ und A = $0,25\pi$ , so dass sich also bei einem elektrischen Teil 4 wie in Fig. 2 für die Phasenverschiebungsdifferenz $\phi_1(t)-\phi_1(t-T_L) = \frac{\pi}{4} - \phi s + 0,8371136\pi\cdot\cos\omega_m t$ und bei einem elektrischen Teil 4 wie in Fig. 3 für die Phasenverschiebungsdifferenz $\phi_1(t)-\phi_1(t-T_L) = \pi - \phi_s + 0,5\pi\cdot\sin\omega_m t$ ergibt. Für die

Spannungen der Spannungsquellen 20 bis 23 in Fig. 2 bzw. 42 bis 45 in Fig. 3 ergibt sich damit bei einem optischen Teil 1 wie in Fig. 4 aus der obigen Zeitfunktion für die zeitabhängige Phasenverschiebung $\phi_1(t)$ sowie den oben angegebenen Werten für A und den weiter oben angegeben, von diesen Spannungen bewirkten Phasenverschiebungen, dass die Spannung der Gleichspannungsquelle 20 gleich dem 0,5-fachen und der Gleichspannungsquelle 21 gleich dem 0-fachen, die Amplitude der Wechselspannungsquelle 22 gleich dem 0,2092784-fachen, die Maximalamplitude der von einem Sägezahngenerator gebildeten Spannungsquelle 23 gleich dem 1-fachen, die Spannung der Gleichspannungsquelle 42 gleich dem 0,5-fachen und der Gleichspannungsquelle 43 gleich dem 0-fachen, die Amplitude der Wechselspannungsquelle 44 gleich dem 0,125-fachen und die Maximalamplitude der von einem Sägezahngenerator gebildeten Spannungsquelle 45 gleich dem 1-fachen der für eine Phasenverschiebung der Phasenverschiebungsmittel von $2\pi$ erforderlichen Spannung zu machen ist.

Die Fig. 8 zeigt ein Ausführungsbeispiel für das prinzipielle Aufbauschema des in Fig. 7 enthaltenen Messgrössenwandlers 85 sowie der in den Figuren 5 und 6 vorzugsweise enthaltenen Korrekturglieder 69 bzw. 80. Das in Fig. 8 gezeigte Aufbauschema eines solchen Messgrössenwandlers bzw. Korrekturgliedes umfasst das kinematische Getriebe 117 mit vier über Gelenke 118 bis 121 zu einem gleichseitigen Viereck miteinander verbundenen Gliedern 122 bis 125 und Mittel zur Ausübung von Zugkräften auf jedes der vier Gelenke 118 bis 121 mit je einer nach aussen in die Umgebung des Vierecke weisenden, wenigstens annähernd die Richtung der bei dem betreffenden Gelenk endenden Diagonalen des Vierecks aufweisenden Kraftresultanten in Form von vier Zugfedern 126 bis 129 zwischen den vier Gelenken 118 bis 121 und vier in der Umgebung des Getriebes 117 angeordneten kraftschlüssig miteinander verbundenen Aufhängungspunkten 130 bis 133 sowie einen zwischen zwei diagonal gegenüberliegende Gelenke 118 und 120 des Getriebes 117 unter Vorspannung gespannten Lichtleiter 134 und einen anderen zwischen die anderen beiden diagonal gegenüberliegenden Gelenke 119 und 121 des Getriebes 117 unter Vorspannung gespannten Lichtleiter 135 und Mittel zur Veränderung der Zugkräfte in Form von Mitteln zur Veränderung der Lage von mindestens einem 133 der Aufhängungspunkte 130 bis 133 relativ zu den übrigen Aufhängungspunkten 130 bis 132 bzw. in Form des in den Kraftübertragungsweg der auf das Gelenk 121 wirkenden Zugkraft eingeschalteten Verbindungsgliedes 136 mit veränderbarer Länge. Die Vorspannung der beiden Lichtleiter 134 und 135 ist so bemessen, dass Längenänderungen der Lichtleiter bei Temperaturerhöhungen durch entsprechenden Rückgang ihrer elastischen Dehnung und bei Temperaturrückgang durch entsprechende Erhöhung ihrer elastischen Dehnung kompensiert werden und Längenänderungen der Lichtleiter infolge Veränderungen des Abstandes der diagonal gegenüberliegenden Gelenke 118 und 120 bzw. 119 und 121 in den Bereich der elastischen Dehnung der Lichtleiter 134 und 135 fallen. Der Lichtleiter 134 ist auf seiner einen Seite bis zum Eingang 137 und auf seiner anderen Seite bis zum Ausgang 138 und der Lichtleiter 135 entsprechend auf seiner einen Seite bis zum Eingang 139 und auf seiner anderen Seite bis zum Ausgang 140 des Messgrössenwandlers bzw. Korrekturgliedes verlängert. Das Verbindungsglied 136 stellt im Prinzip einen internen zusätzlichen Messgrössenwandler dar, mit dem eine dem Verbindungsglied 136 zugeführte physikalische Grösse 141 wie z.B. eine Temperaturänderung in Längenänderungen des Verbindungsgliedes 136 umgesetzt wird. Zum Zwecke des Nullabgleichs ist der Aufhängungspunkt 131 zweckmässig in Achsrichtung der Zugfeder 127 z.B. mittels einer über ein Schneckengetriebe angetriebenen Stellschraube mit Feingewinde verstellbar. Bei einer Gewindeganghöhe der Stellschraube von 0,5 mm und einer Uebersetzung des Schneckengetriebes von 1:140 lässt sich dabei eine Einstellgenauigkeit von bis zu 0,01 $\mu$m pro Grad Drehung des Antriebes des Schneckengetriebes und bei einem Antrieb desselben mit einem weiteren Schneckengetriebe sogar eine Einstellgenauigkeit von ca. 0,0001 $\mu$m pro Grad Drehung des Antriebes erreichen. Eine praktische Ausbildungsform des in Fig. 8 schematisch dargestellten Messgrössenwandlers bzw. Korrekturgliedes kann beispielsweise einen ringförmigen Rahmen mit einem über dem Abstand der Gelenke 118 und 120 bzw. 119 und 121 liegenden Innendurchmesser und einem etwa dem Abstand der Aufhängungspunkte 130 und 132 bzw. 131 und 133 entsprechenden Aussendurchmesser und vier im Winkelabstand von 90° angeordneten, zur Aufnahme der Zugfedern 126 bis 129 vorgesehenen radialen Löchern von grösserem Lochdurchmesser als dem Durchmesser der Zugfedern sowie drei sich am äusseren Umfang des Rahmens jeweils über den Löchern abstützenden, mit Durchbrüchen zum Einhängen der Zugfedern versehenen Platten und einer im vierten Loch angeordneten, zum Nullabgleich vorgesehenen Stellschraube sowie einem Schneckengetriebe zum Antrieb derselben umfassen, wobei z.B. die gegenüber der Stellschraube angeordnete Platte aus einem Material mit anderem Temperaturkoeffizienten als dem der anderen beiden Platten bestehen und damit das in Fig. 8 schematisch dargestellte Verbindungsglied 136 bilden kann. Zur prinzipiellen Wirkungsweise von Messgrössenwandlern bzw. Korrekturgliedern mit einem schematischen Aufbau wie in Fig. 8 und den Vorteilen und Anwendungsmöglichkeiten derselben wird auf die obigen diesbezüglichen allgemeinen Ausführungen verwiesen. Im Prinzip verändert sich bei Veränderung der Lage des Aufhängungspunktes 133 relativ zu den übrigen Aufhängungspunkten 130 bis 132 der

EP 0 471 881 A1

Abstand der Gelenke 119 und 121 und damit die Länge des zwischen dieselben gespannten Lichtleiters 134, und gleichzeitig damit ergibt sich eine gegensinnige Veränderung des Abstandes der Gelenke 118 und 120 und damit der Länge des zwischen dieselben gespannten Lichtleiters 135, und die gegensinnigen Längenänderungen der Lichtleiter 134 und 135 bewirken dem Verhältnis dieser Längenänderungen $\Delta l$ zur Wellenlänge $\lambda$ des Lichtes der Lichtwellen entsprechende Phasenverschiebungen von je $\phi_s/2 = 2\pi \cdot \Delta l/\lambda$ der Lichtwellen. Es sei abschliessend noch darauf hingewiesen, dass Messgrössenwandler wie in Fig. 8 auch bei einem Aufbau des optischen Teiles 1 der Messeinrichtung ähnlich dem in Fig. 4 gezeigten verwendet werden können, wobei an die Stelle der Lichtleiterspule 51 der in Fig. 8 gezeigte Messgrössenwandler mit seinen eingangsseitigen Anschlüssen 137 und 139 tritt und der Phasenmodulator 52 zwischen die beiden Ausgänge 138 und 140 des Messgrössenwandler in Fig. 8 zu schalten wäre. Mit einem solchen Aufbau lassen sich beispielsweise ausserordentlich empfindliche Beschleunigungsmesser realisieren, wie sie z.B. zu Navigationszwecken benötigt werden.

**Patentansprüche**

1. Einrichtung zum Messen einer physikalischen Grösse, deren Aenderungen direkt oder über Messgrössenwandler (85) indirekt Veränderungen der Lichtweglängen durch als Messorgane dienende Lichtleiter bewirken, mit einer interferenzfähiges Licht abgebenden Lichtquelle (48;56;70;81), Mitteln zur Aufteilung (50;58;72;82) einer von der Lichtquelle gelieferten primären strahlenförmigen Lichtwelle in mindestens zwei strahlenförmige Lichtwellen, zur Führung von mindestens einer der beiden Lichtwellen durch einen als Messorgan dienenden Lichtleiter, zur Verschiebung der Phase von mindestens einer der beiden Lichtwellen und zur Wiedervereinigung (50; 67;78;86) der beiden Lichtwellen nach Durchlaufen des bzw. der als Messorgane (51;65;75;134,135) dienenden Lichtleiter und der Phasenverschiebungsmittel (52;59,60;73;83), einem Detektor (54;68;79;87) zur Bestimmung der Intensität der aus der Wiedervereinigung der beiden Lichtwellen hervorgehenden, der Ueberlagerung der miteinander interferierenden beiden Lichtwellen entsprechenden Gesamtlichtwelle, Auswertungsmitteln (11-17;32-39) zur Auswertung des Detektorausgangssignals und von den Auswertungsmitteln geregelten Steuermitteln (18,20-31;40,42-47) zur Steuerung der Phasenverschiebungsmittel auf von der zu messenden physikalischen Grösse abhängige Phasenverschiebungen von mindestens der zur Phasenverschiebung vorgesehenen einen der beiden Lichtwellen sowie zur Steuerung von Ausgabemitteln (19;41) zur Ausgabe des dem Ausgangssignal der Steuermittel bzw. den dadurch von den Phasenverschiebungsmitteln bewirkten Phasenverschiebungen entsprechenden Messwertes der zu messenden physikalischen Grösse, dadurch gekennzeichnet, dass die Auswertungsmittel (11-17;32-39) Mittel (12-15;32-37) zur Bildung von mindestens zwei in unterschiedlicher Weise von den durch die Phasenverschiebungsmittel bewirkten Phasenverschiebungen abhängigen Regelgrössen und Mittel (16,17;38,39) zur analogen oder digitalen rechnerischen Verarbeitung der Regelgrössen sowie zur Gewinnung eines Regelsignals zur Regelung der Steuermittel (18,20-31;40,42-47) aus dem Verarbeitungsergebnis umfassen.

2. Einrichtung nach Anspruch 1, dadurch gekennzeichnet, dass die Mittel (12-15;32-37) zur Bildung der Regelgrössen zwei Regelgrössen bilden und die Mittel (16,17;38,39) zur Verarbeitung der Regelgrössen Mittel (17;39) zum Vergleich der beiden Regelgrössen umfassen.

3. Einrichtung nach Anspruch 1 oder 2, dadurch gekennzeichnet, dass die Phasenverschiebungsmittel einen Phasenmodulator (52;59,60;73;83) für Lichtwellen umfassen, bei dem die Phasenverschiebung bzw. die Phasendifferenz zwischen der der Phase einer Lichtwelle beim Erreichen des Phasenmodulators und der Phase dieser Lichtwelle beim Verlassen des Phasenmodulators durch eine an einen Steuereingang des Phasenmodulators angelegte elektrische Spannung steuerbar ist, und dass von den Steuermitteln (18,20-31;40,42-47) zur Steuerung der Phasenverschiebungsmittel an den Steuereingang (8) des Phasenmodulators eine sich aus einer Ueberlagerung mehrerer elektrischer Spannungen ergebende zeitabhängige Steuerspannung angelegt wird, die als Komponenten eine von der zu messenden physikalischen Grösse abhängige, im wesentlichen die mittlere Phasenverschiebung gegenüber einem Phasenverschiebungsgrundwert bestimmende zweite elektrische Spannung (23;45) und eine eine Modulation der Phasenverschiebung um die mittlere Phasenverschiebung herum bewirkende dritte elektrische Spannung (22;44) und vorzugsweise eine einen konstanten Grundwert der Phasenverschiebung bewirkende erste elektrische Spannung (20,21;42,43) umfasst, und dass von den Steuermitteln (18;40) zur Steuerung der Ausgabemittel eine im wesentlichen von den Bestimmungsgrössen der genannten zweiten elektrischen Spannung abhängige Steuergrösse an die Ausgabemittel (19;41) abgegeben wird.

29

4. Einrichtung nach Anspruch 3, dadurch gekennzeichnet, dass die Auswertungsmittel (11-17) Filtermittel (12,13) zum Ausfiltern von mindestens zwei verschiedenen Signalkomponenten mit Frequenzen vom n- und m-fachen der Modulationsfrequenz der dritten elektrischen Spannung, vorzugsweise mit n = 1 und m = 2, aus dem Detektorausgangssignal und Demodulationsmittel (14,15) zur Gewinnung der Amplituden der ausgefilterten Signalkomponenten umfassen und die Amplituden der ausgefilterten Signalkomponenten die Regelgrössen bilden.

5. Einrichtung nach Anspruch 3, dadurch gekennzeichnet, dass die Auswertungsmittel (32-39) Speichermittel (36,37) für die beiden Regelgrössen und von der dritten elektrischen Spannung (44) gesteuerte Schaltmittel (32) zu einer mit der Modulation durch die dritte elektrische Spannung abwechselnden Beaufschlagung der Speichermittel (36,37) über Spitzengleichrichtungsmittel (34,35) mit dem Detektorausgangssignal umfassen und gleichartige Extremwerte des Detektorausgngssignals während der Modulationsphasen mit einerseits über und andererseits unter der mittleren Phasenverschiebung liegenden Phasenverschiebungen die beiden Regelgrössen bilden.

6. Einrichtung nach einem der Ansprüche 3 bis 5, dadurch gekennzeichnet, dass die erste elektrische Spannung (20,21;42, 43) eine zeitunabhängige konstante Gleichspannung, die vorzugsweise nur zu Justierzwecken verstellbar ist, und die dritte elektrische Spannung (22;44) eine Sinusspannung mit zeitunabhängiger konstanter Amplitude und zeitunabhängiger konstanter Frequenz ist.

7. Einrichtung nach einem der Ansprüche 3 bis 6, dadurch gekennzeichnet, dass die zweite elektrische Spannung (23;45) eine Gleichspannung mit veränderlicher von der zu messenden physikalischen Grösse abhängiger Höhe ist und die Steuermittel zur Steuerung der Phasenverschiebungsmittel und der Ausgabemittel Mittel zur Bildung einer die zweite elektrische Spannung bildenden Gleichspannung mit von Höhe und Vorzeichen des Regelsignals abhängiger Höhe sowie zur Bildung einer von der Höhe der die zweite elektrische Spannung bildenden Gleichspannung abhängigen Steuergrösse zur Steuerung der Ausgabemittel (19;41) umfassen.

8. Einrichtung nach einem der Ansprüche 3 bis 6, dadurch gekennzeichnet, dass die zweite elektrische Spannung eine Sägezahnspannung mit zeitunabhängiger konstanter Amplitude und einer veränderlichen, von der zu messenden physikalischen Grösse abhängigen Schwingungsdauer bzw. Grundfrequenz ist und diese Grundfrequenz vorzugsweise bei jedem innerhalb des Messbereiches der Messeinrichtung liegenden Messwert der zu messenden physikalischen Grösse wesentlich grösser als die zur Bildung der Regelgrössen dienenden Frequenzen ist und dass die Steuermittel zur Steuerung der Phasenverschiebungsmittel und der Ausgabemittel Mittel (18,23;40,45) zur Erzeugung einer die zweite elektrische Spannung bildenden Sägezahnspannung mit von Höhe und Vorzeichen des Regelsignals abhängiger Schwingungsdauer bzw. Grundfrequenz sowie zur Bildung einer von dieser Schwingungsdauer bzw. Grundfrequenz abhängigen Steuergrösse zur Steuerung der Ausgabemittel (19;41) umfassen.

9. Einrichtung zum Messen einer physikalischen Grösse, deren Aenderungen direkt oder über Messgrössenwandler indirekt Veränderungen der Lichtweglängen durch als Messorgane dienende Lichtleiter bewirken, mit einer interferenzfähiges Licht abgebenden Lichtquelle (48), Mitteln zur Aufteilung (50) einer von der Lichtquelle gelieferten primären strahlenförmigen Lichtwelle in mindestens zwei strahlenförmige Lichtwellen, zur Führung von mindestens einer der beiden Lichtwellen durch einen als Messorgan dienenden Lichtleiter, zur Verschiebung der Phase von mindestens einer der beiden Lichtwellen und zur Wiedervereinigung (50) der beiden Lichtwellen nach Durchlaufen des bzw. der als Messorgane (51) dienenden Lichtleiter und der Phasenverschiebungsmittel (52), einem Detektor (54) zur Bestimmung der Intensität der aus der Wiedervereinigung der beiden Lichtwellen hervorgehenden, der Ueberlagerung der miteinander interferierenden beiden Lichtwellen entsprechenden Gesamtlichtwelle, Auswertungsmitteln (11-17;32-39) zur Auswertung des Detektorausgangssignals und von den Auswertungsmitteln geregelten Steuermitteln (18,20-31;40,42-47) zur Steuerung der Phasenverschiebungsmittel auf von der zu messenden physikalischen Grösse abhängige Phasenverschiebungen von mindestens der zur Phasenverschiebung vorgesehenen einen der beiden Lichtwellen sowie zur Steuerung von Ausgabemitteln (19;41) zur Ausgabe des dem Ausgangssignal der Steuermittel bzw. den dadurch von den Phasenverschiebungsmitteln bewirkten Phasenverschiebungen entsprechenden Messwertes der zu messenden physikalischen Grösse, wobei die Steuerung der Phasenverschiebungsmittel (52) durch die Steuermittel eine Steuergrösse umfasst, die eine nach einer Sägezahnfunktion mit zeitunabhängiger konstanter Amplitude und veränderlicher von der zu messenden Grösse abhängiger Schwingungsdauer verlaufende Phasenverschiebung bewirkt, dadurch gekennzeichnet, dass zwischen dem Ausgang des Detektors (54) und dem Eingang (5) der Auswertungsmittel (11-17;32-39) Speichermittel (55) zur Speicherung des jeweils vor Beginn des Rücksprunges der Sägezahnfunktion vom Detektor (54) abgegebenen Detektorausgangssignals über die Rücksprungzeit vorgesehen sind.

10. Einrichtung nach Anspruch 9, dadurch gekennzeichnet,dass die Speichermittel einen Kondensator (55) umfassen, dessen Lade- und Entladezeitkonstante wesentlich grösser als die Rücksprungzeit und vorzugsweise wesentlich kleiner als die Schwingungsdauer der Sägezahnfunktion ist und vorzugsweise unter 30% und Zweckmässig bei etwa 20% der Schwingungsdauer der Sägezahnfunktion liegt, und dass bei ungenügender Erfüllung der für Lade- und Entladezeitkonstante vorgesehenen Bedingungen durch den Innenwiderstand des Detektors (54) und/oder den Eingangswiderstand der Auswertungsmittel (11-17; 32-39) zur besseren Erfüllung ein oder mehrere zusätzliche, parallel zu dem Kondensator (55) und/oder zwischen den Kondensator (55) und den Ausgang des Detektors (54) geschaltete ohmsche Widerstände vorgesehen sind.

11. Einrichtung nach einem der Ansprüche 1 bis 8, dadurch gekennzeichnet, dass die Mittel (12-15;32-36) zur Bildung der Regelgrössen sich in Abhängigkeit von der durch die Phasenverschiebungsmittel bewirkten Phasenverschiebung derart verändernde Regelgrössen bilden, dass die Regelgrössen bei einem vorbestimmten Amplitudenverhältnis von Amplitude zu Maximalamplitude der aus der Ueberlagerung der miteinander interferierenden beiden Lichtwellen hervorgehenden Gesamtlichtwelle in bestimmten Verhältnissen zueinender stehen, vorzugsweise in der Form, dass bei dem vorbestimmten Amplitudenverhältnis zwei Regelgrössen von gleicher Höhe gebildet werden, und dass die Mittel (17;39) zur Verarbeitung der Regelgrössen Mittel zur Bildung einer bei Annäherung an das vorbestimmte Amplitudenverhältnis nach Null gehenden Regeleingangsgrösse, vorzugsweise zur Bildung einer der Differenz der bei dem vorbestimmten Amplitudenverhältnis die gleiche Höhe aufweisenden beiden Regelgrössen entsprechenden Regeleingangsgrösse, und die Mittel (16;38) zur Gewinnung eines Regelsignals aus dem Verarbeitungsergebnis einen als Multiplikator wirkenden analogen oder digitalen Regelverstärker (16;38) umfassen, dem eingangsseitig die Regeleingangsgrösse zugeführt wird und der ausgangsseitig das die Steuermittel (18,20-31;40,42-47) zur Steuerung der Phasenverschiebungsmittel regelnde Regelsignal abgibt, das sich durch entsprechende Regelung der Phasenverschiebung selbsttätig so einstellt, dass die Amplitude der Gesamtlichtwelle auf ihr vorbestimmtes Amplitudenverhältnis und damit die die Eingangsgrösse des Regelverstärkers bildende Regeleingangsgrösse auf nahezu Null bzw. auf einen dem Kehrwert des Multiplikations- bzw. Verstärkungsfaktors des Regelverstärkers (16;38) entsprechenden Bruchteil des die Ausgangsgrösse des Regelverstärkers bildenden Regelsignals eingeregelt wird.

12. Einrichtung nach einem der Ansprüche 1 bis 11, dadurch gekennzeichnet, dass die physikalische Grösse eine Bestimmungsgrösse einer Drehbewegung bzw.-bewegungskomponente eines sich bewegenden Objektes ist und der als Messorgan dienende Lichtleiter die Spulenwindungen einer mit dem Objekt in drehfester Verbindung stehenden Spule (51;65;75) mit senkrecht auf der Richtung der Drehbewegung bzw. -bewegungskomponente stehender Spulenachse bildet und von zwei von der primären Lichtwelle abgeleiteten Lichtwellen in entgegengesetzter Durchlaufrichtung durchlaufen wird.

13. Einrichtung nach Anspruch 12, dadurch gekennzeichnet,dass die Krümmung des die Spulenwindungen bildenden Lichtleiters an jeder Stelle der Spulenwicklung und insbesondere auch in Uebergangsbereichen von eine Spulenwicklungslage zur nächsten einen mindestens dem 0,25-fachen des Spulenwicklungsinnendurchmessers entsprechenden, vorzugsweise über dem 0,45-fachen desselben liegenden Krümmungsradius hat und hierzu vorzugsweise für jede Wicklungslage der Spulenwicklung ein gesonderter im wesentlichen zylindermantelförmiger Lagenwicklungsgrundkörper sowie in Uebergangsbereichen von einer Spulenlage zur nächsten vorzugsweise rampenartige Auflagemittel für den Lichtleiter zur Anhebung desselben auf die Höhe der nächsten Wicklungslage vorgesehen sind.

14. Einrichtung nach einem der Ansprüche 1 bis 13, dadurch gekennzeichnet, dass als Mittel zur Aufteilung der primären Lichtwelle sowie zur Wiedervereinigung der genannten beiden Lichtwellen ein Lichtwellen-Koppler (50) vorgesehen ist, der vorzugsweise einen aktiven sowie ienen als reflexionsfreies Ende ausgebildeten passiven Anschluss auf seiner die Zuführungsseite der primären Lichtwelle bildenden einen Seite und zwei aktive Anschlüsse auf seiner die Abführungsseite der aus der Aufteilung hervorgehenden beiden Lichtwellen und gleichzeitig die Zuführungsseite bei der Wiedervereinigung der beiden Lichtwellen bildenden anderen Seite aufweist, und dass die beiden aktiven Anschlüsse dieser anderen Seite des Kopplers (50) über den als Messorgan (51) dienenden Lichtleiter und die Phasenverschiebungsmittel (52) miteinander verbunden sind.

15. Einrichtung nach Anspruch 14, dadurch gekennzeichnet,dass zur Auskoppelung der aus der Wiedervereinigung der beiden Lichtwellen hervorgehenden Gesamtlichtwelle ein weiterer Lichtwellen-Koppler (53) vorgesehen ist, der vorzugsweise einen aktiven sowie einen als reflexionsfreies Ende ausgebildeten passiven Anschluss auf seiner die Zuführungsseite der Gesamtlichtwelle bildenden einen Seite und zwei aktive Anschlüsse auf seiner die Abführungsseite der Gesamtlichtwelle bildenden anderen Seite aufweist, und dass der aktive Anschluss auf der die Zuführungsseite der Gesamtlichtwelle bildenden einen Seite des zur Auskoppelung vorgesehenen Kopplers (53) vorzugsweise über einen Polarisator (49) mit dem aktiven Anschluss auf der die Zuführungsseite der primären Lichtwelle bildenden einen Seite des zur Aufteilung vorgesehenen Kopplers (50) verbunden ist und von den beiden aktiven Anschlüssen auf der die Abführungsseite der Gesamtlichtwelle bildenden anderen Seite des zur Auskoppelung vorgesehenen Kopplers (53) der eine mit dem Eingang des Detektors (54) und der andere mit dem Ausgang der interferenzfähiges Licht abgebenden Lichtquelle (48) verbunden ist.

16. Einrichtung nach Anspruch 14 oder 15, dadurch gekennzeichnet, dass die Gesamtlänge des als Messorgan (51) dienenden Lichtleiters in zwei verschiedene Teillängen aufgeteilt ist und die beiden Teillängen zur Erhöhung der Empfindlichkeit der Messeinrichtung auf das p-fache einer Messeinrichtung mit ungeteilter Gesamtlänge des als Messorgan dienenden Lichtleiters bei gleicher Zeitdifferenz zwischen dem Durchlauf der einen und dem Durchlauf der anderen der gleichzeitig vom Lichtwellen-Koppler (50) ausgehenden beiden Lichtwellen durch die Phasenverschiebungsmittel wie bei der Messeinrichtung mit ungeteilter Gesamtlänge des als Messorgan dienenden Lichtleiters über die Phasenverschiebungsmittel miteinander verbunden sind und die eine Teillänge das (p-1)/2-fache und die andere Teillänge das (p + 1)/2-fache der besagten ungeteilten Gesamtlänge beträgt.

17. Einrichtung nach Anspruch 14 oder 15, dadurch gekennzeichnet, dass die Gesamtlänge des als Messorgan dienenden Lichtleiters (51) in zwei verschiedene Teillängen aufgeteilt ist und die beiden Teillängen zur Verringerung der Zeitdifferenz zwischen dem Durchlauf der einen und dem Durchlauf der anderen der gleichzeitig vom Lichtwellen-Koppler (50) ausgehenden beiden Lichtwellen durch die Phasenverschiebungsmittel auf das $\frac{1}{p}$ - fache der entsprechenden, bei einer Messeinrichtung mit gleichgrosser ungeteilter Gesamtlänge des als Messorgan dienenden Lichtleiters auftretenden Zeitdifferenz über die Phasenverschiebungsmittel miteinanader verbunden sind und die eine Teillänge das $(1 - \frac{1}{p})$/2-fache und die andere Teillänge das $(1 + \frac{1}{p})$/2-fache der besagten ungeteilten Gesamtlänge beträgt.

18. Einrichtung nach einem der Ansprüche 1 bis 13, dadurch gekennzeichnet, dass als Mittel zur Aufteilung der primären Lichtwelle und zur Wiedervereinigung der aus der Aufteilung hervorgegangenen beiden Lichtwellen je ein Lichtwellen-Koppler (58,67;72,78;82,86) vorgesehen ist, wobei der zur Aufteilung vorgesehene Koppler (58;72;82) vorzugsweise einen aktiven sowie ienen als reflexionsfreies Ende ausgebildeten passiven Anschluss auf seiner die Zuführungsseite der primären Lichtwelle bildenden einen Seite und zwei aktive Anschlüsse auf seiner die Abführungsseite der aus der Aufteilung hervorgehenden beiden Lichtwellen bildenden anderen Seite und der zur Wiedervereinigung vorgesehene Koppler (67;78;86) vorzugsweise zwei aktive Anschlüsse auf seiner die Zuführungsseite bei der Wiedervereinigung der beiden Lichtwellen bildenden einen Seite und einen aktiven Anschluss sowie einen als reflexionsfreies Ende ausgebildeten passiven Anschluss auf seiner die Abführungsseite der aus der Wiedervereinigung der beiden Lichtwellen hervorgehenden Gesamtlichtwelle bildenden anderen Seite aufweist, und dass die Abführungsseite des zur Wiedervereinigung vorgesehenen Kopplers (67;78;86) mit dem Eingang des Detektors (68;79;87) verbunden ist.

19. Einrichtung nach Anspruch 18, dadurch gekennzeichnet,dass ein erster der beiden aktiven Anschlüsse der Abführungsseite des zur Aufteilung vorgesehenen Kopplers (58) über Phasenverschiebungsmittel (60) mit einem ersten der beiden aktiven Anschlüsse der Zuführungsseite des zur Wiedervereinigung vorgesehenen Kopplers (67) verbunden ist und ein zusätzlicher Lichtwellen-Koppler (66) mit je zwei aktiven Anschlüssen auf seinen beiden Seiten vorgesehen ist, dessen beide aktiven Anschlüsse auf seiner einen Seite über den als Messorgan (65) dienenden Lichtleiter miteinander verbunden sind und

32

EP 0 471 881 A1

von dessen beiden aktiven Anschlüssen auf seiner anderen Seite der eine, vorzugsweise über zusätzliche Phasenverschiebungsmittel (59), mit dem zweiten aktiven Anschluss der Abführungsseite des zur Aufteilung vorgesehenen Kopplers (58) und der andere mit dem zweiten aktiven Anschluss der Zuführungsseite des zur Wiedervereinigung vorgesehenen Koppler (67) verbunden ist.

20. Einrichtung nach Anspruch 18, dadurch gekennzeichnet,dass zwei zusätzliche Lichtwellen-Koppler (76,77) vorgesehen sind, von denen jeder vorzugsweise einen aktiven sowie einen als reflexionsfreies Ende ausgebildeten passiven Anschluss auf seiner einen Seite und zwei aktive Anschlüsse auf seiner anderen Seite aufweist, und dass die beiden zusätzlichen Koppler jeweils mit ihrem aktiven Anschluss auf der genannten einen Seite über den als Messorgan (75) dienenden Lichtleiter miteinander verbunden sind und von den beiden aktiven Anschlüssen auf der genannten anderen Seite von einem der beiden zusätzlichen Koppler (77) der eine über die Phasenverschiebungsmittel (73) mit einem der beiden aktiven Anschlüsse der Abführungsseite des zur Aufteilung vorgesehenen Kopplers (72) und der andere mit einem der beiden aktiven Anschlüsse der Zuführungsseite des zur Wiedervereinigung vorgesehenen Kopplers (78) und von den beiden aktiven Anschlüssen auf der genannten anderen Seite von dem anderen der beiden zusätzlichen Koppler (76) der eine, vorzugsweise über Dämpfungsmittel (74) mit zumindest annähernd gleicher Dämpfung wie der der Phasenverschiebungsmittel (73), mit dem anderen der beiden aktiven Anschlüsse der Abführungsseite des zur Aufteilung vorgesehenen Kopplers (72) und der andere mit dem anderen der beiden aktiven Anschlüsse der Zuführungsseite des zur Wiedervereinigung vorgesehenen Kopplers (78) verbunden ist.

21. Einrichtung nach Anspruch 18, dadurch gekennzeichnet,dass die beiden aktiven Anschlüsse auf der Abführungsseite des zur Aufteilung vorgesehenen Kopplers (58;72;82) über die Phasenverschiebungsmittel (59,60;73;83) und über den bzw. die als Messorgane (65;75;134,135) dienenden Lichtleiter sowie vorzugsweise über Dämpfungsmittel (63,64;74;84) zum Dämpfungsausgleich auf den Lichtwegen von dem zur Aufteilung vorgesehenen Koppler (58;72;82) zu dem zur Wiedervereinigung vorgesehenen Koppler (67;78;86) mit den beiden aktiven Anschlüssen auf der Zuführungsseite des zur Wiedervereinigung vorgesehenen Kopplers (67;78;86) verbunden sind.

22. Einrichtung zum Messen einer physikalischen Grösse,deren Aenderungen direkt oder über Messgrössenwandler (85) indirekt Veränderungen der Lichtweglängen durch als Messorgane dienende Lichtleiter bewirken, mit einer interferenzfähiges Licht abgebenden Lichtquelle (48;56;70;81), Mitteln zur Aufteilung (50;58;72;82) einer von der Lichtquelle gelieferten primären strahlenförmigen Lichtwelle in mindestens zwei strahlenförmige Lichtwellen, zur Führung von mindestens einer der beiden Lichtwellen durch einen als Messorgan dienenden Lichtleiter, zur Verschiebung der Phase von mindestens einer der beiden Lichtwellen und zur Wiedervereinigung (50; 67;78;86) der beiden Lichtwellen nach Durchlaufen des bzw. der als Messorgane (51;65;75;134,135) dienenden Lichtleiter und der Phasenverschiebungsmittel (52;59,60;73;83), einem Detektor (54;68;79;87) zur Bestimmung der Intensität der aus der Wiedervereinigung der beiden Lichtwellen hervorgehenden, der Ueberlagerung der miteinander interferierenden beiden Lichtwellen entsprechenden Gesamtlichtwelle, Auswertungsmitteln (11-17;32-39) zur Auswertung des Detektorausgangssignals und von den Auswertungsmitteln geregelten Steuermitteln (18,20-31;40,42-47) zur Steuerung der Phasenverschiebungsmittel auf von der zu messenden physikalischen Grösse abhängige Phasenverschiebungen von mindestens der zur Phasenverschiebung vorgesehenen einen der beiden Lichtwellen sowie zur Steuerung von Ausgabemitteln (19;41) zur Ausgabe des dem Ausgangssignal der Steuermittel bzw. den dadurch von den Phasenverschiebungsmitteln bewirkten Phasenverschiebungen entsprechenden Messwertes der zu messenden physikalischen Grösse, dadurch gekennzeichnet, dass mindestens ein Teil der die aus der Aufteilung der primären Lichtwelle hervorgehenden Lichtwellen zwischen dem Aufteilungsort und dem Ort der Wiedervereinigung dieser Lichtwellen führenden Lichtleiter (134, 135) wenigstens auf einem Teil ihrer Gesatlänge durch Vorspannung soweit elastisch gedehnt sind, dass ihre elastische Dehnung bei einer mittleren Betriebstemperatur der Messeinrichtung grösser als ihre Temperaturausdehnung im Bereich von der mittleren zur maximalen Betriebstemperatur und mindestens um ihre Temperaturausdehnung von der minimalen zur mittleren Betriebstemperatur kleiner als die Dehnung an der elastischen Dehnungsgrenze ist, so dass Längenveränderungen der Lichtleiter bei Temperaturerhöhungen durch entsprechenden Rückgang der elastischen Dehnung und bei Temperaturrückgang durch entsprechende Erhöhung der elastischen Dehnung kompensiert werden.

23. Einrichtung nach Anspruch 22, dadurch gekennzeichnet,dass sie ein kinematisches Getriebe (117) mit

33

vier über Gelenke (118-121) zu einem gleichseitigen Viereck miteinander verbundenen Gliedern (122-125) umfasst und Mittel zur Ausübung von Zugkräften auf jedes der vier Gelenke (118-121) mit je einer nach aussen in die Umgebung des Vierecks weisenden, wenigstens annähernd die Richtung der bei dem betreffenden Gelenk endenden Diagonalen des Vierecks aufweisenden Kraftresultanten vorgesehen sind, vorzugsweise in Form von vier Zugfedern (126-129) zwischen den vier Gelenken (118-121) und vier in der Umgebung des Getriebes (117) angeordneten Aufhängungspunkten (130-133), und dass ein Lichtleiter (134) zwischen zwei diagonal gegenüberliegende Gelenke (119,121) des Getriebes (135) und ein anderer Lichtleiter (135) zwischen die anderen beiden diagonal gegenüberliegenden Gelenke (118,120) des Getriebes (117) mit der genannten Vorspannung gespannt ist und eine der beiden aus der Aufteilung der primären Lichtwelle hervorgehenden Lichtwellen durch einen dieser beiden Lichtleiter (134) und die andere der beiden aus der Aufteilung hervorgehenden Lichtwellen durch den anderen der beiden Lichtleiter (135) geführt wird und dass Mittel zur Veränderung der Zugkräfte vorgesehen sind, vorzugsweise in Form von Mitteln zur Veränderung der Lage von mindestens einem (133) der Aufhängungspunkte (130-133) relativ zu den übrigen Aushängungspunkten (130-132) bzw. in Form eines in den Kraftübertragungsweg der auf eines (121) der Gelenke (118-121) wirkenden Zugkraft eingeschalteten Verbindungsgliedes (132) mit veränderbarer Länge.

24. Einrichtung nach Anspruch 23, gekennzeichnet durch eine von den Arbeitsbedingungen und insbesondere der Temperatur der Messeinrichtung abhängige derartige Steuerung der Mittel zur Veränderung der Zugkräfte, dass durch Aenderungen von Arbeitsbedingungen der Messeinrichtung und insbesondere durch Aenderungen der Temperatur der Messeinrichtung verursachte Aenderungen der Differenz zwischen den Weglängen der von den beiden aus der Aufteilung der primären Lichtwelle hervorgehenden Lichtwellen bis zu ihrer Wiedervereinigung durchlaufenen Lichtwege durch entsprechende gegensinnige Aenderungen der Differenz zwischen den Lichtweglängen durch die beiden zwischen den Gelenken (118-121) des Getriebes (117) gespannten Lichtleiter (134,135) zumindest grösstenteils kompensiert werden.

25. Einrichtung nach Anspruch 23, dadurch gekennzeichnet,dass die physikalische Grösse eine Grösse aus der Gruppe der mindestens eine der Dimensionen eines dreidimensionalen festen Objektes direkt beeinflussenden Grössen und der in solche direkt beeinflussenden Grössen umsetzbaren Grössen ist, vorzugsweise eine der zu dieser Gruppe gehörenden Grössen Temperatur, Druck, Zug, Kraft und Beschleunigung, und dass die beiden zwischen den Gelenken (118-121) des Getriebes (117) gespannten Lichtleiter (134,135) die als Messorgane dienenden Lichtleiter bilden und die Lichtweglängen durch diese beiden Lichtleiter (134,135) durch eine von der zu messenden Grösse abhängige Steuerung der genannten Zugkräfte, vorzugsweise in Form einer Steuerung der Länge eines in den Kraftübertragungsweg der auf eines der Gelenke wirkenden Zugkraft eingeschalteten Verbindungsgliedes (132), veränderbar sind.

26. Einrichtung nach einem der Ansprüche 1 bis 25, dadurch gekennzeichnet, dass in den Lichtweg zwischen der Lichtquelle (48;56;70;81) und den Mitteln (50;58;72;82) zur Aufteilung der von der Lichtquelle gelieferten primären Lichtwelle ein Polarisator (49;57;71;88) eingeschaltet ist.

27. Einrichtung zum Messen einer physikalischen Grösse,deren Aenderungen direkt oder über Messgrössenwandler (85) indirekt Veränderungen der Lichtweglängen durch als Messorgane dienende Lichtleiter bewirken, mit einer interferenzfähiges Licht abgebenden Lichtquelle (48;56;70;81), Mitteln zur Aufteilung (50;58;72;82) einer von der Lichtquelle gelieferten primären strahlenförmigen Lichtwelle in mindestens zwei strahlenförmige Lichtwellen, zur Führung von mindestens einer der beiden Lichtwellen durch einen als Messorgan dienenden Lichtleiter, zur Verschiebung der Phase von mindestens einer der beiden Lichtwellen und zur Wiedervereinigung (50; 67;78;86) der beiden Lichtwellen nach Durchlaufen des bzw. der als Messorgane (51;65;75;134,135) dienenden Lichtleiter und der Phasenverschiebungsmittel (52;59,60;73,83), einem Detektor (54;68;79;87) zur Bestimmung der Intensität der aus der Wiedervereinigung der beiden Lichtwellen hervorgehenden, der Ueberlagerung der miteinander interferierenden beiden Lichtwellen entsprechenden Gesamtlichtwelle, Auswertungsmitteln (11-17;32-39) zur Auswertung des Detektorausgangssignals und von den Auswertungsmitteln geregelten Steuermitteln (18,20-31;40,42-47) zur Steuerung der Phasenverschiebungsmittel auf von der zu messenden physikalischen Grösse abhängige Phasenverschiebungen von mindestens der zur Phasenverschiebung vorgesehenen einen der beiden Lichtwellen sowie zur Steuerung von Ausgabemitteln (19;41) zur Ausgabe des dem Ausgangssignal der Steuermittel bzw. den dadurch von den Phasenverschiebungsmitteln bewirkten Phasenverschiebungen entsprechenden Messwertes der zu messenden physikalischen Grösse, dadurch gekennzeichnet, dass jede Stelle der Lichtwege der aus der Aufteilung der primären Lichtwelle hervorgehenden beiden Lichtwellen von der Aufteilungsstelle bis zur Stelle der Wiedervereinigung der beiden Lichtwellen relativ zu jeder anderen Stelle dieser Lichtwege unbeweglich ist und hierzu sowohl die Lichtleiter zwischen den Mitteln zur Aufteilung und zur Wiedervereinigung der beiden Lichtwellen und den in die Lichtwege der beiden Lichtwellen eingeschalteten, den bzw. die als Messorgane dienenden Lichtleiter und die Phasenverschiebungsmittel umfassenden Mitteln relativ zueinander und relativ zu den Aufteilungs- und Wiedervereinigungsmitteln und den in die Lichtwege eingeschalteten Mitteln als auch die Aufteilungs- und Wiedervereinigungsmittel und die in die Lichtwege eingeschalteten Mittel relativ zueinander unbeweglich sind.

28. Einrichtung nach Anspruch 28, dadurch gekennzeichnet,dass die Aufteilungs- und Widervereinigungsmittel sowie die in die Lichtwege eingeschalteten Mittel und die Lichtleiter zwischen diesen Mitteln mit einer die Zwischenräume zwischen diesen Mitteln und zwischen den Lichtleitern sowie zwischen den Lichtleitern und diesen Mitteln ausfüllenden, vorzugsweise kalthärtenden Vergussmasse zu einem Block vergossen sind.

Fig.1

Fig.8

TRANSDUC.

(CORRECT.)

Fig.2

ELECTR.

Fig.3

ELECTR.

Fig. 4

OPT. _1_

Fig. 5

OPT. _1_

Fig. 6

OPT. _1_

Fig. 7

OPT. _1_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | OPTICS LETTERS, Band 13, Nr. 5, Mai 1988, Seiten 410-412, Optical Society of America, New York, US; M. OH et al.: "Effects of the second harmonic and the duty cycle on the scale factor of a fiber-optic gyroscope with gated two-harmonic phase modulation" * Seiten 410-412 * | 1-4,12 | G 01 C 19/72 |
| X | FR-A-2 555 739 (THOMSON-CSF) * Seite 7, Zeile 6 - Seite 14, Zeile 25; Figuren 8-14 * | 1-4,12, 13 | |
| X | EP-A-0 113 890 (I.S.E.C.) * Zusammenfassung; Ansprüche; Figuren * | 1,2,5, 12 | |
| X | US-A-4 872 754 (D.L. ENSLEY) * Zusammenfassung; Figuren * | 1,2,12 | |
| X | DE-A-3 533 695 (TELDIX) * Insgesamt * | 1-4,12 | |
| X | US-A-4 776 700 (N.J. FRIGO) * Spalte 5, Zeile 12 - Spalte 10, Zeile 65; Figuren * | 1,2,5 | RECHERCHIERTE SACHGEBIETE (Int. Cl.5) G 01 C 19 G 01 D 5 |
| X | WO-A-8 901 606 (TELDIX) * Insgesamt * | 1-8,11, 12 | |
| X | DE-A-3 429 802 (THE SINGER CO.) * Insgesamt * | 1-8,11, 12 | |
| X | PATENT ABSTRACTS OF JAPAN, Band 9, Nr. 334 (P-417)[2057], 27. Dezember 1985; & JP-A-60 157 012 (FUJITSU K.K.) 17-08-1985 * Zusammenfassung * | 1,2 | |

-/-

~~Der vorliegende Recherchenbericht wurde für alle Patentansprüche erstellt~~

| Recherchenort | Abschlußdatum der Recherche | Prüfer |
|---|---|---|
| DEN HAAG | 19-04-1991 | RAMBOER P. |

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden.

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## ☒ MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

Siehe Blatt -B-

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind.

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen.

1-8,11-21

nämlich Patentansprüche:

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 618 545 (JAPAN AVIATION)<br>* Zusammenfassung *<br>----- | 1-8,11, 12 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 19-04-1991 | RAMBOER P. |

EPO FORM 1503 03.82 (P0403)

## MANGELNDE EINHEITLICHKEIT DER ERFINDUNG

Nach Auffassung der Recherchenabteilung entspricht die vorliegende europäische Patentanmeldung nicht den Anforderungen an die Eintheitlichtkeit der Erfindung; sie enthält mehrere Erfindungen oder Gruppen von Erfindungen,
nämlich:

1. Patentansprüche 1-8,11-21: Messeinrichtung mit Mitteln  zur
   Bildung mindestens zwerer Regelgrössen.

2. Patentansprüche 9,10: Messeinrichtung mit Speichermittelen (55)
   zum Speicherung eines Ausgangssignals.

3. Patentansprüche 22-26: Messeinrichtung mit elastisch gedehnten
   Lichtleitern(fig. 8).

4. Patentansprüche 27,28: Messeinrichtung mit relativ zu einander
   umbeweglichen  Mitteln  in den Lichtwegen.